(19) Europäisches Patentamt
European Patent Office
Office européen des brevets

(11) EP 3 735 650 B1

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **18814881.1**

(22) Anmeldetag: **05.12.2018**

(51) Internationale Patentklassifikation (IPC):
***G06F 21/64*** $^{(2013.01)}$ ***H04L 9/32*** $^{(2006.01)}$

(52) Gemeinsame Patentklassifikation (CPC):
**G06F 21/64; H04L 9/3239; H04L 9/3247;**
H04L 2209/38

(86) Internationale Anmeldenummer:
**PCT/EP2018/083573**

(87) Internationale Veröffentlichungsnummer:
**WO 2019/134780 (11.07.2019 Gazette 2019/28)**

(54) **PERSÖNLICHE DOKUMENTENBLOCKCHAIN-STRUKTUR**

PERSONAL DOCUMENT BLOCK CHAIN STRUCTURE

STRUCTURE PERSONNELLE DE CHAÎNE DE BLOCS DE DOCUMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2018 DE 102018200100**

(43) Veröffentlichungstag der Anmeldung:
**11.11.2020 Patentblatt 2020/46**

(73) Patentinhaber: **Bundesdruckerei GmbH**
**10969 Berlin (DE)**

(72) Erfinder:
- **WILKE, Andreas**
  **13509 Berlin (DE)**
- **KOMAROV, Illya**
  **13507 Berlin (DE)**
- **PAESCHKE, Manfred**
  **16348 Wandlitz (DE)**

(74) Vertreter: **Richardt Patentanwälte PartG mbB**
**Wilhelmstraße 7**
**65185 Wiesbaden (DE)**

(56) Entgegenhaltungen:
**WO-A1-2017/149537**
**CN-A- 107 231 351**
**DE-A1-102008 040 416**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 735 650 B1

## Beschreibung

Die Erfindung betrifft ein kryptographisches Verfahren, ein elektronisches Datenspeichersystem, ein elektronisches Berechtigungsmanagementsystem sowie ein elektronisches Datenverarbeitungssystem zum Durchführen eines kryptographischen Verfahrens zur selektiven Zugriffsteuerung auf Attribute einer Mehrzahl von Dokumenten eines Nutzers, wobei die Attribute in ein oder mehreren Speichern manipulationssicher gespeichert sind.

Im Zuge der fortschreitenden Digitalisierung der Alltagswelt werden Dokumente, welche früher in Papierform verwendet wurden, wie etwa Tickets, zunehmend in digital codierter Form ausgestellt. Die Digitalisierung erstreckt sich dabei auch auf Ausweise-, Wert-, und Sicherheitsdokumente.

Beispielsweise werden digital codierte Dokumente, wie etwa Tickets, auf einem mobilen, tragbaren Telekommunikationssystem eines Nutzers gespeichert, etwa einem Smartphone, sodass der Nutzer diese bei Bedarf auf einem Display seines Telekommunikationssystems anzeigen und so vorzeigen kann.

Dieses lokale technische Speicherkonzept macht es jedoch notwendig, dass der Nutzer seine entsprechenden Dokumente stets mit sich führt bzw. zum Vorzeigen und Nutzen derselben persönlich mit seinem Telekommunikationssystem anwesend sein muss. Ferner besteht die Gefahr, dass bei einem Verlust des entsprechenden Telekommunikationssystems die darauf gespeicherten Daten in die Hände unberechtigter Dritter fallen können.

Es fehlt an einem digitalen Werkzeug, mit welchem ein Nutzer digital codierte Dokumente in manipulationssicher Weise bereitstellen und Zugriffe auf diese managen kann. Dies gilt sowohl für hoheitliche Dokumente beispielsweise gegenüber Behörden und Ämter, als auch für private Dokumente beispielsweise gegenüber Behörden, Ämtern, Ärzten, Versicherungen, etc.

Ein manipulationssicheres Speichern und Bereitstellen digital codierter Dokument, wobei die entsprechenden Dokumente effektiv gegen mögliche Veränderungen oder gar gezielten Manipulationen geschützt werden und beschränkte Zugriffrechte auf diese effektiv gemanagt werden können, stellen technische Herausforderungen dar.

WO 2017/149537 A1 beschreibt ein System und ein Verfahren zum Validieren einer Entität. Das Verfahren umfasst ein Erhalten eines Satzes von Entitätsdetails, die sich auf die Entität beziehen, durch mindestens ein erstes System, ein Zuordnen eines ersten Vertrauensniveaus zu der Entität durch das erste System basierend auf mindestens einigen der Entitätsdetails, und ein Validieren der Entität basierend auf dem ersten Vertrauensniveau. Ferner wird ein System und ein Verfahren zum

Validieren einer Entität beschrieben, bei welchen das Verfahren ein Bereitstellen zumindest eines ersten oder zweiten Wertes für jeweils zumindest ein erstes oder zweites Gerät umfasst, ein Bereitstellen zumindest des ersten oder zweiten Wertes durch zumindest das erste oder zweite Gerät für die Entität, und ein Verwenden zumindest des ersten oder zweiten Wertes durch die Entität, um die Entität gegenüber einer identifizierenden Entität zu identifizieren.

DE 10 2008 040416 A1 beschreibt ein Verfahren zum Lesen zumindest eines in einem ID-Token gespeicherten Attributs, umfassend: eine Nutzerauthentifizierung des Nutzers gegenüber dem ID-Token, eine Authentifizierung eines ersten Computersystems gegenüber dem ID-Token, nach erfolgreicher Authentifizierung des Nutzers und des ersten Computersystems gegenüber dem ID-Token, einen Lesezugriff des ersten Computersystems auf das zumindest eine in dem ID-Token gespeicherte Attribut zur Übertragung des zumindest einen Attributs nach dessen Signierung an ein zweites Computersystem, wobei die Authentifizierung des ersten Computersystems gegenüber dem ID-Token aufgrund einer Attributspezifizierung erfolgt, die das erste Computersystem von einem dritten Computersystem empfängt.

CN 107 231 351 A beschreibt ein elektronisches Zertifikatverwaltungsverfahren und zugehörige Ausrüstung. Das Verfahren umfasst die folgenden Schritte: Das elektronische Gerät verarbeitet ein elektronisches Zertifikat als Antwort auf einen empfangenen Verarbeitungsbefehl. Ein verschlüsselter Verarbeitungsdatensatz wird an ein Blockchain-Netzwerk gesendet, wodurch ein Knoten des Blockchain-Netzwerks den verschlüsselten Verarbeitungsdatensatz in einer Blockchain des Blockchain-Netzwerks speichert.

Der Erfindung liegt die Aufgabe zugrunde, ein zum manipulationssicheren Bereitstellen zumindest eines Attributs eines Dokuments einer Mehrzahl von Dokumenten eines Nutzers zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein kryptographisches Verfahren zur Durchführung einer selektiven Zugriffsteuerung auf Attribute einer Mehrzahl von Dokumenten, welche einem ersten Nutzer zugeordnet sind, und wobei die Attribute in ein oder mehreren Speichern manipulationssicher gespeicherte sind.

Das kryptographische Verfahren umfasst:

Bereitstellen einer nichtlinearen persönlichen Dokumentenblockchain-Struktur, welche dem ersten Nutzer zugeordnet ist und eine Mehrzahl von linearen Blockchain-Unterstrukturen umfasst, wobei jede der linearen Blockchain-Unterstrukturen jeweils eine Mehrzahl von bidirektional miteinander verknüpften Blöcken umfasst,
wobei eine erste lineare Blockchain-Unterstruktur der Dokumentenblockchain-Struktur eine Hauptstruktur der Dokumentenblockchain-Struktur bildet,

wobei Blöcke der Hauptstruktur jeweils einem individuellen Dokument der Mehrzahl von Dokumenten zugeordnet sind, einen Anfangsblock einer von einer dokumentenindividuellen Nebenstruktur der Dokumentenblockchain-Struktur umfassten zweiten linearen Blockchain-Unterstruktur bilden, welche dem entsprechenden Dokument zugeordnet ist, und einen Identifikator des entsprechenden Dokuments umfassen,

wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind.

Ferner umfasst das Verfahren:

Bereitstellen einer Berechtigungsblockchain-Struktur zur Kontrolle der Zugriffsrechte auf die Blöcke der Dokumentenblockchain-Struktur, wobei die Berechtigungsblockchain-Struktur einen Anfangsblock sowie ein oder mehrere weitere Blöcken umfasst, wobei die weiteren Blöcke jeweils einem weiteren Nutzer ein Zugriffsrecht auf einen der Blöcke der Dokumentenblockchain-Struktur gewähren,

auf eine Zugriffsberechtigungsanfrage nach einem Zugriffsrecht eines zweiten Nutzer auf einen der Blöcke der persönlichen Dokumentenblockchain-Struktur des ersten Nutzers mit ein oder mehreren Attributen eines der Dokumente hin, Prüfen von Zugriffsrechten des zweiten Nutzers für einen Zugriff auf den entsprechenden Block, wobei ein Zugriff auf den entsprechenden Block nur dann gewährt wird, wenn der zweite Nutzer als ein zugriffsberechtigter Nutzer von der Berechtigungsblockchain-Struktur umfasst ist,

auf eine erfolgreiche Prüfung hin, Bestätigen der erfolgreichen Prüfung für den zweiten Nutzer,

auf eine Zugriffsanfrage des zweiten Nutzers unter Bereitstellen der Bestätigung der erfolgreichen Prüfung hin, Gewähren des Zugriffs auf den entsprechenden Block für den zweiten Nutzer.

Ausführungsformen können den Vorteil haben, dass eine Mehrzahl von persönlichen Dokumente eines Nutzers in einer nichtlinearen Dokumentenblockchain-Struktur gespeichert werden können. Die Nichtlinearität erlaubt es individuelle Dokumenten jeweils eine dokumentenindividuellen Nebenstruktur zuzuordnen, welche eine linearen Blockchain-Unterstrukturen mit einer Mehrzahl von bidirektional miteinander verknüpften Blöcken umfasst. Über die Blöcke der Nebenstruktur verteilt sind Attribute des jeweiligen Dokuments gespeichert. Durch die bidirektionale Verknüpfung kann ein effektiver der gespeicherten Attribute gegen Manipulationen ermöglicht werden.

Diese Nebenstrukturen werden über eine Hauptstruktur miteinander verknüpft, beispielsweise einer linearen Blockchain-Unterstrukturen mit einer Mehrzahl von bidirektional miteinander verknüpften Blöcken, wobei jeder der Blöcke einem der Dokument zugeordnet ist. Durch die Hauptstruktur werden die individuellen Dokumente, deren Attribute manipulationssicher in den entsprechenden dokumentenindividuellen Nebenstruktur gespeichert sind, ebenfalls in manipulationssicherer Weise miteinander verknüpft.

Beispielsweise umfasst die Hauptstruktur in chronologischer Reihenfolge der Ausstellung eine Mehrzahl von persönlichen Dokumente eines Nutzers. Nach Ausführungsformen werden alle Dokumente eines Nutzers, welche im Laufe seines Lebens erstellt werden, der persönlichen Dokumentenblockchain-Struktur hinzugefügt. Nach Ausführungsformen werden alle Dokumente eines Nutzers, welche im Laufe seines Lebens erstellt werden und ein oder mehrere vordefinierte Kriterien erfüllen, der persönlichen Dokumentenblockchain-Struktur hinzugefügt. Beispielsweise werden alle Dokumente, welche von einer Instanz einer vordefinierten Gruppe von Instanzen erzeugt werden, der persönlichen Dokumentenblockchain-Struktur hinzugefügt. Beispielsweise werden alle offiziellen bzw. hoheitlichen Dokumente, welche von einer Behörde oder einem Amt ausgestellt werden, der persönlichen Dokumentenblockchain-Struktur hinzugefügt.

Dabei kann die Nichtlinearität, d.h. die Verwendung von Nebenstrukturen, den Vorteil haben, dass den einzelnen Dokumenten nicht nur ein einziger Block, sondern vielmehr jeweils eine Mehrzahl von Blöcken zugeordnet sein kann. Diese Blöcke können jeweils ein oder mehrere Attribute des entsprechenden Dokuments umfassen. Durch die blockweise Speicherung wird ein selektives Bereitstellen ein oder mehrere Attribute auf Basis einer Auswahl von ein oder mehreren der Blöcke ermöglicht. Die Bereitstellung der Attribute kann somit feingranularer erfolgen. Insbesondere können Attribute von unterschiedlichen Dokumente bereitgestellt werden, ohne dass dies zugleich einen Zugriff auf alle Attribute der jeweiligen Dokumente erfordert.

Ausführungsformen können ferner den Vorteil haben, dass über die Berechtigungsblockchain-Struktur die Zugriffsrechte zum Zugriff auf die einzelnen Blöcke der Dokumentenblockchain-Struktur verwaltet werden können. Weitere Nutzer können Blöcke der Dokumentenblockchain-Struktur nur unter der Voraussetzung einsehen, dass sie als zugriffsberechtigte Nutzer von der Berechtigungsblockchain-Struktur umfasst sind. Nach Ausführungsformen kontrolliert der Nutzer, welchem die Dokumentenblockchain-Struktur zugeordnet ist, welche Nutzer in die Berechtigungsblockchain-Struktur aufgenommen werden. Beispielsweise hat der der Nutzer, welchem die Dokumentenblockchain-Struktur zugeordnet ist, das ausschließliche Recht zum Hinzufügen zusätzlicher Nutzer zu der Berechtigungsblockchain-Struktur.

Möchte ein weiterer Nutzer, wie beispielsweise ein Dienstanbieter, Zugriff auf ein oder mehrere Attribute des Nutzers der persönlichen Dokumentenblockchain-Struktur erlangen, so wird zunächst geprüft, ob der Nutzers der persönlichen Dokumentenblockchain-Struktur für den entsprechenden weiteren Nutzer Zugriffsrechte über die Berechtigungsblockchain-Struktur freigegeben hat. Nur wenn dies der Fall ist, wird dem entsprechenden weiteren Nutzer selektiv Zugriff auf einzelne Blöcke der Dokumentenblockchain-Struktur gewährt.

Ausführungsformen können somit den Vorteil haben, dass der Nutzer volle Kontrolle über seine Dokumente, deren Daten bzw. deren Attribute und ihre Verwendung erhält. Beispielsweise kann dem Nutzer somit ermöglicht werden, sämtliche Interaktionen mit Behörden oder Ämter, für welche die Vorlage eines Dokuments notwendig ist auf digitalem Wege auszuführen, d.h. online über ein Netzwerk, wie etwa das Internet. Dadurch können Behördengänge prinzipiell überflüssig werden. Des Weiteren kann die staatliche Verwaltung, welche Dokumente des Nutzers zum Gegenstand hat bzw. diese verwendet wesentlich effizienter gestaltetet werden.

Aus dem Stand der Technik sind lineare Blockchain-Strukturen, d.h. Blockketten-Strukturen, zur Sicherung von Daten bekannt. Bei diesen Blockchain-Strukturen handelt es sich um unidirektional verketteten Blockchain-Strukturen. Beispielsweise werden entsprechende Blockchain-Strukturen verwendet, um Transaktionen von Kryptowährungen, wie etwa dem Bitcoin-Zahlungssystem, zu protokollieren.

Eine Blockchain-Struktur stellt dabei eine erweiterbare Liste von Datensätzen bereit, welche in Blöcken angeordnet sind. Die Integrität der einzelnen Blöcke wird im Stand der Technik durch eine unidirektionale Verkettung unter Verwendung kryptografischer Prüfwerte der einzelnen Blöcke in Form von Hashwerten gesichert. Dadurch, dass jeder Block eine kryptografische Prüfwert des vorangehenden Blocks inklusive des in dem vorangehenden Block gespeicherten kryptografischen Prüfwerts umfasst, ergibt sich eine Verkettung der Blöcke. Dabei umfasst jeder Block einen Prüfwert, welcher auf den Inhalten aller vorangehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, da der Prüfwert jedes nachfolgenden Blocks unter anderem auf dem zu manipulierenden Block beruht. Wird der zu manipulierende Block tatsächlich manipuliert, so ändert sich sein Prüfwert. Dieser geänderte Prüfwert passt nicht mehr zu den Prüfwerten der nachfolgenden Blöcke, wodurch die Manipulation erkennbar wird und bei einer Prüfung mittels der Prüfwerte auffällt.

Bekannte Blockchain-Strukturen implementieren allerdings lediglich eine unidirektionale Verkettung und damit Absicherung der Daten, da bei der Verkettung jeweils nur Dateninhalte vorangehender Blöcke berücksichtigt werden. So lässt sich anhand der Verkettung prüfen, ob ein vorangehender Block einer vorgelegten Blockchain-Struktur manipuliert wurde. Es lässt sich jedoch nicht prüfen, ob die vorgelegten Blockchain-Struktur vollständig ist. Insbesondere lässt sich nicht prüfen, ob möglicherweise ein Teil der Blockchain-Struktur abgeschnitten wurde. Ferner lässt sich nicht prüfen, ob der letzte Block manipuliert wurde.

Gemäß bekannten Blockchains haben einzelne Datenblöcke der Blockchain aufgrund der eindimensionalen, linearen Kettenstruktur entweder keinen (letzter Datenblock der Blockchain), einen (erster Datenblock der Blockchain) oder zwei benachbarte Datenblöcke (mittlerer Datenblock der Blockchain). Es ist strukturell aber ausgeschlossen, dass einer der Datenblöcke mehr als zwei benachbarte Datenblöcke haben kann.

Unter einer Dokumentenblockchain-Struktur hierbei eine erweiterbare Liste von Datensätzen verstanden, welche in Blöcken angeordnet sind und Daten aus Dokumenten umfassen. Eine lineare Blockchain-Struktur ist eine lineare logische Anordnung entsprechender Blöcke, wobei nur benachbarte Blöcke miteinander verknüpft sind. Somit weist ein Block einer lineare Blockchain-Struktur maximal zwei Verknüpfungen mit zwei benachbarten Blöcken auf. Eine nichtlineare Blockchain-Struktur ist nichtlineare logische Anordnung entsprechender Blöcke, wobei nur benachbarte Blöcke miteinander verknüpft sind. Für einen Block einer nichtlineare Blockchain-Struktur besteht keine allgemeine Höchstgrenze für die mögliche Anzahl an Verknüpfungen. Insbesondere kann ein Block einer nichtlineare Blockchain-Struktur beispielsweise drei Verknüpfungen mit drei benachbarten Blöcken aufweisen. Eine Blockchain-Unterstruktur ist ein Teilabschnitt einer Blockchain-Struktur. Eine Hauptstruktur ist eine lineare Blockchain-Unterstruktur, welche sich von einem Anfangsblock, d.h. ersten Block, aus erstreckt und von welcher Nebenstrukturen, z.B. Ergänzungs- oder Änderungsstrukturen mit Daten von Ergänzungs- oder Änderungsdokumenten, abzweigen. Unter einer Dokumentenblockchain-Struktur hierbei eine erweiterbare Liste von Datensätzen verstanden, welche in Blöcken angeordnet sind und Daten zu Zugriffsrechten umfassen.

Die Dokumente, welche in der Dokumentenblockchain-Struktur gespeichert werden, sind dem ersten Nutzer zugeordnet und stellen mithin Daten bereit, welche dem ersten Nutzer zugeordnet sind und/oder sich auf diesen beziehen. Diese Daten werden hier auch als Attribute, d.h. einem Nutzer zugeordnete Daten, bezeichnet. Attribute können beispielsweise Daten eines Ausweis-, Wert- oder Sicherheitsdokuments umfassen, wie etwa eines Personalausweises, eines Reisepasses, einer Krankenversicherungskarte, einer Kreditkarte etc.

Ausführungsformen können den Vorteil haben, dass sie es ermöglichen, eine bidirektional verkettete Blockchain-Struktur bereitzustellen, deren Blöcke mittels blockabhängiger bidirektionaler Verkettungsfunktionen miteinander verkettet sind. Die Verkettung ermöglicht dabei eine bidirektionale Prüfung der Blockchain-Struktur auf Echtheit bzw. Manipulation. Dabei kann die Blockchain-Struktur nicht nur in einer Richtung, sondern in zwei Richtung geprüft werden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfwerts, wie etwa eines Hashwertes, des vorangehenden Datensatzes in dem jeweils nachfolgenden Datensatz gesichert ist. Der Prüfwert ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Ein Prüfwert für Daten ist ein den entsprechenden Daten zugeordneter Wert, welcher die Daten derart eindeutig charakterisiert, dass die Integrität der Daten anhand des Prüfmerkwerts überprüft werden kann. Ein Prüfwert in Form einer Prüfsumme stellt beispielsweise einen Wert bereit, welcher aus den Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion.

Ein Prüfwert kann für einen oder mehrere Blöcke einer Blockchain-Struktur berechnet werden. Ein solcher Prüfwert wird im Folgenden auch als blockabhängiger Prüfwert bezeichnet. Beispielsweise wird der Prüfwert aus den in einem Block gespeicherten bzw. zu speichernden Daten berechnet. Beispielsweise wird jeweils ein Prüfwert für zwei aufeinanderfolgende Blöcke der Blockchain-Struktur berechnet und aus den beiden resultierenden Prüfwerten ein gemeinsamer kombinierter Prüfwert. Beispielsweise werden die in den beiden aufeinanderfolgenden Blöcken gespeicherten bzw. zu speichernden Daten miteinander kombiniert und aus den kombinierten Daten ein gemeinsamer Prüfwert berechnet. Beispielsweise werden die Daten oder Prüfwerte unter Verwendung einer arithmetischen Verknüpfung miteinander kombiniert, wie Addition, Subtraktion, Multiplikation und/oder Division handeln.

Nach Ausführungsformen umfasst die Bestätigung der erfolgreichen Prüfung für den zweiten Nutzer einen ersten Berechtigungstoken, welches an den zweiten Nutzer gesendet wird und dem zweiten Nutzer den Zugriff auf den Block der persönlichen Dokumentenblockchain-Struktur des ersten Nutzers gewährt.

Ausführungsformen können den Vorteil haben, dass der zweite Nutzer mit dem Berechtigungstoken seine Zugriffsberechtigung zu einem Zugriff auf den Block der persönlichen Dokumentenblockchain-Struktur des ersten Nutzers nachweisen kann.

Nach Ausführungsformen ist für jeden Block der persönlichen Dokumentenblockchain-Struktur des ersten Nutzers jeweils eine individuelle Berechtigungsblockchain-Struktur bereitgestellt. Nach Ausführungsformen ist für jeden Block der persönlichen Dokumentenblockchain-Struktur des ersten Nutzers jeweils eine individuelle Berechtigungsprüfung für einen Zugriff auf den entsprechenden Block notwendig. Nach Ausführungsformen ist für jeden Block der persönlichen Dokumentenblockchain-Struktur des ersten Nutzers jeweils eine individuelle Bestätigung einer erfolgreichen Berechtigungsprüfung notwendig. Ausführungsformen können den Vorteil haben, dass sie eine feingranulare selektive Zugriffsteuerung auf individuelle Attribute einer Mehrzahl von Dokumenten eines Nutzers ermöglichen.

Nach Ausführungsformen wird an den zweiten Nutzer eine Mehrzahl von Berechtigungstoken gesendet, welche das erste Berechtigungstoken umfassen und dem zweiten Nutzer Zugriff auf eine Mehrzahl von Blöcken der persönlichen Dokumentenblockchain-Struktur des ersten Nutzers erlauben, wobei die Mehrzahl von Blöcken mehrere Attribute von mehreren Dokumenten des ersten Nutzers umfassen.

Ausführungsformen können den Vorteil haben, dass ein Zugriff auf eine Mehrzahl von Attributen desselben oder verschiedener Dokumente gewährt werden kann. Diese Attribute werden von einer Mehrzahl von Blöcken der persönlichen Dokumentenblockchain-Struktur des ersten Nutzers manipulationssicher gespeichert. Für jeden der Blöcke ist jeweils eine individuelle Berechtigungsprüfung sowie ein individuelles Berechtigungstoken zur Bestätigung einer erfolgreichen Prüfung des Zugriffsrechts für den entsprechenden Block notwendig. Somit kann sichergestellt werden, dass ein zweiter Nutzer nur auf diejenigen Attribute Zugriff erhält, für die er eine explizite Berechtigung durch den ersten Nutzer erhalten hat. Auf die weiteren Attribute, für welche er nicht explizit berechtigt wurde, erhält der zweite Nutzer keinen Zugriff.

Nach Ausführungsformen ist in den Blöcken der zweiten linearen Blockchain-Unterstruktur der dokumentenindividuellen Nebenstruktur des entsprechenden Dokuments jeweils genau ein Attribut gespeichert. Ausführungsformen können den Vorteil haben, dass sie eine feingranulare selektive Zugriffsteuerung auf individuelle Attribute ermöglichen, unter Verwendung individuellen manipulationssicheren Speicherung.

Nach Ausführungsformen umfasst zumindest eines der Dokumente eine Mehrzahl von Attributgruppen,

wobei Blöcke der zweiten linearen Blockchain-Unterstruktur der dokumentenindividuellen Nebenstruktur des entsprechenden Dokuments jeweils einer der Attributgruppen zugeordnet sind, einen Anfangsblock einer dritten linearen Blockchain-Unterstruktur der entsprechenden dokumentenindividuellen Nebenstruktur bilden, und einen Identifikator der entsprechenden Attributgruppe umfassen,

wobei den Attributgruppen des Dokuments jeweils ein oder mehrere der Attribute des entsprechenden Dokuments zugeordnet sind, welche über ein oder mehrere Blöcke der dritten linearen Blockchain-Unterstruktur verteilt gespeichert sind.

Ausführungsformen können den Vorteil haben, dass für Attributgruppen jeweils individuelle lineare Blockchain-Unterstrukturen verwendet werden. Für eine vollständige Prüfung der Integrität eines Attributs einer solchen Attributgruppe ist es mithin ausreichend, die Integrität der ersten linearen Blockchain-Unterstruktur, d.h. der Hauptstruktur der Dokumentenblockchain-Struktur, der zweiten linearen Blockchain-Unterstruktur der entsprechenden dokumentenindividuellen Nebenstruktur und der entsprechenden attributsgruppenindividuellen dritten linearen Blockchain-Unterstruktur der entsprechenden dokumentenindividuellen Nebenstruktur zu prüfen. Die Hauptstruktur umfasst Anfangsblöcke für jedes Dokument des ersten Nutzers. Ergibt sich aus einer Prüfung der bidirektionalen Verknüpfungen der Blöcke der Hauptstruktur, dass diese valide ist, so folgt daraus, dass es sich bei dem Dokument, dessen Attribut geprüft werden soll, um ein tatsächlich ausgestelltes Dokument handelt. Weiter umfasst die zweite linearen Blockchain-Unterstruktur Anfangsblöcke für jede Attributgruppe des entsprechenden Dokuments. Ergibt sich aus einer Prüfung der bidirektionalen Verknüpfungen der Blöcke der zweiten linearen Blockchain-Unterstruktur, dass diese valide ist, so folgt daraus, dass die Attributgruppe, deren Attribut geprüft werden soll, im Falle des entsprechenden Dokuments tatsächlich existiert, bzw. von diesem tatsächlich umfasst ist. Schließlich umfasst die dritte lineare Blockchain-Unterstruktur Blöcke für alle Attribute der entsprechenden Attributgruppe, von der ein Attribut geprüft werden soll. Einer dieser Blöcke umfasst dabei das zu prüfende Attribut. Ergibt sich aus einer Prüfung der bidirektionalen Verknüpfungen der Blöcke der dritten linearen Blockchain-Unterstruktur, dass diese valide ist, so folgt daraus, dass alle Attribute und damit auch das zu prüfende Attribut, auf welches der zweite Nutzer ein Zugriffrecht besitzt korrekt ist.

Wie man an der zuvor beschrieben Prüfung sehen kann, müssen für eine vollständige Validitäts- bzw. Integritätsprüfung eines Attributs nicht alle Blöcke bzw. Blockchain-Unterstruktur der persönlichen Dokumentenblockchain-Struktur des ersten Nutzers geprüft werden. Vielmehr reicht es, wenn eine begrenzte Anzahl an Blöcken einer begrenzten Anzahl an linearen Blockchain-Unterstrukturen geprüft werden. Beispielsweise ist es ausreichend, wenn lediglich drei lineare Blockchain-Unterstrukturen geprüft werden. Sind die Attribute nicht in Attributgruppen mit individuellen Blockchain-Unterstrukturen unterteilt, sondern direkt in den Blöcken der zweiten Blockchain-Unterstruktur gespeichert, so reicht sogar die Prüfung zweier drei lineare Blockchain-Unterstrukturen, nämlich der Hauptstruktur und der zweiten linearen Blockchain-Unterstrukturen.

Die zuvor beschriebene Verwendung einer nichtlinearen persönlichen Dokumentenblockchain-Struktur mit einer Mehrzahl von linearen Blockchain-Unterstrukturen kann somit eine Verringerung des für eine vollständige Validitäts- bzw. Integritätsprüfung eines Attributs notwendigen Rechen- und damit Zeitaufwand ermöglichen. Im Falle einer Verwendung einer einzigen linearen Blockchain-Struktur, welche denselben Grad an Feingranularität erreichen soll, d.h. in welcher beispielsweise jedes Attribut jeweils in einem individuellen Block gespeichert ist, müssten für eine vollständige Validitäts- bzw. Integritätsprüfung eines Attributs alle Blöcke der entsprechenden Dokumentenblockchain-Struktur einbezogen werden. Gegenüber einer solchen feingranularen linearer Blockchain-Struktur ermöglicht eine nichtlineare Blockchain-Struktur eine deutliche Verkürzung der Prüfungszeit sowie des damit verbundenen Aufwands.

Nach Ausführungsformen werden einem zweiten Nutzer mit Zugriffsrecht auf eines der Attribute die Prüfwerte aller Blöcke bereitgestellt, welche für eine Validitäts- bzw. Integritätsprüfung des entsprechenden Attributs notwendig sind. Nach Ausführungsformen ist es beispielsweise ausreichend Prüfung der individuellen linearen Blockchain-Unterstrukturen jeweils eine Prüfung bis zu einem bestimmten Block der entsprechenden Blockchain-Unterstruktur notwendig, z.B. bis zu einem dem Dokument zugeordneten Block der Hauptstruktur, bis zu einem der Attributsgruppe zugeordneten Block der zweiten Blockchain-Unterstruktur und/oder bis zu einem das zu prüfende Attribut umfassenden Block der dritten Blockchain-Unterstruktur. Nach Ausführungsformen ist es beispielsweise ausreichend Prüfung der individuellen linearen Blockchain-Unterstrukturen jeweils eine Prüfung aller Blöcke der entsprechenden individuellen linearen Blockchain-Unterstrukturen notwendig, z.B. erste und zweite oder erste, zweite und dritte individuelle lineare Blockchain-Unterstruktur.

Nach Ausführungsformen sind die individuellen Attributgruppen eines Dokuments beispielweise jeweils einer individuellen Seite des entsprechenden Dokuments bzw. des papierbasierten Äquivalents des entsprechenden digital codierten Dokuments zugeordnet. Nach Ausführungsformen sind die

Nach Ausführungsformen ist in den Blöcken der dritten linearen Blockchain-Unterstrukturen der dokumentenindividuellen Nebenstruktur des entsprechenden Dokuments jeweils genau ein Attribut gespeichert. Ausführungsformen können den Vorteil haben, dass sie eine feingranulare, attributindividuelle Zugriffsteuerung sowie manipulationssichere Speicherung ermöglichen.

Nach Ausführungsformen sind zumindest einem der Dokumente ein oder mehrere Ergänzungsdokumente zugeordnet, welche das entsprechende Dokument ergänzen.

Eine vierte lineare Blockchain-Unterstruktur der persönlichen Dokumentenblockchain-Struktur des ersten Nutzers bildet eine dokumentenindividuelle Ergänzungsstruktur des entsprechenden Dokuments, wobei ein erster Block der vierten linearen Blockchain-Unterstruktur mit dem Block der Hauptstruktur, welcher dem entsprechenden Dokument zugeordnet ist, bidirektional verknüpft ist.

Ein oder mehrere der Blöcke der Ergänzungsstruktur sind jeweils einem individuellen Ergänzungsdokument der ein oder mehrere Ergänzungsdokumente zugeordnet, bilden einen Anfangsblock einer von einer ergänzungsdokumentenindividuellen Nebenstruktur umfassten fünften linearen Blockchain-Unterstruktur, welche dem entsprechenden Ergänzungsdokument zugeordnet ist, und umfassen einen Identifikator des entsprechenden Ergänzungsdokuments.

Jedes der Ergänzungsdokumente umfasst jeweils eine Mehrzahl von Attributen, welche über eine Mehrzahl von Blöcken der dem entsprechenden Ergänzungsdokument zugeordneten ergänzungsdokumentenindividuellen Nebenstruktur verteilt gespeichert sind.

Ausführungsformen können den Vorteil haben, dass sie eine Ergänzung eines bestehenden Dokuments ermöglicht. Bei einer solchen Ergänzung kann es sich beispielsweise um eine Anlage, wie etwa eine Anklage zu einem Vertrag, handeln. Ferner kann es sich bei einer solchen Anlage beispielsweise um ein Visum als Anlage zu einem Reisepass handeln. Zudem können Verlängerungen von Dokumenten beispielsweise in Form von Ergänzungsdokumenten in der persönlichen Dokumentenblockchain-Struktur des ersten Nutzers implementiert werden.

Ausführungsformen können ferner den Vorteil haben, dass bei einer Validitäts- bzw. Integritätsprüfung eines Attributs des Ergänzungsdokuments keine vollständige Prüfung aller Attribute des ergänzten Dokuments notwendig sind. Vielmehr ist im Hinblick auf das ergänzte Dokument im Allgemeinen nur eine Prüfung der Existenz des ergänzten Dokuments über die Hauptstruktur sowie eine Prüfung der Verknüpfung der dokumentenindividuellen Ergänzungsstruktur mit der Hauptstruktur notwendig. Ergänzt wird die Prüfung nach Ausführungsformen durch eine Prüfung der für die Validitäts- bzw. Integritätsprüfung des entsprechenden Attributs notwendigen Teile der dokumentenindividuellen Ergänzungsstruktur. Die Prüfung der dokumentenindividuellen Ergänzungsstruktur erfolgt beispielsweise analog zu der zuvor beschriebenen Prüfung einer dokumentenindividuelle Nebenstruktur.

Nach Ausführungsformen sind zumindest einem der Dokumente ein oder mehrere Änderungsdokumente zugeordnet, welche Änderungen des entsprechenden Dokuments umfassen.

Eine sechste lineare Blockchain-Unterstruktur der persönlichen Dokumentenblockchain-Struktur des ersten Nutzers bildet eine dokumentenindividuelle Änderungsstruktur des entsprechenden Dokuments, wobei ein erster Block der sechsten linearen Blockchain-Unterstruktur mit dem Block der Hauptstruktur, welcher dem entsprechenden Dokument zugeordnet ist, bidirektional verknüpft ist.

Ein oder mehrere der Blöcke der Änderungsstruktur sind jeweils einem individuellen Änderungsdokument der ein oder mehrere Änderungsdokumente zugeordnet, bilden einen Anfangsblock einer von einer änderungsdokumentenindividuellen Nebenstruktur umfassten siebten linearen Blockchain-Unterstruktur, welche dem entsprechenden Änderungsdokument zugeordnet ist, und umfassen einen Identifikator des entsprechenden Änderungsdokuments.

Jedes der Änderungsdokumente umfasst jeweils eine Mehrzahl von Attributen, welche über eine Mehrzahl von Blöcken der dem entsprechenden Änderungsdokument zugeordneten änderungsdokumentenindividuellen Nebenstruktur verteilt gespeichert sind.

Ausführungsformen können den Vorteil haben, dass sie eine Änderung eines bestehenden Dokuments ermöglicht, ohne dass das bestehende Dokument selbst oder Teile davon gelöscht werden. Nach Ausführungsformen wird keine Möglichkeit bereitgestellt bestehende Blöcke zu löschen. Somit stellt die persönliche Dokumentenblockchain-Struktur des ersten Nutzers nicht nur eine Historie der für diesen Nutzer ausgestellten Dokumente, sondern auch eine Historie aller Änderungen und/oder Ergänzungen der entsprechenden Dokumente bereit.

Bei einer Änderung kann es sich beispielsweise um eine Adressänderung oder eine Namenänderung eines Ausweisdokuments oder eine Revozierung bzw. eine Aberkennung oder einen Entzug eines ausgestellten Dokuments handeln. Beispielsweise kann es sich um eine Kündigung oder Vertragsauflösung oder Stornierung handeln. Im Falle eines Tickets, kann es sich beispielsweise um eine Buchungsänderung handeln.

Ausführungsformen können ferner den Vorteil haben, dass bei einer Validitäts- bzw. Integritätsprüfung eines Attributs des Änderungsdokuments keine vollständige Prüfung aller Attribute des geänderten Dokuments notwendig sind. Vielmehr ist im Hinblick auf das geänderte Dokument im Allgemeinen nur eine Prüfung der Existenz des geänderten Dokuments über die Hauptstruktur sowie eine Prüfung der Verknüpfung der dokumentenindividuellen Änderungsstruktur mit der Hauptstruktur notwendig. Ferner kann geprüft werden, dass keine weiteren Änderungen vorliegen. Ergänzt wird die Prüfung nach Ausführungsformen durch eine Prüfung der für die Validitäts- bzw. Integritätsprüfung des entsprechenden Attributs notwendigen Teile der dokumentenindividuellen Änderungsstruktur. Die Prüfung der dokumentenindividuellen Änderungsstruktur erfolgt beispielsweise analog zu der zuvor beschriebenen Prüfung einer dokumentenindividuelle Nebenstruktur.

Nach Ausführungsformen sind zumindest einem der Dokumente ein oder mehrere ergänzende Attributgruppen zugeordnet.

Ein oder mehrere Blöcke der zweiten linearen Blockchain-Unterstruktur der dokumentenindividuellen Nebenstruktur des entsprechenden Dokuments sind jeweils einer der ergänzenden Attributgruppen zugeordnet, bilden einen Anfangsblock einer achten linearen Blockchain-Unterstruktur der entsprechenden dokumentenindividuellen Nebenstruktur, und umfassen einen Identifikator der entsprechenden ergänzenden Attributgruppe.

Den ergänzenden Attributgruppen sind jeweils ein oder mehrere ergänzende Attribute für das entsprechende Dokument zugeordnet, welche über ein oder mehrere Blöcke der achten linearen Blockchain-Unterstruktur verteilt gespeichert sind.

Ausführungsformen können den Vorteil haben, dass ein bestehendes Dokument in einfacher Weise um ein oder mehrere Attributgruppen ergänzt werden kann. Solch eine Attributgruppe kann beispielsweise einem Eintrag in einem Reisepass, wie etwa Visum, entsprechen oder einer Erweiterung eines bestehenden Führerscheins auf eine zusätzliche Fahrzeugklasse.

Nach Ausführungsformen ist zumindest einem Attribut eines der Dokumente eine Änderung in Form eines geänderten Attributs zugeordnet,
wobei das geänderte Attribut in einem zusätzlichen Block der dem entsprechenden Dokument zugeordneten dokumentenindividuellen Nebenstruktur gespeichert ist.

Ausführungsformen können den Vorteil haben, dass Änderungen einzelner Attribute, wie etwa eine Adressänderung, in einfacher Form zu der persönlichen Dokumentenblockchain-Struktur des ersten Nutzers hinzugefügt werden können.

Nach Ausführungsformen ist dem ersten Nutzer ein ausschließliches Recht zum Hinzufügen von zusätzlichen Blöcken zu der persönlichen Dokumentenblockchain-Struktur des ersten Nutzers zugeordnet. Ausführungsformen können den Vorteil haben, dass jede Änderung der persönlichen Dokumentenblockchain-Struktur einer Zustimmung seitens des ersten Nutzers bedarf. Somit behält der erste Nutzer die volle Verfügungshoheit über seine persönlichen Daten.

Nach Ausführungsformen ist das ausschließliche Recht des Nutzers zum Hinzufügen von zusätzlichen Blöcken zu der persönlichen Dokumentenblockchain-Struktur in bestimmten Situationen beschränkt werden. Beispielsweise im Falle eines minderjährigen Nutzers oder eines aus anderen Gründen beschränkt geschäftsfähigen Nutzers wird das ausschließliche Recht beispielweise durch einen Vertreter ausgeübt. Nach Ausführungsformen handelt es sich bei dem entsprechenden Vertreter beispielsweise um die Eltern eines Minderjährigen, welche sich beispielsweise aus einer von der persönlichen Dokumentenblockchain-Struktur umfassten Geburtsurkunde des minderjährigen ersten Nutzers ergeben. Mit Erreichen der Volljährigkeit, welche sich beispielsweise aus dem Geburtsdatum gemäß Geburtsurkunde ergibt, geht das ausschließliche Recht an den volljährigen Nutzer über. Im Falle einer beschränkten Geschäftsfähigkeit aus anderen Gründen, umfasst die persönliche Dokumentenblockchain-Struktur beispielsweise ein Dokument, welches eine Berufung eines entsprechenden Vertreters bzw. Vormundes anzeigt.

Nach Ausführungsformen ist von dem ausschließliches Recht des ersten Nutzers zum Hinzufügen von zusätzlichen Blöcken zu der persönlichen Dokumentenblockchain-Struktur ein Enddokument, welches die persönliche Dokumentenblockchain-Struktur beendet, ausgeschlossen. Bei einem solchen Enddokument kann es sich beispielsweise um eine Sterbeurkunde des ersten Nutzers handeln.

Nach Ausführungsformen umfasst das Verfahren ein Hinzufügen eines zusätzlichen Dokuments zu der persönlichen Dokumentenblockchain-Struktur des ersten Nutzers.

Das Hinzufügen des zusätzlichen Dokuments umfasst:

Ausstellen des zusätzlichen Dokuments durch eine berechtigte Ausstellungsinstanz, wobei die Attribute des zusätzlichen Dokuments durch die Ausstellungsinstanz mit einem der Ausstellungsinstanz zugeordneten privaten kryptographischen Schlüssel signiert werden,
Zustimmen des ersten Nutzers zu dem Hinzufügen des zusätzlichen Dokuments,
Hinzufügen des zusätzlichen Dokuments in Form eines zusätzlichen Blocks zu der Hauptstruktur, wobei der zusätzliche Block dem zusätzlichen Dokument zugeordnet ist, einen Anfangsblock einer von einer zusätzlichen dokumentenindividuellen Nebenstruktur für die Dokumentenblockchain-Struktur umfassten zusätzlichen zweiten linearen Blockchain-Unterstruktur bildet, welche dem zusätzlichen Dokument zugeordnet ist, und einen Identifikator des zusätzlichen Dokuments umfasst,
wobei die signierten Attribute des zusätzlichen Dokuments über eine Mehrzahl von Blöcken der zusätzlichen dokumentenindividuellen Nebenstruktur verteilt gespeichert werden, und
wobei das Hinzufügen zu der Hauptstruktur ein bidirektionales Verknüpfen des zusätzlichen Blocks mit einem letzten Block der Hauptstruktur umfasst.

Ausführungsformen können den Vorteil haben, dass sie ein effizientes Hinzufügen weiterer Dokumente und somit eine sukzessive, beispielsweise, chronologische Erweiterung der persönlichen Dokumentenblockchain-Struktur des ersten Nutzers durch zusätzliche Dokumente ermöglichen.

Nach Ausführungsformen umfasst das Verfahren ein Ändern eines Dokuments der persönlichen Dokumentenblockchain-Struktur des ersten Nutzers durch Hinzufügen eines Änderungsdokuments.

Das Hinzufügen des Änderungsdokuments umfasst:

Ausstellen des Änderungsdokuments durch eine berechtigte Ausstellungsinstanz, wobei die Attribute des Änderungsdokuments durch die Ausstellungsinstanz mit einem der Ausstellungsinstanz zugeordneten privaten kryptographischen Schlüssel signiert werden,
Zustimmen des ersten Nutzers zu dem Hinzufügen des Änderungsdokuments,
Hinzufügen des Änderungsdokuments in Form eines zusätzlichen Blocks entweder zu dem Block des zu ändernden Dokuments der Hauptstruktur oder zu einer Änderungsstruktur, wobei der zusätzliche Block dem Änderungsdokument zugeordnet ist, einen Anfangsblock einer von einer änderungsdokumentenindividuellen Nebenstruktur für die Dokumentenblockchain-Struktur umfassten zusätzlichen achten linearen Blockchain-Unterstruktur bildet, welche dem Änderungsdokuments zugeordnet ist, und einen Identifikator des Änderungsdokuments umfasst,
wobei die signierten Attribute des Änderungsdokuments über eine Mehrzahl von Blöcken der änderungsdokumentenindividuellen Nebenstruktur verteilt gespeichert werden,
wobei das Hinzufügen des zusätzlichen Blocks zu der Hauptstruktur ein bidirektionales Verknüpfen des zusätzlichen Blocks mit dem Block des zu ändernden Dokuments der Hauptstruktur umfasst oder
wobei das Hinzufügen des zusätzlichen Blocks zu der Änderungsstruktur ein bidirektionales Verknüpfen des zusätzlichen Blocks mit einem letzten Block der Änderungsstruktur umfasst.

Ausführungsformen können den Vorteil haben, dass sie ein effizientes Ändern von bestehenden Dokumenten der persönlichen Dokumentenblockchain-Struktur des ersten Nutzers durch Hinzufügen von Änderungsdokumenten ermöglichen.

Nach Ausführungsformen umfasst das Verfahren ein Ergänzen eines Dokuments der persönlichen Dokumentenblockchain-Struktur des ersten Nutzers durch Hinzufügen eines Ergänzungsdokuments.

Das Hinzufügen des Ergänzungsdokuments umfasst:

Ausstellen des Ergänzungsdokuments durch eine berechtigte Ausstellungsinstanz, wobei die Attribute des Ergänzungsdokuments durch die Ausstellungsinstanz mit einem der Ausstellungsinstanz zugeordneten privaten kryptographischen Schlüssel signiert werden,
Zustimmen des ersten Nutzers zu dem Hinzufügen des Ergänzungsdokuments,
Hinzufügen des Ergänzungsdokuments in Form eines zusätzlichen Blocks entweder zu dem Block des zu ergänzenden Dokuments der Hauptstruktur oder einer Ergänzungsstruktur, wobei der zusätzliche Block dem Ergänzungsdokument zugeordnet ist, einen Anfangsblock einer von einer ergänzungsdokumentenindividuellen Nebenstruktur für die Dokumentenblockchain-Struktur umfassten zusätzlichen neunten linearen Blockchain-Unterstruktur bildet, welche dem Ergänzungsdokuments zugeordnet ist, und einen Identifikator des Ergänzungsdokuments umfasst,
wobei die signierten Attribute des Ergänzungsdokuments über eine Mehrzahl von Blöcken der Ergänzungsdokumentenindividuellen Nebenstruktur verteilt gespeichert werden, und
wobei das Hinzufügen des zusätzlichen Blocks zu der Hauptstruktur ein bidirektionales Verknüpfen des zusätzlichen Blocks mit dem Block des zu ergänzenden Dokuments der Hauptstruktur umfasst oder
wobei das Hinzufügen des zusätzlichen Blocks zu der Ergänzungsstruktur ein bidirektionales Verknüpfen des zusätzlichen Blocks mit einem letzten Block der Ergänzungsstruktur umfasst.

Ausführungsformen können den Vorteil haben, dass sie ein effizientes Ergänzen von bestehenden Dokumenten der persönlichen Dokumentenblockchain-Struktur des ersten Nutzers durch Hinzufügen von Ergänzungsdokumenten ermöglichen.

Nach Ausführungsformen umfasst das Verfahren ein Ergänzen eines der Dokumente um eine ergänzende Attributgruppen umfasst.

Das Ergänzen umfasst:

Ausstellen der ergänzenden Attributgruppe durch eine berechtigte Ausstellungsinstanz, wobei die Attribute der ergänzenden Attributgruppe durch die Ausstellungsinstanz mit einem der Ausstellungsinstanz zugeordneten privaten kryptographischen Schlüssel signiert werden,
Zustimmen des ersten Nutzers zu dem Hinzufügen der ergänzenden Attributgruppe,
Hinzufügen der ergänzenden Attributgruppe in Form eines zusätzlichen Blocks der zweiten linearen Blockchain-Unterstruktur der dokumentenindividuellen Nebenstruktur des zu ergänzenden Dokuments, wobei der zusätzliche Block der ergänzenden Attributgruppe zugeordnet ist, einen Anfangsblock einer zehnten linearen Blockchain-Unterstruktur der entsprechenden dokumentenindividuellen Nebenstruktur bildet, und einen Identifikator der entsprechenden ergänzenden Attributgruppe umfasst,
wobei die signierten Attribute über ein oder mehrere Blöcke der zehnten linearen Blockchain-Unterstruktur verteilt gespeichert sind,
wobei das Hinzufügen des zusätzlichen Blocks ein bidirektionales Verknüpfen des zusätzlichen Blocks der zweiten linearen Blockchain-Unterstruktur der dokumentenindividuellen Nebenstruktur des zu ergänzenden Dokuments mit einem letzten Block der zweiten linearen Blockchain-Unterstruktur umfasst.

Ausführungsformen können den Vorteil haben, dass sie ein effizientes Ergänzen von bestehenden Dokumenten der persönlichen Dokumentenblockchain-Struktur des ersten Nutzers durch Hinzufügen von ergänzenden Attributsgruppen ermöglichen.

Nach Ausführungsformen das Verfahren umfasst ein Ändern eines Attributs eines Dokuments der persönlichen Dokumentenblockchain-Struktur des ersten Nutzers.

Das Ändern umfasst:

Ausstellen eines geänderten Attributs durch eine berechtigte Ausstellungsinstanz, wobei das geänderte Attribut durch die Ausstellungsinstanz mit einem der Ausstellungsinstanz zugeordneten privaten kryptographischen Schlüssel signiert wird,
Zustimmen des ersten Nutzers zu dem Hinzufügen des Attributs,
Hinzufügen des Attributs in Form eines zusätzlichen Blocks der dem entsprechenden Dokument zugeordneten dokumentenindividuellen Nebenstruktur, welcher das geänderte Attribut umfasst,
wobei das Hinzufügen ein bidirektionales Verknüpfen des zusätzlichen Blocks mit einem Block der dem entsprechenden Dokument zugeordneten dokumentenindividuellen Nebenstruktur umfasst.

Ausführungsformen können den Vorteil haben, dass sie ein effizientes Ändern von ein oder mehreren Attributen eines bestehenden Dokuments der persönlichen Dokumentenblockchain-Struktur des ersten Nutzers durch Hinzufügen von ein oder mehreren Änderungsattributen ermöglichen.

Nach Ausführungsformen umfasst die Hauptstruktur einen Anfangsblock, welcher einem Anfangsdokument zugeordnet ist, dessen Ausstellung eine Voraussetzung für die Ausstellung der weiteren Dokumente der Mehrzahl von Dokumenten ist, welchen die nachfolgenden Blöcke der Hauptstruktur zugeordnet sind.

Ausführungsformen können den Vorteil haben, dass die persönliche Dokumentenblockchain-Struktur des ersten Nutzers mit einem vordefinierten Anfangsdokument beginnt. Beispielsweise kann es sich bei diesem Anfangsdokument um eine Geburtsurkunde des ersten Nutzers handeln. Nach weiteren Ausführungsformen kann es sich bei dem Anfangsdokument um ein Dokument handeln, welches einen Eintritt bzw. ein Erfüllen eines für die Verwendung der Dokumentenblockchain-Struktur durch den ersten Nutzer maßgebliches Kriterium, wie etwa ein Erreichen eines bestimmten Alters, z.B. der Volljährigkeit.

Nach Ausführungsformen wird die Hauptstruktur sukzessive um zusätzliche Blöcke inklusive zusätzlicher Nebenstrukturen erweitert, wobei die zusätzlichen Blöcke jeweils einem zusätzlichen Dokument des ersten Nutzers zugeordnet sind und die Erweiterung in der Reihenfolge der Ausstellung der entsprechenden zusätzlichen Dokumente erfolgt. Ausführungsformen können den Vorteil haben, dass die persönliche Dokumentenblockchain-Struktur alle relevanten Dokumente des ersten Nutzers in chronologischer Reihenfolge umfasst. Relevant sind in diesem Kontext alle Dokumente, welche ein oder mehrere Kriterien eines Satzes vordefinierter Kriterien erfüllen. Bei den entsprechenden Kriterien kann es sich beispielsweise um bestimmte Aussteller der Dokumente, bestimmte Dokumententypen oder bestimmte Inhaltliche Bereiche handeln, welchen die Dokumente zugeordnet sind.

Nach Ausführungsformen wird die Möglichkeit die persönliche Dokumentenblockchain-Struktur des ersten Nutzers zu erweitern mit einer Erweiterung der Hauptstruktur um einen Endblock beendet, welcher einem Enddokument zugeordnet ist, dessen Ausstellung eine Ausstellung weiterer Dokumente des ersten Nutzers für die Dokumentenblockchain-Struktur ausschließt. Ausführungsformen können den Vorteil haben, dass die persönlichen Dokumentenblockchain-Struktur des ersten Nutzers ein definiertes Ende umfasst. Beispielsweise kann es sich bei der persönlichen Dokumentenblockchain-Struktur des ersten Nutzers um eine "Lifechain" handeln, welche alle relevanten Dokumente des ersten Nutzers von seiner Geburt, markiert durch eine Geburtsurkunde, bis zu seinem Tod, markiert durch eine Sterbeurkunde, umfasst, wobei die Lifechain mit der Zeit sukzessive um zusätzliche Dokumente in chronologischer Reihenfolge erweitert wird.

Nach Ausführungsformen beginnt die persönliche Dokumentenblockchain-Struktur eines Nutzers beispielsweise mit der Geburtsurkunde. Eine Kopie der Geburtsurkunde kann ferner auch Bestandteil von persönliche Dokumentenblockchain-Struktur der Eltern des Nutzers sein. Dadurch kann eine Verbindung mit den Eltern bzw. mit den Dokumentenblockchain-Strukturen der Eltern implementiert werden.

Nach Ausführungsformen endet die persönliche Dokumentenblockchain-Struktur des Nutzers mit seiner Sterbeurkunde. Dadurch kann die Dokumentenblockchain-Struktur als eine in sich geschlossene, endliche Struktur implementiert werden. Um diese Endlichkeit und ihre Sicherheit gewährleisten zu können, werden bidirektionale Verknüpfungen zwischen den Blöcken Dokumentenblockchain-Struktur realisiert. Somit ist jed3er der Blöcke sowohl von seinem Vorgänger als auch von seinem Nachfolger (soweit existent) abhängig. Ferner erleichtert bzw. ermöglicht eine Nichtlinearität bzw. Mehrdimensionalität der Dokumentenblockchain-Struktur, dass Änderungen und/oder Anhänge zu den von der Dokumentenblockchain-Struktur umfassten Dokumenten generiert und hinzugefügt werden können. Nach Ausführungsformen, ist die Dokumentenblockchain-Struktur dazu konfiguriert, dass einmal erzeugte und zu der Dokumentenblockchain-Struktur hinzugefügte Blöcke nicht wieder gelöscht werden können. Beispielsweise umfassen die Berechtigungsblockchain-Strukturen keine Schreibrechte für bestehende Blöcke der Dokumentenblockchain-Struktur.

In der Hauptstruktur der Dokumentenblockchain-Struktur werden für die Dokumente des ersten Nutzers in chronologischer Reihenfolge einzelne Blöcke erzeugt und hinzugefügt. Die einzelnen Blöcke sind beispielsweise von der ausstellenden Instanz, wie etwa eine Behörde, ein Amt, ein Unternehmen und/oder ein weiterer Nutzer signiert. Ein Hinzufügen der entsprechenden Blöcke zu der persönlichen Dokumentenblockchain-Struktur kann jedoch nur unter der Voraussetzung einer Zustimmung durch den Nutzer der Dokumentenblockchain-Struktur erfolgen. Mithin handelt es sich bei der Dokumentenblockchain-Struktur um eine private Blockchain-Struktur, bei welcher nur eine vordefinierte Instanz, d.h. der erste Nutzer, über das Hinzufügen neuer Blöcke entscheidet. In den dokumentenindividuellen Änderungs- oder Ergänzungsstrukturen befinden sich weitere Blöcke, welche Änderungen bzw. Anhänge des entsprechenden Dokuments der Hauptstruktur in chronologischer Reihenfolge umfassen.

Nach Ausführungsformen umfassen die Dokumente jeweils eine Mehrzahl von Blöcken. Bei den Blöcken handelt es sich beispielsweise um digital codierte Blöcke Feldern, d.h. Attributen, des entsprechenden Dokuments. Der Nutzer wird durch die Dokumentenblockchain-Struktur dazu in die Lage versetzt, seine sämtlichen Dokumente, insbesondere hoheitlichen Dokumente, in digitalisierter bzw. digital codierter Form sicher abzuspeichern und Zugriffe auf diese selektiv zu verwalten und zu steuern.

Um Blöcke ansehen zu dürfen, benötigt es eine passende Berechtigungsblockchain-Struktur für den zugreifenden Nutzer, beispielsweise Behörde, ein Amt, ein Unternehmen oder ein weiterer Nutzer, die nur der erste Nutzer selber erstellen kann.

Über das Berechtigungsmanagementsystem kann der erste Nutzer beispielweise sämtlichen Zugriffe auf die Blöcke der Dokumentenblockchain-Struktur für andere Nutzer bzw. Identitäten, im konkreten Fall etwa für Behörden, Ämter, staatliche Institutionen, Unternehmen und/oder Privatpersonen, managen. Des Weiteren kann das Berechtigungsmanagementsystem Metadaten umfassen, welche beschreiben wie die Dokumentenblockchain-Struktur in einem von einer Mehrzahl von elektronischen Datenspeichersystemen gebildeten verteilten Datenspeicherungsraum abgespeichert ist. Damit der erste Nutzer eine Zugriffsberechtigung erteilen kann, muss er sich beispielsweise in einem ersten sicher vor dem Berechtigungsmanagementsystem authentifizieren. Das kann beispielsweise mit einem dem ersten Nutzer zugeordneten Zertifikat erfolgen. Ein solches Zertifikat kann beispielsweise ein auf einem ID-Token, wie etwa einem Ausweisdokument, gespeichertes sein. Nach erfolgreieher Authentifizierung gegenüber dem Berechtigungsmanagementsystem kann der erste Nutzer anderen Nutzern Zugriffsrechte gewähren. Bei diesen anderen Nutzern kann es sich beispielsweise um Behörden oder Ämter handeln und die entsprechenden Zugriffsrechte können beispielsweise notwendig sein, um einen Behördenprozess in Gang zu setzen.

Als zusätzliche Sicherheitsschicht werden die Blöcke der Dokumentenblockchain-Struktur beispielsweise nicht auf einem Datenspeichersystemalleine gespeichert, sondern über eine Mehrzahl von Datenspeichersystemen verteilt. Somit wird gewährleistet, dass die Dokumente bzw. deren durch eine von dem Berechtigungsmanagementsystem bereitgestellte Normalform bzw. normalisierte Indexliste logisch verknüpft bleiben, die physisch gespeicherten Daten aber auf verschiedenen räumlich voneinander getrennten Datenspeichersystemen gespeichert werden. Nach Ausführungsformen wir die Dokumentenblockchain-Struktur nach einer erfolgreichen Authentifizierung des Nutzers gegenüber dem Berechtigungsmanagementsystem als vollständige Struktur visualisiert. Nach Ausführungsformen verfügt alleine der Nutzer der persönlichen Dokumentenblockchain-Struktur über Zugriffsrechte zu allen Blöcken der Dokumentenblockchain-Struktur und damit über Zugriff auf eine vollständige Visualisierung der Dokumentenblockchain-Struktur. Die dafür notwendigen Metadaten werden nach Ausführungsformen, ggf.in verschlüsselter Form, in dem Berechtigungsmanagementsystem gespeichert.

Der Nutzer bekommt somit volle Kontrolle über seine Dokumente und den von diesen umfasst Daten bzw. Attributen sowie über deren Verwendung. Der Nutzer kann nach Ausführungsformen in die Lage versetzt werden sämtliche Interaktionen mit Behörden oder Ämtern auf digitalem Wege auszuführen. Dadurch können Behördengänge prinzipiell überflüssig werden. Des Weiteren kann dadurch beispielsweise die staatliche Verwaltung effizienter gestaltetet werden.

Nach Ausführungsformen sind die Blöcke der persönlichen Dokumentenblockchain-Struktur des ersten Nutzers auf eine Mehrzahl von räumlich getrennten Datenbanken verteilt gespeichert. Ausführungsformen können den Vorteil haben, dass die Sicherheit des Systems durch die verteilte Speicherung erhöht wird, da keines der zur Speicherung verwendeten elektronischen Datenspeichersysteme alle Blöcke der Dokumentenblockchain-Struktur umfasst. Somit verfügt unabhängig von weiteren zusätzlichen kryptographischen Sicherungsmaßnahmen, wie etwa eine Verschlüsselung der Blöcke und/oder der von den Blöcken umfassten Attributen, keines der elektronischen Datenspeichersysteme über alle Blöcke der Dokumentenblockchain-Struktur. Ferner wird durch die verteilte Speicherung die Ausfallsicherheit erhöht. Selbst wenn ein elektronisches Datenspeichersystem ausfallen sollte, so fallen damit nur einzelne Blöcke der Dokumentenblockchain-Struktur aus, niemals alle.

Nach Ausführungsformen wird eine normalisierte Indexliste der Blöcke der verteilt gespeicherten Dokumentenblockchain-Struktur erstellt und gespeichert. Beispielsweise wird die normalisierte Indexliste von einem Berechtigungsmanagementsystem verwaltet. Bei der normalisierten Indexliste handelt es sich beispielsweise um eine Wiedergabe der logischen Verknüpfungen zwischen den verteilt gespeicherten Blöcken der Dokumentenblockchain-Struktur.

Nach Ausführungsformen werden für alle elektronischen Datenspeichersysteme, über welche die Blöcke der Dokumentenblockchain-Struktur verteilt gespeichert werden, Back-ups erstellt und/oder es existiert zumindest ein redundantes Datenspeichersystem, um einen Datenverlust auszuschließen.

Nach Ausführungsformen sind die Blöcke der persönlichen Dokumentenblockchain-Struktur des ersten Nutzers in den Datenbanken jeweils verschlüsselt gespeichert. Ausführungsformen können den Vorteil haben, dass das ein Lesen der Dateninhalte der entsprechenden Blöcke, wie etwa der Attribute, nur unter Verwendung des zugehörigen kryptographischen Schlüssels möglich ist. Bei dem kryptographischen Schlüssel zum Entschlüsseln kann es sich beispielsweise um einen privaten asymmetrischen oder einen symmetrischen dem kryptographischen Schlüssel handeln. Insbesondere kann es sich um einen blockindividuellen Schlüssel handeln. Beispielsweise hängt der Schlüssel von dem Inhalt des entsprechenden Blocks ab.

Beispielsweise kann der Schlüssel in Form eines Hashwerts des entsprechenden Blocks bereitgestellt werden.

Der kryptographische Schlüssel zum Entschlüsseln der Dateninhalte eines Blocks der persönlichen Dokumentenblockchain-Struktur des ersten Nutzers, auf welche der zweite Nutzer ein Zugriffsrecht besitzt, kann dem entsprechenden zweiten Nutzer beispielweise zusammen mit oder als Teil eines Berechtigungstokens auf eine erfolgreiche Berechtigungsprüfung für einen Zugriff auf den entsprechenden Block zur Verfügung gestellt werden.

Nach Ausführungsformen werden die Prüfwerte, welche die bidirektionalen Verknüpfungen zwischen benachbarten Blöcken implementieren, nicht mit verschlüsselt. Bei diesen Prüfwerten handelt es sich beispielsweise um Metadaten, welche im Gegensatz zu Nutzdaten, wie den Attributen, nicht verschlüsselt werden. Ausführungsformen können den Vorteil haben, dass die Prüfwerte für eine Prüfung der Integrität bzw. Konsistenz einer linearen Blockchain-Unterstrukturen und/oder eines Teils derselben verwendet werden können, ohne dass der prüfende Nutzer Zugriffsrechte auf die Dateninhalte der entsprechenden Blöcke benötigt.

Nach Ausführungsformen werden die Prüfwerte aus den verschlüsselten Daten der entsprechenden Blöcke berechnet. Ausführungsformen können den Vorteil haben, dass sie eine Prüfung der bidirektionalen Verknüpfungen, d.h. der Prüfwerte auch ohne Entschlüsselung der Daten erlauben. Somit kann beispielsweise die Integrität bzw. Konsistenz einer linearen Blockchain-Unterstrukturen und/oder eines Teils derselben geprüft werden, ohne dass der prüfende Nutzer Zugriffsrechte auf die Dateninhalte der entsprechenden Blöcke benötigt. In diesem Fall können insbesondere auch die Prüfwerte nachgerechnet werden.

Nach Ausführungsformen wird die Berechtigungsblockchain-Struktur von einem Berechtigungsmanagementsystem verwaltet. Ausführungsformen können den Vorteil haben, dass das einem Berechtigungsmanagement bzw. die selektive Zugriffsteuerung unabhängig von der manipulationssicheren Speicherung auf getrennten Systemen und/oder auf getrennten Systemkomponenten erfolgt. getrennt bedeutet in diesem Zusammenhang, dass bei einem Ausfall eines der Systeme bzw. Systemkomponenten, die Anderen System bzw. Systemkomponenten voll funktionsfähig bleiben.

Nach Ausführungsformen verwaltet das Berechtigungsmanagementsystem ferner Metadaten, welche die Speicherorte der Blöcke der persönlichen Dokumentenblockchain-Struktur des ersten Nutzers auf der Mehrzahl von räumlich getrennten Datenbanken identifizieren. Ausführungsformen können den Vorteil haben, dass die Verwaltung der Zugriffsrechte unabhängig von der Verwaltung der Speicherorte bzw. Speicheradressen der entsprechenden Blöcke erfolgt. Nach Ausführungsformen kann aus Berechtigungsblockchain-Struktur beispielweise ohne weitere Informationen nicht bestimmt werden für welchen der Blöcke der Dokumentenblockchain-Struktur die Berechtigungsblockchain-Struktur Zugriffsrechte bereitstellt und/oder wo der Block für welchen die Zugriffsrechte bereitgestellt werden gespeichert ist. Diese zusätzlichen Informationen werden durch die Metadaten bereitgestellt, welche die Berechtigungsblockchain-Struktur bzw. Berechtigungsblockchain-Strukturen mit der Speicheradresse des Blocks bzw. den Speicheradressen der Blöcke verknüpft, auf für welche sie Zugriffsrechte verwalten. Durch diese Trennung kann die Sicherheit des Systems weiter erhöht werden.

Nach Ausführungsformen wird eine Mehrzahl von Berechtigungsblockchain-Strukturen bereitgestellt wird, welche jeweils einem der Blöcke der Hauptstruktur zugeordnet. Nach Ausführungsformen folgt aus der Zuordnung zu einem Block der Hauptstruktur, dass ein Zugriffsrecht für alle Blöcke des entsprechenden Dokuments zugewiesen wird. Ausführungsformen können den Vorteil haben, dass Zugriffsrechte beispielsweise dokumentenspezifisch zugewiesen werden. Besitzt ein zweiter Nutzer ein Zugriffsrecht für ein bestimmtes Dokument, d.h. ist er von der entsprechenden Berechtigungsblockchain-Struktur umfasst, so kann er beispielsweise alle Attribute des entsprechenden Dokuments lesen. Nach weiteren Ausführungsformen, folgt aus der Zuordnung folgt aus der Zuordnung zu einem Block der Hauptstruktur, dass ein Zugriffsrecht nur für den entsprechenden Block der Hauptstruktur zugewiesen wird.

Nach Ausführungsformen wird eine Mehrzahl von Berechtigungsblockchain-Strukturen bereitgestellt, welche jeweils einem der Blöcke der Nebenstrukturen zugeordnet sind. Ausführungsformen können den Vorteil haben, dass die Zugriffsteuerung auf die Attribute bzw. die Verwaltung der Zugriffsrechte blockweise erfolgt. Somit können Zugriffsrechte für ein oder mehrere individuelle Blöcke eines Dokuments zugewiesen werden, ohne dass sich daraus ein Zugriffsrecht auf weitere Blöcke desselben Dokuments ergibt.

Nach Ausführungsformen sind die Blöcke der Berechtigungsblockchain-Struktur jeweils bidirektional miteinander verknüpft. Ausführungsformen können den Vorteil haben das durch die bidirektionale Verknüpfung eine effektive Manipulationssicherung implementiert werden kann.

Nach Ausführungsformen umfasst der Anfangsblock der Berechtigungsblockchain-Struktur ein Zugriffs-Zertifikat, welches ein Zugriffsrecht gewährt, wobei die weiteren Blöcke der Berechtigungsblockchain-Struktur jeweils ein Nutzer-Zertifikat des zweiten Nutzers umfasst, dem das entsprechende Zugriffsrecht des Zugriffs-Zertifikat auf den entsprechenden Block der persönlichen Dokumentenblockchain-Struktur des ersten Nutzers gewährt wird. Nach Ausführungsformen wird einem Nutzer nur dann ein Zugriff auf einen Block der Dokumentenblockchain-Struktur gewährt, wenn er mit dem entsprechenden Zugriffs-Zertifikat für einen Zugriff auf den entsprechenden Block verknüpft ist.

Nach Ausführungsformen umfasst das Zugriffs-Zertifikat ein oder mehrere der folgenden Zugriffs-Zertifikattypen:

- ein Lesezugriffs-Zertifikat, welches einem Nutzer einen lesenden Zugriff auf den Inhalt eines Blocks ermöglicht;
- ein Indexzugriffs-Zertifikat, welches einem Nutzer Kenntnis der Existenz des Blocks in der persönlichen Dokumentenblockchain-Struktur des ersten Nutzers und einen lesenden Zugriff auf Metadaten des Blocks ermöglicht, wobei die Metadaten Prüfwerte der bidirektionalen Verbindungen des entsprechenden Blocks mit Nachbarblöcken in der Dokumentenblockchain-Struktur umfassen.

Beispielsweise ermöglicht ein Indexzugriffs-Zertifikat bzw. eine Verknüpfung mit diesem einem Nutzer, eine statistische Auswertung mehrerer Blöcke der persönlichen Dokumentenblockchain-Struktur des ersten Nutzers zu erhalten, etwa bezüglich der Frage, auf wie viele Blöcke einer Dokumentenblockchain-Struktur ein bestimmter Nutzer Lesezugriff oder wie viele Blöcke ein bestimmtes Attribut beinhalten oder viele Blöcke einer bestimmten Kategorie zugeordnet sind.

Die Verwendung mehrerer unterschiedlicher Typen von Zugriffs-Zertifikaten für unterschiedliche Zugriffsarten und die individuelle Verknüpfung dieser Zertifikatstypen mit einzelnen Nutzern, um diesen den Zugriff auf die Blöcke der Dokumentenblockchain-Struktur zu ermöglichen, kann vorteilhaft sein, da dadurch eine besonders feingranulare Kontrolle des Zugriffs auf die Blöcke ermöglicht wird.

Nach Ausführungsformen erfolgen Zugriffe auf die Blöcke der DokumentenBlockchain über ein Kommunikationsnetzwerk mittels kryptographisch gesicherte Kommunikationsverbindungen. Ausführungsformen können den Vorteil haben, dass kryptographisch gesicherte Kommunikationskanäle verwendet werden. Nach Ausführungsformen erfolgt die Speicherung der Blöcke der Dokumentenblockchain-Struktur verteilt über eine Mehrzahl von elektronischen Datenverarbeitungssystemen, wobei die elektronischen Datenverarbeitungssystemen über ein Kommunikationsnetzwerk mittels kryptographisch gesicherter Kommunikationsverbindungen untereinander kommunizieren. Nach Ausführungsformen erfolgt eine Kommunikation mit einem elektronischen Berechtigungsmanagementsystem, welches die Berechtigungsblockchain-Struktur verwaltete bzw. umfasst, über ein Kommunikationsnetzwerk mittels kryptographisch gesicherte Kommunikationsverbindungen.

Nach Ausführungsformen umfassen aufeinanderfolgende bidirektional miteinander verknüpfte Blöcken beide jeweils einen Prüfwert, wobei der Prüfwert eines ersten der beiden Blöcke zumindest von den in dem zweiten der beiden Blöcke gespeicherten Daten abhängt und wobei der Prüfwert des zweiten der beiden Blöcke zumindest von den in dem ersten der beiden Blöcke gespeicherten Daten abhängt.

Die bidirektionalen Verknüpfungen zwischen den Blöcken der Dokumentenblockchain-Struktur und/oder zwischen den Blöcken Berechtigungsblockchain-Struktur implementieren Abhängigkeiten zwischen den entsprechenden Blöcken basierend auf den von diesen umfassten Daten, wie etwa Attributen des ersten Nutzers. Diese Verknüpfungen sind nachprüfbar. Dabei werden entweder Prüfwerte oder Prüffunktionen verwendet, wobei letztere beispielsweise basierend auf einem Prüfwert ausgewählt werden und/oder einen Prüfwert als Parameter umfassen. Eine Änderung der Daten eines der Blöcke würde dazu führen, dass die Prüfwerte der mit diesem verknüpften weiteren Blöcke nicht mehr zu den geänderten Daten passen würden. Anhand dieser Diskrepanz lassen sich leicht Manipulationen der Daten identifizieren.

Nach Ausführungsformen werden auf eine Freigabe hin, Metadaten an den zweiten Nutzer gesendet, welche einen Speicherort des Blocks der der persönlichen Dokumentenblockchain-Struktur des ersten Nutzers auf der Mehrzahl von räumlich getrennten Datenbanken identifizieren.

Nach Ausführungsformen umfasst das Verfahren ferner:

Bereitstellen von Metadaten, welche Identifikatoren und Speicheradressen der Blöcke der persönlichen Dokumentenblockchain-Struktur des ersten Nutzers auf der Mehrzahl von räumlich getrennten Datenbanken umfassen,
auf eine Zustimmung des ersten Nutzers zu einem Hinzufügen eines zusätzlichen Blocks zu der persönlichen Dokumentenblockchain-Struktur hin, Hinzufügen eines zusätzlichen Identifikators und einer Speicheradresse des zusätzlichen Blocks zu den Metadaten.

Nach Ausführungsformen sind die Metadaten verschlüsselt in einem Speicher des Berechtigungsmanagementsystems gespeichert. Ausführungsformen können den Vorteil haben, dass sie eine effiziente kryptographische Sicherung der Metadaten ermöglichen.

Nach Ausführungsformen umfasst das Verfahren ferner ein Gewähren eines Zugriffs für einen weiteren zweiten Nutzer auf einen der Blöcke der persönlichen Dokumentenblockchain-Struktur des ersten Nutzers, wobei das Gewähren ein Hinzufügen eines zusätzlichen Blocks zu einer Berechtigungsblockchain-Struktur, welche dem entsprechenden Block der persönlichen Dokumentenblockchain-Struktur des ersten Nutzers zugeordnet ist, wobei der zusätzliche Block einen Identifikator eines weiteren zweiten Nutzers umfasst und mit einem letzten Block der Berechtigungsblockchain-Struktur bidirektional verknüpft wird.

Nach Ausführungsformen wird eine Liste möglicher zweiter Nutzer bereitgestellt und der Identifikator des entsprechenden weiteren zweiten Nutzers aus der Liste ausgewählt. Ausführungsformen können den Vorteil haben, dass sie ein effizientes Verfahren zur Auswahl von Nutzern umfassen, welchen Zugriffsrechte gewährt werden sollen. Die Liste ermöglicht zum einen eine einfachere und schnellere Auswahl der entsprechenden Nutzer.

Nach Ausführungsformen wird eine Mehrzahl von nichtlinearen persönlichen Dokumentenblockchain-Strukturen des ersten Nutzers bereitgestellt, welche jeweils eine Hauptstruktur umfassen und über ein oder mehrere bidirektionale Verknüpfungen zwischen Blöcken der Hauptstruktur miteinander verknüpft sind. Ausführungsformen können den Vorteil haben, dass für verschiedene Anwendungsfälle bzw. Bereiche verschiedene Dokumentenblockchain-Strukturen erstellt werden, welche jedoch miteinander verknüpft sind. Innerhalb der einzelnen Dokumentenblockchain-Strukturen werden die Dokumente des Nutzers beispielsweise in chronologischer Reihenfolge aufgenommen.

Ausführungsformen umfassen ferner ein elektronisches Datenspeichersystem zum Durchführen eines kryptographischen Verfahrens zur selektiven Zugriffsteuerung auf Attribute einer Mehrzahl von Dokumenten, welche einem ersten Nutzer zugeordnet sind, wobei ein oder mehrere der Attribute in einem Speicher des elektronischen Datenspeichersystems manipulationssicher gespeichert sind.

Das Datenspeichersystem umfasst eine Kommunikationsschnittstelle zum Kommunizieren über ein Netzwerk. Der Speicher des Datenspeichersystems umfasst einen Block einer nichtlinearen persönlichen Dokumentenblockchain-Struktur des ersten Nutzers, in welchem zumindest eines der Attribut gespeichert ist.

Die nichtlineare persönlichen Dokumentenblockchain-Struktur ist dem ersten Nutzer zugeordnet und umfasst eine Mehrzahl von linearen Blockchain-Unterstrukturen umfasst, wobei jede der linearen Blockchain-Unterstrukturen jeweils eine Mehrzahl von bidirektional miteinander verknüpften Blöcken,

wobei eine erste lineare Blockchain-Unterstruktur der Dokumentenblockchain-Struktur eine Hauptstruktur der Dokumentenblockchain-Struktur bildet,
wobei Blöcke der Hauptstruktur jeweils einem individuellen Dokument der Mehrzahl von Dokumenten zugeordnet sind, einen Anfangsblock einer von einer dokumentenindividuellen Nebenstruktur der Dokumentenblockchain-Struktur umfassten zweiten linearen Blockchain-Unterstruktur bilden, welche dem entsprechenden Dokument zugeordnet ist, und einen Identifikator des entsprechenden Dokuments umfassen,
wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind.

Das Datenspeichersystem umfasst ferner einen Prozessor und in dem Speicher sind ferner maschinenlesbare Instruktionen gespeichert. Ein Ausführen der maschinenlesbaren Instruktionen durch den Prozessor veranlasst das Datenspeichersystem zu Folgendem:

Empfangen einer Zugriffsanfrage eines zweiten Nutzers nach dem Block mit dem zumindest einen Attribut mittels der Kommunikationsschnittstelle über das Netzwerk von einem anfragenden Telekommunikationssystem des zweiten Nutzers,
Empfang einer Bestätigung einer erfolgreichen Prüfung des Zugriffsrechts des zweiten Nutzers für den Zugriff auf den Block mit dem zumindest einen Attribut bestätigt, wobei die Bestätigung voraussetzt, dass der zweite Nutzer als ein zugriffsberechtigter Nutzer von einer Berechtigungsblockchain-Struktur für Zugriffe auf den entsprechenden Block umfasst ist,

auf die Bestätigung hin, Senden des Blocks mit dem zumindest einen Attribut mittels der Kommunikationsschnittstelle über das Netzwerk an das anfragende Telekommunikationssystem des zweiten Nutzers.

Das Datenspeichersystem ist dazu konfiguriert, ein oder mehrere der vorangehenden Ausführungsformen des Verfahrens auszuführen und/oder ein oder mehrere Verfahrensschritte der der vorangehenden Ausführungsformen des Verfahrens auszuführen.

Ausführungsformen umfassen ferner ein elektronisches Berechtigungsmanagementsystem zum Durchführen eines kryptographischen Verfahrens zur selektiven Zugriffsteuerung auf Attribute einer Mehrzahl von Dokumenten, welche einem ersten Nutzer zugeordnet sind, wobei die Attribute in ein oder mehreren Speichern von ein oder mehreren elektronischen Datenspeichersystemen manipulationssicher gespeichert sind.

Das Berechtigungsmanagementsystem umfasst eine Kommunikationsschnittstelle zum Kommunizieren über ein Netzwerk. Ferner umfasst das Berechtigungsmanagementsystem einen Speicher, in welchem eine Berechtigungsblockchain-Struktur zur Kontrolle der Zugriffsrechte auf einen Block einer nichtlinearen persönlichen Dokumentenblockchain-Struktur des ersten Nutzers mit dem zumindest einen Attribut gespeichert ist. Die Berechtigungsblockchain-Struktur umfasst einen Anfangsblock sowie ein oder mehrere weitere Blöcken, wobei die weiteren Blöcke jeweils einem weiteren Nutzer ein Zugriffsrecht auf einen der Blöcke der Dokumentenblockchain-Struktur gewähren.

Die nichtlinearen persönlichen Dokumentenblockchain-Struktur ist dem ersten Nutzer zugeordnet und umfasst eine Mehrzahl von linearen Blockchain-Unterstrukturen, wobei jede der linearen Blockchain-Unterstrukturen jeweils eine Mehrzahl von bidirektional miteinander verknüpften Blöcken umfasst,

wobei eine erste lineare Blockchain-Unterstruktur der Dokumentenblockchain-Struktur eine Hauptstruktur der Dokumentenblockchain-Struktur bildet,

wobei Blöcke der Hauptstruktur jeweils einem individuellen Dokument der Mehrzahl von Dokumenten zugeordnet sind, einen Anfangsblock einer von einer dokumentenindividuellen Nebenstruktur der Dokumentenblockchain-Struktur umfassten zweiten linearen Blockchain-Unterstruktur bilden, welche dem entsprechenden Dokument zugeordnet ist, und einen Identifikator des entsprechenden Dokuments umfassen,

wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind.

Das Berechtigungsmanagementsystem umfasst ferner einen Prozessor und in dem Speicher sind ferner maschinenlesbare Instruktionen gespeichert. Ein Ausführen der maschinenlesbaren Instruktionen durch den Prozessor veranlasst das Berechtigungsmanagementsystem zu Folgendem:

Empfangen einer Zugriffsberechtigungsanfrage nach einem Zugriffsrecht eines zweiten Nutzers auf den Block mit dem zumindest einen Attribut mittels der Kommunikationsschnittstelle über das Netzwerk von einem anfragenden Telekommunikationssystem,

Prüfen, ob der zweite Nutzer als ein zugriffsberechtigter Nutzer von einer Berechtigungsblockchain-Struktur für Zugriffe auf den entsprechenden Block umfasst ist,

auf eine erfolgreiche Prüfung hin, Bestätigen der erfolgreichen Prüfung des Zugriffsrechts des zweiten Nutzers für den Zugriff auf den Block mit dem zumindest einen Attribut, und Senden der Bestätigung mittels der Kommunikationsschnittstelle über das Netzwerk an das anfragende Telekommunikationssystem.

Das Berechtigungsmanagementsystem ist dazu konfiguriert, ein oder mehrere der vorangehenden Ausführungsformen des Verfahrens auszuführen und/oder ein oder mehrere Verfahrensschritte der der vorangehenden Ausführungsformen des Verfahrens auszuführen.

Ausführungsformen umfassen ferner ein elektronisches Datenverarbeitungssystem zum Durchführen eines kryptographischen Verfahrens zur selektiven Zugriffsteuerung auf Attribute einer Mehrzahl von Dokumenten, welche einem ersten Nutzer zugeordnet sind, wobei die Attribute in ein oder mehreren Speichern manipulationssicher gespeichert sind. Das elektronische Datenverarbeitungssystem umfasst ein oder mehrere elektronische Datenspeichersysteme nach einer der zuvor beschriebenen Ausführungsformen und ein elektronisches Berechtigungsmanagementsystem nach einer der zuvor beschriebenen Ausführungsformen.

Das Datenverarbeitungssystem ist dazu konfiguriert, ein oder mehrere der vorangehenden Ausführungsformen des Verfahrens auszuführen.

Unter einem "Dokument" wird insbesondere ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw. Sachverhalt fixiert. Zudem kann die Urkunde den Austeller der Urkunde identifizieren.

Unter einem digital codierten Dokument wird ein Datenkonstrukt zur elektronischen Datenverarbeitung verstanden, welches digital codierte Daten bzw. Attribute umfasst. Bei einem digital codierten Dokument kann es sich um beispielsweise um ein Dokument handeln, welche durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurden. Insbesondere ist die Gültigkeit eines solchen Dokuments unabhängig von dem Vorhandensein eines fest zugeordneten Dokumentenkörpers.

Nach Ausführungsformen kann ein digital codiertes Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokumentenkörpers, wie etwa einem Dokument auf Papier, erstellt werden.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Nach Ausführungsformen handelt es sich bei ein oder mehreren der Datenbanken jeweils um eine NoSQL-Datenbank. Vorzugsweise handelt es sich bei den NoSQL-Datenbanken jeweils um eine sogenannte "strukturlose" Datenbank, die eine freie Definition der Art und Anzahl der Datenfelder unterstützt. Vorzugsweise ist die NoSQL-Datenbank so konfiguriert, dass der Inhalt sämtlicher Datenfelder eines jeden neuen Datensatzes automatisch indexiert wird und dass Änderungen des Inhalts der Datenbank in Form neuer Versionen gespeichert werden ("versionierte Datenbank"). Nach Ausführungsformen werden Änderungen der von der Datenbank umfassten Daten in einem Log, z.B. einer Log-Datei, gespeichert.

Unter einer "Datenbank" wird eine (typischerweise große) Menge von Daten verstanden, die in einem Computersystem von einem Zugriffs-Verwaltungssystem nach bestimmten Kriterien verwaltet werden.

Unter einem "Zugriffs-Verwaltungssystem" wird ein elektronisches System zur Speicherung und Wiedergewinnung von Daten verstanden. Beispielsweise kann es sich bei dem Zugriffs-Verwaltungssystem um ein "Datenbanksystem", auch "Datenbankmanagementsystem" (DBMS) handeln. Es ist aber auch möglich, dass die Daten in einem Mikrocontrollerspeicher gespeichert werden und von einem Applikationsprogramm verwaltet werden, das als Zugriffs-Verwaltungssystem arbeitet, ohne ein klassisches DBMS zu sein. Vorzugsweise werden die Daten in dem Zugriffs-Verwaltungssystem widerspruchsfrei und dauerhaft gespeichert und verschiedenen Anwendungsprogrammen und Nutzern in bedarfsgerechter Form effizient zur Verfügung gestellt. Ein Datenbankmanagementsystem kann typischerweise ein oder mehrere Datenbanken beinhalten und die darin enthaltenen Datensätze verwalten.

Eine "NoSQL" (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Cache, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter "Log" wird insbesondere eine Datenmenge, z.B. eine Log-Datei, verstanden, welche automatisch erzeugt wird und in welcher Prozesse, die in einem Zugriffs-Verwaltungssystem ablaufen, aufgezeichnet werden.

Unter einem "Nutzer" wird im Folgenden die digitale Repräsentanz natürlichen oder juristischen Person oder einer Softwarelogik verstanden.

Unter einem "Zertifikat" wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Bei dem Zertifikat eines Nutzers kann es sich beispielsweise um ein Attributzertifikate handeln, welches insbesondere als Zahlwerte ausgebildet sein kann. Attributzertifikate enthalten keinen öffentlichen Schlüssel, sondern verweisen auf ein Public-Key-Zertifikat und legen dessen Geltungsbereich genauer fest. Alternativ dazu kann ein Zertifikat auch nach dem Standard X.509 ausgebildet sein, also einen öffentlichen Schlüssel beinhalten und die Identität des Inhabers sowie weitere Eigenschaften des öffentlichen kryptographischen Schlüssels des Zertifikats bestätigen. Ein Zertifikat kann sich, muss sich aber nicht notwendigerweise auf einen kryptographischen Schlüssel beziehen, sondern kann allgemein Daten zur Prüfung einer elektronischen Signatur enthalten oder mit diesen Daten verknüpft gespeichert sein.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Blockchain-Struktur verwaltet.

Bei dem Telekommunikationssystem handelt es sich beispielsweise um ein Computersystem, welches zur Kommunikation über ein Netzwerk konfiguriert ist.

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine bidirektional verknüpfte Blockchain-Struktur kann auf unterschiedliche Weise implementiert sein. Im Folgenden werden exemplarische Verknüpfungsverfahren zum Zwecke der Illustration beschrieben.

Gemäß einer ersten exemplarischen Variante können bidirektionale Verknüpfungen wie folgt implementiert werden:
Nach Ausführungsformen umfasst das Verfahren:

- Bereitstellen der bidirektional verketteten Blockchain-Struktur,
- Bereitstellen zu speichernder Daten, wie etwa eines oder mehrerer Attribute eines Dokuments,
- Bereitstellen einer ersten Funktionenschar, welche eine Mehrzahl von Funktionen umfasst, wobei sich die Funktionen in mindestens einem ersten Parameter unterscheiden und unter Verwendung des jeweiligen ersten Parameters eindeutig identifizierbar sind,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Erstellen einer ersten blockabhängigen bidirektionalen Verkettungsfunktion zum bidirektionalen Verketten des letzten Blocks mit dem zusätzlichen Block, wobei das Erstellen der ersten Verkettungsfunktion umfasst:
    - ◦ Berechnen zumindest eines ersten Prüfwerts für den letzten und den zusätzlichen Block unter Verwendung der in dem letzten Block gespeicherten Daten und der in dem zusätzlichen Block zu speichernden Daten,
    - ◦ Auswählen einer ersten Funktion der ersten Funktionenschar in Abhängigkeit von dem ersten Prüfwert gemäß einer ersten eindeutigen Zuordnungsbedingung zwischen dem ersten Parameter der ausgewählten ersten Funktion und dem ersten Prüfwert,
    - ◦ Verwenden der ausgewählten ersten Funktion zum Erstellen der ersten blockabhängigen bidirektionalen Verkettungsfunktion,
- Bidirektionales Verketten des letzten Blocks mit dem zusätzlichen Block, wobei das bidirektionale Verketten umfasst:
    - ◦ Hinzufügen der ersten blockabhängigen bidirektionalen Verkettungsfunktion zu dem letzten Block,
    - ◦ Hinzufügen der ersten blockabhängigen bidirektionalen Verkettungsfunktion zu dem zusätzlichen Block,
- Speichern der um den zusätzlichen Block erweiterten Blockchain-Struktur.

Ausführungsformen können den Vorteil haben, dass sie es ermöglichen, eine bidirektional verkettete Blockchain-Struktur bereitzustellen, deren Blöcke mittels blockabhängiger bidirektionaler Verkettungsfunktionen miteinander verkettet sind. Die Verkettung ermöglicht dabei eine bidirektionale Prüfung der Blockchain-Struktur auf Echtheit bzw. Manipulation. Dabei kann die Blockchain-Struktur nicht nur in einer Richtung, sondern in zwei Richtung geprüft werden.

Eine blockabhängige Verkettungsfunktion bezeichnet eine Funktion, welche zumindest eine Variable umfasst und von mindestens einem blockabhängigen Prüfwert abhängt. Beispielseise umfasst die blockabhängige Verkettungsfunktion den blockabhängigen Prüfwert als Parameter. Eine blockabhängige bidirektionale Verkettungsfunktion bezeichnet eine Funktion, welche zumindest eine Variable umfasst und von den Prüfwerten zweier aufeinanderfolgender Blöcke abhängt. Beispielsweise wird für jeden der beiden Blöcke jeweils ein Prüfwert berechnet und die blockabhängige bidirektionale Verkettungsfunktion abhängt von beiden Prüfwerten ab. Beispielsweise umfasst sie beide Prüfwerte als Parameter. Beispielsweise wird für jeden der beiden Blöcke jeweils ein Prüfwert berechnet und die beiden resultierenden Prüfwerte werden zu einem gemeinsamen Prüfwert kombiniert, von welchem die blockabhängige bidirektionale Verkettungsfunktion abhängt. Beispielsweise umfasst die blockabhängige bidirektionale Verkettungsfunktion den gemeinsamen Prüfwert als Parameter. Beispielsweise wird werden die von den beiden Blöcken umfassten Daten bzw. Nutzdaten miteinander kombiniert und ein gemeinsamer Prüfwert aus den kombinierten Daten berechnet. In diesem Fall hängt die blockabhängige bidirektionale Verkettungsfunktion beispielsweise von dem gemeinsamen Prüfwert ab. Beispielsweise umfasst sie den gemeinsamen Prüfwert als Parameter.

Im Falle einer unidirektional verketteten Blockchain-Struktur wird ein Prüfwert unter Verwendung eines Blocks der Blockchain-Struktur berechnet und zu einem mit diesem Block unidirektional zu verkettenden zusätzlichen Block hinzugefügt. Durch dieses Hinzufügen entsteht eine unidirektionale Verkettung. Anhand des hinzugefügten Prüfwerts kann die Integrität des Blocks bzw. der Daten des Blocks geprüft werden, mit welchem der zusätzliche Block unidirektional verkettet ist. Hierzu wird beispielsweise unter Verwendung der Daten des zu überprüfenden Blocks der Prüfwert nachgerechnet und mit dem von dem hinzugefügten Prüfwert verglichen. Stimmen beide Prüfwerte überein, ist die Integrität des Blocks bzw. der Daten des entsprechenden Blocks gewahrt, mit welchem der zusätzliche Block unidirektional verkettet ist. Diese Verkettung ist unidirektional da eine Prüfung von Daten nur in einer Richtung ermöglicht wird: Anhand des zu dem zusätzlichen Block hinzugefügten Prüfwertes kann die Integrität des vorangehenden Blocks geprüft werden. Jedoch kann nicht anhand irgendeiner von dem vorangehenden Block umfassten Information die Integrität des nachfolgenden Blocks, d.h. des zusätzlichen Blocks, geprüft werden.

Im Falle der bidirektional verketteten Blockchain-Struktur gemäß Ausführungsformen wird eine blockabhängige bidirektionale Verkettungsfunktion berechnet. Diese blockabhängige bidirektionale Verkettungsfunktion ist sowohl von den Daten beider miteinander bidirektional verketteten Blöcken abhängig. Beispielsweise wird die blockabhängige bidirektionale Verkettungsfunktion zu jedem der beiden Blöcke jeweils hinzugefügt. Anhand der blockabhängigen bidirektionalen Verkettungsfunktion kann somit die Integrität beider Blöcke bzw. der Daten beider Blöcke geprüft werden. Hierzu wird beispielsweise unter Verwendung der Daten beider Blöcke die blockabhängige bidirektionale Verkettungsfunktion nachgerechnet und mit der zu einem der beiden Blöcke hinzugefügten blockabhängige bidirektionale Verkettungsfunktion verglichen. Stimmen die berechnete und die bereitgestellte blockabhängige bidirektionale Verkettungsfunktion überein, ist die Integrität beider Blöcke bzw. der Daten beider Blöcke gewahrt. Ausgangspukt der Prüfung können dabei beide Blöcke sein, da beide Blöcke jeweils die blockabhängige bidirektionale Verkettungsfunktion umfassen. Eine Prüfung der Daten wird somit in beide Richtungen ermöglicht: Anhand der zu dem zusätzlichen Block hinzugefügten blockabhängige bidirektionale Verkettungsfunktion kann die Integrität des vorangehenden Blocks geprüft werden. Ebenso kann anhand der von dem vorangehenden Block umfassten blockabhängige bidirektionale Verkettungsfunktion Integrität des nachfolgenden Blocks, d.h. des zusätzlichen Blocks, geprüft werden.

Wird eine bidirektionale Verkettungsfunktion also sowohl zu dem zusätzlichen Block hinzugefügt als auch zu dem Block, mit welchem der zusätzliche Block bidirektional verkettet wird, so kann eine Integritätsprüfung auch auf Basis der zu dem entsprechenden Block der Blockchain-Struktur hinzugefügten bidirektionalen Verkettungsfunktion erfolgen. Mit anderen Worten kann bei einer bidirektionalen Verkettung zweier Blöcke eine Integritätsprüfung sowohl ausgehend von der in einem ersten der beiden Blöcke gespeicherten bidirektionalen Verkettungsfunktion ausgeführt werden, als auch ausgehend von der in dem zweiten der beiden Blöcke gespeicherten bidirektionalen Verkettungsfunktion.

Eine zusätzliche Konsistenzprüfung kann beispielsweise darin bestehen zu prüfen, ob beide bidirektional miteinander verknüpften Blöcke dieselbe blockabhängige bidirektionale Verkettungsfunktion umfassen.

Anhand einer blockabhängigen bidirektionalen Verkettungsfunktion kann im Gegensatz zu bekannten unidirektional verketteten Blockchain-Strukturen beispielsweise auch erkannt werden, ob die Blockchain-Struktur abgeschnitten wurde. Da die Prüfwerte im Fall bekannter unidirektional verketteter Blockchain-Strukturen jeweils nur Informationen über vorangehende Blöcke umfassen, kann auf Basis eines solchen Prüfwerts nicht erkannt werden, ob nachfolgende Blöcke existieren. Somit kann auch nicht erkannt werden, wenn nachfolgende Blöcke im Zuge einer Manipulation verändert, ersetzt oder entfernt werden. Demgegenüber umfasst eine blockabhängige bidirektionale Verkettungsfunktion gemäß Ausführungsformen, jeweils Informationen über beide miteinander verkettete Blöcke. Ferner wird die Verkettungsfunktion zu jedem der beiden entsprechenden Blöcke hinzugefügt. Wird ein hinzugefügter Block im Zuge einer Manipulation verändert, ersetzt oder entfernt, so kann dies anhand der blockabhängigen bidirektionalen Verkettungsfunktion des vorausgehenden Blocks erkannt werden, mit welchem der hinzugefügte Block bidirektional verkettet ist.

Eine Funktionenschar bezeichnet eine Mehrzahl von Funktionen, welche sich in mindestens einem Parametern unterscheiden. Bei den Funktionen kann es sich um ein- oder mehrdimensionale Funktionen handeln, d.h. die Funktionen können ein oder mehr Variablen umfassen. Beispielsweise unterscheiden sich die Funktionen in einem Parameter. Beispielsweise unterscheiden sich die Funktionen in n Parametern, wobei die n-Parameter ein n-Tupel bilden. Beispielsweise ist $n = 2$, d.h. die Funktionen unterscheiden sich in zwei Parametern. Funktionen der Funktionenschar sind anhand der Parameter in denen sie sich unterscheiden eindeutig identifizierbar. Die Funktionen der Funktionenschar sind beispielsweise Elemente eines Funktionenraums und können durch ein Funktional, d.h. eine Funktion auf Funktionen, beschrieben werden.

Ein Parameter bezeichnet eine funktionsindividuelle Konstante, d.h. einen Wert der von Funktion zu Funktion der Funktionenschar variieren kann, für eine bestimmte Funktion aber stets festgelegt bzw. konstant ist. Bei einem Parameter kann es sich beispielsweise um einen Summanden, Minuenden, Subtrahenden, Faktor, Dividenden, Divisor oder Exponenten handeln.

Bei der Zuordnungsbedingung beschreibt das Verhältnis zwischen Prüfwert(en) und Parameter(en) der ausgewählten Funktion. Beispielsweise werden ein oder mehrere Prüfwerte berechnet und durch die Zuordnungsbedingung für jeden der Prüfwerte ein Parameter bestimmt. Diejenige Funktion einer Funktionenschar, welche die entsprechenden Parameter aufweist bzw. durch die entsprechenden Parameter identifiziert wird, wird zum Erstellen der ersten blockabhängigen bidirektionalen Verkettungsfunktion ausgewählt.

Bei der Zuordnungsbedingung kann es sich beispielsweise eine Identität handeln. Das heißt, diejenige Funktion, welche als Parameter die berechneten Prüfwerte aufweist, wird ausgewählt. Die Zuordnungsbedingung kann auch durch eine lineare Funktion oder eine nichtlineare Funktion, wie etwa ein Polynom, gegeben sein. Durch eine lineare Funktion kann beispielsweise ein Offset eingeführt werden, um zu vermeiden, dass Parameterwerte kleiner als der entsprechende Offset verwendet werden. Dadurch kann beispielsweise sichergestellt werden, dass die ausgewählten Funktionen ein Mindestmaß an Komplexität aufweisen.

Aus dem Stand der Technik ist bekannt, wie man mit Hilfe spezieller Funktionen, wie etwa Hashfunktionen, aus beliebigen Daten bzw. Informationen eine Zahl, d.h. einen Prüfwert, generiert. Ausführungsformen können den Vorteil haben, aus den Daten bzw. Informationen statt Zahlen, analytische Funktionen generiert werden. Hierzu dienen die Zahlen beispielsweise als Zwischenergebnis, am Ende steht jedoch eine Verkettungsfunktion. Ausführungsformen können somit den Vorteil haben, aus digitalisierten Informationen in Abhängigkeit von den Ausgangsinformationen eine analytische Funktion zu generieren. Hierzu wird aus den Informationen zunächst eine Zahl, ein Zahlenpaar oder ein n-Tupel an Zahlen bzw. Prüfwerten generiert. Im nächsten Schritt wird (werden) diese Zahl (Zahlen) bzw. Prüfwerte verwendet zur Bestimmung von ein oder mehreren Parametern einer Funktion. Aus Daten bzw. Informationen werden dabei Funktionen generiert, mit denen in einem nächsten Schritt Funktionalisierungen durch analytische Operationen realisiert werden könne. Beispielsweise dienen die Funktionen als Verkettungsfunktionen von Datenblöcken, welche dazu verwendet werden können, die Integrität der entsprechenden Datenblöcke zu prüfen und zu belegen. Aus beliebigen digitalisierten Informationen können so über Parameter eindeutige analytische Funktion generiert werden, welche als Prüffunktionen dienen können.

Nach Ausführungsformen umfasst das Verwenden der ausgewählten ersten Funktion zum Erstellen der ersten blockabhängigen bidirektionalen Verkettungsfunktion ein Verwenden der ausgewählten Funktion als erste blockabhängige bidirektionale Verkettungsfunktion. Nach Ausführungsformen ist also die ausgewählte Funktion identisch zu der ersten blockabhängigen bidirektionalen Verkettungsfunktion. Ausführungsformen können den Vorteil haben, dass durch Verwendung der ausgewählten Funktion als erste blockabhängige bidirektionale Verkettungsfunktion eine effektive bidirektionale Verkettung der Blöcke implementiert werden kann. Unter Verwendung der blockabhängigen bidirektionalen Verkettungsfunktion kann effektive die Integrität der Daten der Blöcke geprüft werden, von deren Werten bzw. Prüfwerten die Verkettungsfunktion abhängt.

Nach Ausführungsformen ist der erste Prüfwert ein kombinierter Prüfwert, welcher sowohl von den in dem letzten Block gespeicherten Daten als auch von den in dem zusätzlichen Block zu speichernden Daten abhängt. Beispielsweise werden die Daten miteinander kombiniert und der Prüfwert unter Verwendung der kombinierten Daten berechnet. Nach einer alternativen Ausführungsform wird für jeden der Blöcke jeweils ein Prüfwert berechnet und die beiden resultierenden Prüfwerte zu dem kombinierten Prüfwert kombiniert. Ausführungsformen können den Vorteil haben, dass die Informationen über den Inhalt der Daten zweier Blöcke in einer Funktion zusammengefasst werden können.

Nach Ausführungsformen sind die Daten in den Blöcken der Blockchain-Struktur jeweils in einer quadratische-Matrixstruktur gespeichert, wobei T eine natürliche Zahl größer-gleich zwei ist, wobei das Berechnen des ersten Prüfwerts umfasst:

- ◦ Berechnen einer Summe über jede Spalte einer ersten Matrixstruktur, welche von den beiden Matrixstrukturen der in dem letzten Block gespeicherten Daten und der in dem zusätzlichen Block zu speichernden Daten bereitgestellt wird,
- ◦ Berechnen einer Summe über jede Zeile einer zweiten Matrixstruktur, welche von den beiden Matrixstrukturen der in dem letzten Block gespeicherten Daten und der in dem zusätzlichen Block zu speichernden Daten bereitgestellt wird,
- ◦ Berechnen der kombinierten Summe aus der Summe der i-ten Spalte und der Summe der i-ten Zeile, wobei i eine natürliche Zahl ist und von 1 bis T läuft,
- ◦ Bilden des ersten blockabhängigen Prüfwerts durch Verknüpfen der kombinierten Summen miteinander.

Ausführungsformen können den Vorteil haben, dass durch unterschiedliche Summationsregeln für die beiden miteinander zu verkettenden Blöcken, beispielsweise einerseits eine Summenbildung über die einzelnen Spalten und andererseits eine Summenbildung über die einzelnen Zeilen, der resultierende kombinierte Prüfwert nicht nur Informationen über die Daten der miteinander zu verkettenden Blöcke umfasst, sondern auch Informationen über deren Reihenfolge. Wird die Reihenfolge der beiden Blöcke vertauscht, so erfolgt beispielsweise für den vormals vorangehenden Block keine spalten-, sondern eine zeilenweise Summenbildung, während für den vormals nachfolgenden, nun aber vorangehenden Block eine spaltenweise statt eine zeilenweise Summenbildung erfolgt.

Nach Ausführungsformen können die miteinander zu verkettenden Blöcke auch Matrixstrukturen unterschiedlicher Größe aufweisen. Beispielsweise sind die Daten eines Blocks in einer (VxW)-Matrixstruktur gespeichert, während die Daten des anderen Blocks in einer (XxY)-Matrixstruktur gespeichert sind, wobei V, W, X, Y natürliche Zahlen größergleich zwei sind. In diesem Fall kann für die Bildung des kombinierten Prüfwerts bestimmt werden, welche der Zahlen V, W, X, oder Y am größten ist, die Anzahl an Zeilen V oder X oder die Anzahl an Spalten W oder Y. Falls die Zeilen- und Spaltenzahlen identisch sind, sind keine zusätzlichen Verfahrensschritte notwendig. Ist die Anzahl der Spalten und/oder Zeilen für die beiden Matrixstrukturen unterschiedlich werden die Matrixstrukturen jeweils um so viele Zeilen und/oder Spalten erweitert, dass alle Spalten- und Zeilenzahlen identisch mit der zuvor bestimmten größten Zahl sind. Dabei wird allen ergänzten Matrixelementen ein festgelegter Platzhalterwert zugeordnet, z. B. der Wert 0. Im Ergebnis erhält man so zwei quadratische Matrixstrukturen identischer Größe, auf welche das zuvor genannte Verfahren für quadratische (TxT)-Matrixstrukturen angewendet werden kann.

Nach Ausführungsformen umfasst das Verknüpfen der kombinierten Summen miteinander ein Aneinanderreihen der kombinierten Summen. Ausführungsformen können den Vorteil haben, dass sie ein einfaches und eindeutiges Verfahren zum Bilden des kombinierten Prüfwerts bereitstellen.

Nach Ausführungsformen unterscheiden sich die Funktionen der ersten Funktionenschar in einer Mehrzahl von n Parametern und sind unter Verwendung der jeweiligen n Parameter, welche ein n-Tupel von Parametern bilden, eindeutig identifizierbar, wobei die n-Tupel von Parametern jeweils den ersten Parameter umfassen,
wobei das Erstellen der ersten blockabhängigen bidirektionalen Verkettungsfunktion ferner umfasst:

- ◦ Berechnen eines n-Tupels von ersten Prüfwerten für den letzten und den zusätzlichen Block unter Verwendung der in dem letzten Block gespeicherten Daten und der in dem zusätzlichen Block zu speichernden Daten, wobei das n-Tupel den ersten Prüfwert umfasst,
- ◦ Auswählen der ersten Funktion der ersten Funktionenschar in Abhängigkeit von dem n-Tupel von Prüfwerten gemäß einer ersten eindeutigen Zuordnungsbedingung zwischen dem n-Tupel von Parametern der ausgewählten ersten Funktion und dem n-Tupel von Prüfwerten.

Ein n-Tupel ($x_1$, ..., $x_n$) bezeichnet eine Zusammenfassung von n mathematischen Objekten, hier beispielsweise Prüfwerten oder Parametern, in einer Liste. Dabei müssen die mathematischen Objekte dabei nicht notwendigerweise voneinander verschieden sein und ihre Reihenfolge ist maßgeblich. Mit anderen Worten zwei n-Tupel, welche jeweils dieselben mathematischen Objekten, sind verschieden voneinander, wenn die Reihenfolge der Objekte verschieden ist. Das an der i-ten Stelle stehende Objekt $x_i$ heißt dabei i-te Komponente des Tupels.

Ausführungsformen können den Vorteil haben, dass beispielsweise für jeden der beiden miteinander zu verknüpfenden Blöcke jeweils ein Prüfwert berechnet wird. Beispielweise kann es sich bei dem n-Tupel um ein 2-Tupel, d.h. ein geordnetes Paar, welches aus den beiden Prüfwerten besteht. Ausführungsformen können ferner den Vorteil haben, dass eine Mehrzahl von Prüfwerten pro Block berechnet werden kann, beispielsweise n/2 Prüfwerte. Somit können beispielsweise jeweils Prüfwerte für bestimmte Teilbereiche der Blöcke berechnet werden. Dies kann zum Beispiel den Vorteil haben, dass einzelne Teilbereiche durch einen eigenständigen Prüfwert gesichert werden können. Ferner kann bereits die Zuordnung einzelner Prüfparameter zu einzelnen Teilbereichen die Komplexität der Erzeugung der ersten blockabhängigen bidirektionalen Verkettungsfunktion und damit die Sicherheit erhöhen.

Nach Ausführungsformen umfasst das Verfahren ferner:

- Bereitstellen einer zweiten Funktionenschar, welche eine Mehrzahl von Funktionen umfasst, wobei sich die Funktionen in mindestens einem zweiten Parameter unterscheiden und unter Verwendung des zweiten Parameters jeweils eindeutig identifizierbar sind,

wobei das Erstellen der ersten blockabhängigen bidirektionalen Verkettungsfunktion ferner umfasst:

- ◦ Berechnen eines zweiten Prüfwerts unter Verwendung der in dem zusätzlichen Block zu speichernden Daten, wobei das Berechnen des ersten Prüfwerts unter Verwendung der in dem letzten Block gespeicherten Daten erfolgt,
- ◦ Auswählen einer zweiten Funktion der zweiten Funktionenschar in Abhängigkeit von dem zweiten Prüfwert gemäß einer zweiten eindeutigen Zuordnungsbedingung zwischen dem zweiten Parameter der ausgewählten zweiten Funktion und dem zweiten Prüfwert,
- ◦ Verwenden der ausgewählten zweiten Funktion zum Erstellen der ersten blockabhängigen bidirektionalen Verkettungsfunktion, wobei die erste blockabhängige bidirektionale Verkettungsfunktion eine eindeutige Kombination der ersten und zweiten ausgewählten Funktion umfasst.

Ausführungsformen können den Vorteil haben, dass für jeden der beiden bidirektional miteinander zu verkettenden Blöcke, d.h. des zusätzlichen Blocks und des letzten Blocks der Blockchain-Struktur, jeweils eine individuelle blockabhängige Funktion, i.e. die erste und zweite ausgewählte Funktion, bestimmt werden. Jede dieser beiden Funktionen ermöglicht für sich genommen eine unilaterale Verkettung. Aus der Kombination der beiden Funktionen ergibt sich die blockabhängige bidirektionale Verkettungsfunktion, welche eine bidirektionale Verkettung implementiert, wenn Sie in den beiden Blöcken gespeichert wird. Bei der Kombination kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen.

Nach Ausführungsformen umfasst die erste Zuordnungsbedingung und/oder die zweite Zuordnungsbedingung jeweils eine lineare Funktion. Ausführungsformen können den Vorteil haben, dass durch eine lineare Zuordnungsbedingung, z.B. der Form $P_{1/2} = m \cdot PW_{1/2} + t$, wobei $P_{1/2}$ den ersten/zweiten Parameter, $PW_{1/2}$ den ersten/zweiten Prüfwert, m eine Steigung und t einen Minimalwert bezeichnen, sichergestellt werden kann, dass der ersten und/oder zweiten Parameter einen stets größer gleich einem Minimalwert sind. Dadurch kann beispielsweise gewährleistet werden, dass die ausgewählten ersten und/oder zweiten Funktionen eine bestimmte Mindestkomplexität aufweist. Ferner kann durch eine lineare Zuordnungsbedingung der Abstand zwischen den ersten und/oder zweiten Parameter relativ zu dem Abstand zwischen den zugrundeliegenden ersten und/oder zweiten Prüfwerten erhöht werden. Dadurch kann gewährleistet werden, dass sich die resultierenden ersten und/oder zweiten Funktionen sich für unterschiedliche zugrundeliegende Prüfwerte deutlich voneinander unterscheiden.

Nach Ausführungsformen umfasst die erste Zuordnungsbedingung und/oder die zweite Zuordnungsbedingung eine Identität. Ausführungsformen können den Vorteil haben, dass der erste und/oder zweite Prüfwert als erster und/oder zweiter Parameter in die erste und/oder zweite Funktion eingeht.

Nach Ausführungsformen umfassen die Funktionen der ersten Funktionenschar und/oder die Funktionen der zweiten Funktionenschar jeweils ein Polynom, wobei der erste Parameter und/oder der zweite Parameter der Grad der Polynome ist. Ausführungsformen können den Vorteil haben, dass eine effizientes und effektives Verfahren zum Bestimmen der ersten und/oder zweiten Funktion bereitgestellt wird.

Nach Ausführungsformen handelt es sich bei den von den Funktionen der ersten Funktionenschar und/oder den Funktionen der zweiten Funktionenschar umfassten Polynomen um Hermitesche Polynome, Legendre Polynome, Laguerre Polynome, Tschebyschow Polynome oder um Polynome diskreter Fourier Transformationen. Ausführungsformen können den Vorteil haben, dass eine effizientes und effektives Verfahren zum Bestimmen der ersten und/oder zweiten Funktion bereitgestellt wird.

Beispielsweise handelt es sich um Hermitesche Polynome $H_n(x)$ der Form $H_n(x)=\sum_{k=0}^{\lfloor n/2 \rfloor} \frac{(-1)^k n!}{(n-2k)!k!} (2x)^{n-2k}$, wobei der Prüfwert als Parameter n oder eine lineare Funktion des Prüfwerts als Parameter n verwendet wird. Beispielsweise handelt es sich um Legendre Polynome $P_n(x)$ der Form $P_n(x)=\sum_{k=0}^{\lfloor n/2 \rfloor} (-1)^k \frac{(2n-2k)!}{(n-k)!(n-2k)!k!2^n} x^{n-2k}$, wobei der Prüfwert als Parameter n oder eine lineare Funktion des Prüfwerts als Parameter n verwendet wird. Beispielsweise handelt es sich um Laguerre Polynome $L_n(x)$ der Form $L_n(x)=\sum_{k=0}^{\infty} (-1)^k \binom{n}{k} \frac{n!}{k!} (x)^k$, wobei der Prüfwert als Parameter n oder eine lineare Funktion des Prüfwerts als Parameter n verwendet wird. Beispielsweise handelt es sich um Tschebyschow Polynome, wie etwa Tschebyschow Polynome $T_n(x)$ erster Art der Form

$$T_n(x)=\frac{\left(x+\sqrt{x^2-1}\right)^n+\left(x-\sqrt{x^2-1}\right)^n}{2}$$

oder Tschebyschow Polynome $U_n(x)$ zweiter Art der Form

$$U_n(x)=\begin{cases}\frac{\sin((n+1)\arccos x)}{\sqrt{1-x^2}} & \text{für } |x|<1\\ \frac{\sinh((n+1)\arccos x)}{\sqrt{x^2-1}} & \text{für } |x|>1\end{cases}$$

, wobei der Prüfwert als Parameter n oder eine lineare Funktion des Prüfwerts als Parameter n verwendet wird. Beispielsweise handelt es sich um Polynome diskreter Fourier Transformationen g(x) der Form $g(x)=\sum_{k=-n}^{n} c_k e^{ikx}$, wobei der Prüfwert als Parameter n oder eine lineare Funktion des Prüfwerts als Parameter n verwendet wird. Beispielsweise wird der Realteil Re [g(x)], der Imaginärteil Im [g(x)], oder der Betrag |g(x)| verwendet.

Nach Ausführungsformen umfassen die Funktionen der ersten Funktionenschar und/oder die Funktionen der zweiten Funktionenschar jeweils eine Kugelflächenfunktion, wobei der erste Parameter und/oder der zweite Parameter ein Index der Kugelflächenfunktionen ist. Ausführungsformen können den Vorteil haben, dass eine effizientes und effektives Verfahren zum Bestimmen der ersten und/oder zweiten Funktion bereitgestellt wird. Beispielsweise handelt es sich um Kugelflächenfunktionen $Y_{lm}(\vartheta, \Phi)$ der Form $Y_{lm}(\vartheta, \phi)=\frac{1}{\sqrt{2\pi}} N_{lm} P_{lm} (\cos\vartheta)e^{im\phi}$ mit $N_{lm} = \sqrt{\frac{2l+1}{2} \cdot \frac{(l-m)!}{(l+m)!}}$ und $P_{lm}(x)=\frac{(-1)}{2^l l!} (1-x^2)^{\frac{m}{2}} \frac{d^{l+m}}{dx^{l+m}} (x^2-1)^l$, wobei der Prüfwert als Parameter l oder eine lineare Funktion des Prüfwerts als Parameter l verwendet wird. Beispielsweise wird der Realteil Re $[Y_{lm}(\vartheta\Phi)]$, der Imaginärteil Im $[Y_{lm}(\vartheta,\Phi)]$, oder der Betrag $|Y_{lm}(\vartheta,\Phi)|$ verwendet.

Nach Ausführungsformen umfassen die Funktionen der ersten Funktionenschar und/oder die Funktionen der zweiten Funktionenschar jeweils eine Gaußfunktion, wobei der erste Parameter und/oder der zweite Parameter die Breite der Gaußfunktionen ist. Ausführungsformen können den Vorteil haben, dass eine effizientes und effektives Verfahren zum Bestimmen der ersten und/oder zweiten Funktion bereitgestellt wird. Beispielsweise handelt es sich um Gaußfunktionen der Form $G_n(x)=e^{-\frac{1}{2}n(x-a)^2}$, wobei der Prüfwert als Breite bzw. Parameter n oder eine lineare Funktion des Prüfwerts als Parameter n verwendet wird

Nach Ausführungsformen umfasst der letzte Block der Blockchain-Struktur ferner eine zweite blockabhängige bidirektionale Verkettungsfunktion der bidirektionalen Verkettung des letzten Blocks mit einem vorletzten Block der Blockchain-Struktur. Das Hinzufügen der ersten blockabhängigen bidirektionalen Verkettungsfunktion zu dem letzten Block umfasst ein Verknüpfen der ersten Verkettungsfunktion mit der zweiten Verkettungsfunktion. Beispielsweise wird eine Kombination aus der ersten Verkettungsfunktion und der zweiten Verkettungsfunktion gebildet. Bei der Kombination kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen.

Nach Ausführungsformen umfasst das Berechnen des ersten und/oder zweiten Prüfwerts ein Anwenden einer Hashfunktion auf die in dem letzten Block gespeicherten Daten und/oder die in dem zusätzlichen Block zu speichernden Daten. Ausführungsformen können den Vorteil haben, dass ein effizientes und effektives Verfahren zum Berechnen des ersten und/oder zweiten Prüfwerts bereitgestellt wird.

Nach Ausführungsformen sind aufeinanderfolgende Blöcke der bidirektional verketteten Blockchain-Struktur jeweils bidirektional miteinander verkettet, wobei zwei bidirektional miteinander verkettete Blöcke jeweils beide eine gemeinsame blockabhängige bidirektionale Verkettungsfunktion umfassen, wobei die gemeinsame blockabhängige bidirektionale Verkettungsfunktion jeweils von den in beiden bidirektional miteinander verketteten Blöcke gespeicherten Daten abhängig ist.

Gemäß einer zweiten exemplarischen Variante können bidirektionale Verknüpfungen wie folgt implementiert werden:
Nach Ausführungsformen umfasst das Verfahren:

- Bereitstellen einer bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen einer ersten blockabhängigen Verkettungsfunktion zum bidirektionalen Verketten des letzten Blocks mit dem zusätzlichen Block, wobei das Berechnen der Verkettungsfunktion umfasst:
    - Berechnen eines kombinierten blockabhängigen Prüfwerts des letzten und des zusätzlichen Blocks unter Verwendung der in dem letzten Block gespeicherten Daten und der in dem zusätzlichen Block zu speichernden Daten,
    - Verknüpfen des kombinierten Prüfwerts mit einer blockunabhängigen verkettungsvorgangsindividuellen Funktion,
- Hinzufügen der ersten blockabhängigen Verkettungsfunktion zu dem letzten Block,
- Hinzufügen der ersten blockabhängigen Verkettungsfunktion zu dem zusätzlichen Block,
- Speichern der um den zusätzlichen Block erweiterten Blockchain-Struktur.

Anhand des kombinierten Prüfwerts, welcher Eingang in die Berechnung der blockabhängigen bidirektionalen Verkettungsfunktion findet, des letzten Blocks, mit welchem der hinzugefügte Block bidirektional verkettet ist, kann im Gegensatz zu bekannten unidirektional verketteten Blockchain-Strukturen auch erkannt werden, ob die Blockchain-Struktur abgeschnitten wurde. Da die Prüfwerte im Fall bekannter unidirektional verketteter Blockchain-Strukturen jeweils nur Informationen über vorangehende Blöcke umfassen, kann auf Basis eines solchen Prüfwerts nicht erkannt werden, ob nachfolgende Blöcke existieren. Somit kann auch nicht erkannt werden, wenn nachfolgende Blöcke im Zuge eine Manipulation verändert, ersetzt oder entfernt werden. Demgegenüber umfassen die kombinierten Prüfwerte der bidirektionalen Verkettungsfunktionen gemäß Ausführungsformen, jeweils Informationen über beide miteinander verkettete Blöcke. Ferner wird die Verkettungsfunktion zu jedem der beiden entsprechenden Blöcke jeweils hinzugefügt. Wird ein hinzugefügter Block im Zuge eine Manipulation verändert, ersetzt oder entfernt, so kann dies anhand der Verkettungsfunktion des Blocks, mit welchem der hinzugefügte Block bidirektional verkettet ist, erkannt werden.

Nach Ausführungsformen umfasst jeder der inneren Blöcke der Blockchain-Struktur, d.h. alle Blöcke außer dem ersten und letzten Block, zumindest zwei blockabhängige Verkettungsfunktionen, da die inneren Blöcke jeweils mit einem vorangehenden und einem nachfolgenden Block durch unterschiedliche Verkettungsfunktionen verkettet sind. Im Gegensatz zu bekannten ausschließlich hashwertbasierten Verkettungsverfahren für Blockchain-Strukturen werden im vorliegenden Fall keine Einzelwerte zu den Blöcken hinzugefügt, sondern Funktionen, welche von zumindest einer Variablen abhängig sind, welche für die Verkettung nicht festgelegt wird. Umfasst ein Block mehrere blockabhängige Verkettungsfunktionen, so können diese miteinander verknüpft werden. Somit ergibt sich aus dem Spektrum der miteinander verknüpften Verkettungsfunktionen der einzelnen Verbindungen eine gemeinsam resultierende Verkettungsfunktion, welche die Informationen aller beitragenden Verkettungsfunktionen der einzelnen Verbindungen vollständig umfasst. Bei einer entsprechenden Verknüpfung kann es sich beispielsweise um eine arithmetische Verknüpfung, wie Addition, Subtraktion, Multiplikation und/oder Division handeln.

Nach Ausführungsformen umfassen die Daten, welche bei der Berechnung der Prüfwerte berücksichtigt werden, eine echte Untermenge der Daten der entsprechenden Blöcke. Nach weiteren Ausführungsformen umfassen die Daten, welche bei der Berechnung des Prüfwerts berücksichtigt werden, alle Daten der entsprechenden Blöcke. Nach Ausführungsformen umfassen die Daten des letzten Blocks der Blockchain-Struktur, welche zur Berechnung des kombinierten blockabhängigen Prüfwerts berücksichtigt werden, die blockabhängige Verkettungsfunktion des letzten Blocks mit einem vorletzten Block der Blockchain-Struktur. Nach Ausführungsformen umfassen die Daten des letzten Blocks, welche bei der Berechnung des kombinierten blockabhängigen Prüfwerts berücksichtigt werden, nicht die Verkettungsfunktion der Verkettung des letzten Blocks mit dem vorletzten Block.

Nach Ausführungsformen umfasst der letzte Block der Blockchain-Struktur ferner eine zweite blockabhängige Verkettungsfunktion der bidirektionalen Verkettung des letzten Blocks mit einem vorletzten Block der Blockchain-Struktur, wobei das Hinzufügen der ersten blockabhängigen Verkettungsfunktion zu dem letzten Block ein Verknüpfen der ersten blockabhängigen Verkettungsfunktion mit der zweiten blockabhängigen Verkettungsfunktion umfasst.

Nach Ausführungsformen umfasst jeder der inneren Blöcke der Blockchain-Struktur, d.h. alle Blöcke außer dem ersten und letzten Block, zumindest zwei blockabhängige Verkettungsfunktionen, da die inneren Blöcke jeweils mit einem vorangehenden und einem nachfolgenden Block durch unterschiedliche Verkettungsfunktionen verkettet sind. Im Gegensatz zu bekannten ausschließlich hashwertbasierten Verkettungsverfahren für Blockchain-Strukturen werden im vorliegenden Fall keine Einzelwerte zu den Blöcken hinzugefügt, sondern Funktionen, welche von zumindest einer Variablen abhängig sind, welche für die Verkettung nicht festgelegt wird. Umfasst ein Block mehrere blockabhängige Verkettungsfunktionen, so können diese miteinander verknüpft werden. Somit ergibt sich aus dem Spektrum der miteinander verknüpften Verkettungsfunktionen der einzelnen Verbindungen eine gemeinsam resultierende Verkettungsfunktion, welche die Informationen aller beitragenden Verkettungsfunktionen der einzelnen Verbindungen vollständig umfasst. Bei einer entsprechenden Verknüpfung kann es sich beispielsweise um eine arithmetische Verknüpfung, wie Addition, Subtraktion, Multiplikation und/oder Division handeln.

Nach Ausführungsformen ist die blockunabhängige verkettungsvorgangsindividuelle Funktion eine Funktion einer Funktionenschar, welche einen Mehrzahl von blockunabhängigen verkettungsvorgangsindividuellen Funktionen umfasst, wobei jeder Funktion der Funktionenschar jeweils eine Ordnungszahl zugeordnet ist und die Funktionen der Funktionenschar beginnenden mit einer ersten Ordnungszahl, welche einer ersten bidirektionalen Verkettung der bidirektional verketteten Blockchain-Struktur zwischen einem ersten und einem zweiten Block der Kettenstruktur zugeordnet ist, gemäß einer vordefinierten Zuordnungsvorschrift dazu vorgesehen sind, in aufsteigender Ordnung jeweils individuell einer bidirektionalen Verkettung zweier Blöcke der bidirektional verketteten Blockchain-Struktur zugeordnet und zum Berechnen einer von den entsprechenden zwei Blöcken abhängigen Verkettungsfunktion verwendet zu werden.

Ausführungsformen können ferner den Vorteil haben, dass durch die Verknüpfung des kombinierten Prüfwerts mit einer blockunabhängigen verkettungsvorgangsindividuellen Funktion ein sicheres Verkettungsverfahren durch komplexere und sichere Verkettungsfunktionen implementiert werden kann. Unter einer blockunabhängigen verkettungsvorgangsindividuellen Funktion wird hier eine mathematische Funktion mit zumindest einer Variablen verstanden. Die Funktion ist insofern verkettungsvorgangsindividuell, als dass für jeden Verkettungsvorgang, d.h. für jede bidirektionale Verbindung zwischen zwei Blöcken der Blockchain-Struktur eine andere Funktion Verwendung findet. Nach Ausführungsformen umfassen alle verkettungsvorgangsindividuellen Funktionen dabei dieselben Variablen. Nach Ausführungsformen werden die verkettungsvorgangsindividuellen Funktionen aus einer gemeinsamen übergreifenden Funktion bzw. Funktional abgeleitet, sodass die resultierenden verkettungsvorgangsindividuellen Funktionen eine Funktionenschar bilden. Nach Ausführungsformen sind die Funktionen der Funktionenschar den Verbindungen der Blockchain-Struktur gemäß einer vordefinierten Zuordnungsvorschrift zugeordnet. Nach Ausführungsformen sind die Funktionen der Funktionenschar gemäß der Reihenfolge der Verbindungen der Blockchain-Struktur geordnet. Auf Basis dieser Ordnung kann eindeutig festgelegt sein, welche kopiervorgangsindividuelle Funktion für welchen Verkettungsvorgang angewendet wird. Nach Ausführungsformen ist die bidirektionale Verkettung zwischen den Blöcken der Blockchain-Struktur somit nicht nur von den Dateninhalten der beiden miteinander zu verkettenden Blöcke abhängig, sondern auch von der Rangfolge der entsprechenden Verbindung zwischen den Blöcken innerhalb der Blockchain-Struktur, d.h. von der Position der Blöcke innerhalb der Blockchain-Struktur.

Nach Ausführungsformen umfasst die blockunabhängige verkettungsvorgangsindividuelle Funktion ein Polynom M-ter Ordnung, wobei M eine natürliche Zahl ist, welche die der Funktion zugeordnete Ordnungszahl bildet.

Nach Ausführungsformen umfasst die blockunabhängige verkettungsvorgangsindividuelle Funktion eine Verknüpfung des Polynoms M-ter Ordnung mit einer Exponentialfunktion, wobei der Exponent der Exponentialfunktion ein Polynom der Ordnung größer-gleich zwei umfasst. Bei einer entsprechenden Verknüpfung kann es sich beispielsweise um eine Multiplikation handeln.

Ausführungsformen können den Vorteil haben, dass die Ordnungszahl der blockunabhängigen verkettungsvorgangsindividuellen Funktion unter Verwendung der Ordnung des Polynoms festgelegt werden kann. Dies stellt eine klare Zuordnung der Verkettungsfunktionen zu den einzelnen Verkettungsvorgängen beim Bilden der Blockchain-Struktur bereit. Beispielsweise kann die Ordnung des Polynoms identisch mit der Ordnungszahl sein. Somit wäre der ersten Verbindung der Blockchain-Struktur mit der Ordnungszahl 1 ein Polynom erster Ordnung zugeordnet bzw. eine Verkettungsfunktion, welche ein Polynom erste Ordnung umfasst. Nach weiteren Ausführungsformen kann die Ordnungszahl als Ordnung des Polynoms minus einer vordefinierten Zahl festgelegt sein. Handelt es sich hierbei beispielsweise um die Zahl 10, so wäre der ersten Verbindung der Blockchain-Struktur mit der Ordnungszahl 1 ein Polynom elfter Ordnung zugeordnet bzw. eine Verkettungsfunktion, welche ein Polynom elfter Ordnung umfasst. Nach Ausführungsformen legt die Zuordnungsvorschrift zu den einzelnen Verbindungen der Blockchain-Struktur ferner fest, welchen Wert die Koeffizienten der Polynome haben. Eine entsprechende Vorschrift kann durch die gemeinsame übergreifende Funktion festgelegt werden.

Nach Ausführungsformen ist für die gemeinsame übergreifende Funktion, welche zur Bildung der blockabhängigen Verkettungsfunktionen, genauer gesagt der blockunabhängigen verkettungsvorgangsindividuellen Funktionen, verwendet wird, ein Aufsteigeoperator und ein Absteigeoperator vorgesehen, welche beliebige verkettungsvorgangsindividuelle Funktionen um eine Ordnung oder mehrere Ordnungen herauf- bzw. herabsetzen können. Eine Anwendung eines solchen Aufsteigeoperator oder Absteigeoperators auf eine blockunabhängige verkettungsvorgangsindividuelle Funktion resultiert somit in einer blockunabhängigen verkettungsvorgangsindividuellen Funktion höherer bzw. niedrigerer Ordnung, wobei sowohl dies Ausgangsfunktion, als auch die Endfunktion von der gemeinsamen übergreifenden Funktion umfasst werden.

Die Verwendung von blockunabhängigen verkettungsvorgangsindividuellen Funktionen auf Basis von Polynomen kann ferner den Vorteil haben, dass die entsprechenden Polynome ineinander transformiert werden können. Durch eine Ableitungsoperation kann ein Polynom M-ter Ordnung in ein Polynom (M-1)-ter Ordnung transformiert werden. Ferner kann ein Polynom M-ter Ordnung durch Multiplikation mit der entsprechenden Variablen, beispielsweise x, in ein Polynom (M+1)-ter Ordnung transformiert werden. Nach Ausführungsformen umfassen die Transformationsfunktionen eine Kombination aus der entsprechenden Variablen, d.h. ein Polynom erster Ordnung, beispielsweise x, und eines Ableitungsoperators, beispielsweise $\frac{d}{dx}$. Im Folgenden werden Transformationsfunktionen, welche eine Funktion M-ter Ordnung, beispielsweise ein Polynom M-ter Ordnung, in eine Funktion (M+1)-ter Ordnung transformieren als Aufsteigeoperatoren bezeichnet und Transformationsfunktionen, welche eine Funktion M-ter Ordnung, beispielsweise ein Polynom M-ter Ordnung, in eine Funktion (M-1)-ter Ordnung transformieren als Absteigeoperatoren bezeichnet.

Nach Ausführungsformen können die Aufsteigeoperatoren und Absteigeoperatoren ein Polynom M-ter Ordnung in ein Polynom (M+P)-ter Ordnung bzw. (M-P)-ter Ordnung transformieren, wobei P eine natürliche Zahl größer-gleich zwei bezeichnet. Nach Ausführungsformen umfassen die Transformationsfunktionen in diesem Fall eine Kombination aus einer P-ten Potenz der entsprechenden Variablen, d.h. ein Polynom erster Ordnung, beispielsweise $x^P$, und eines Ableitungsoperators der Ordnung P, beispielsweise $\frac{d^P}{dx^P}$.

Nach Ausführungsformen umfasst das Berechnen des kombinierten blockabhängigen Prüfwerts des letzten und des zusätzlichen Blocks ein Anwenden einer Hashfunktion auf die in dem letzten Block gespeicherten Daten und die in dem zusätzlichen Block zu speichernden Daten. Ausführungsformen können den Vorteil haben, dass das Verwenden eines Hashwerts zum Bilden des kombinierten Prüfwerts ein einfaches und sicheres Verfahren bereitstellt, um den Daten der miteinander zu verkettenden Blöcke einen eindeutigen Prüfwert zuzuordnen.

Gemäß einer dritten exemplarischen Variante können bidirektionale Verknüpfungen wie folgt implementiert werden:

Ausführungsformen umfassen ein Verfahren zum manipulationssicheren Speichern von Daten in einem elektronischen Speicher unter Verwendung einer bidirektional verketteten Blockchain-Struktur, welche zumindest einen ersten und einen letzten Block umfasst. Das Verfahren umfasst:

- Bereitstellen einer bidirektional verketteten Blockchain-Struktur,
- Bereitstellen der zu speichernden Daten,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Berechnen eines ersten Prüfwerts des letzten Blocks zum bidirektional Verketten des zusätzlichen Blocks mit dem letzten Block der Blockchain-Struktur, wobei der erste Prüfwert des letzten Blocks unter Verwendung eines ersten Hashwerts berechnet wird, dessen Berechnung ein Anwenden einer Hashfunktion auf die in dem letzten Block gespeicherten Daten und die in dem zusätzlichen Block zu speichernden Daten umfasst,
- Berechnen eines Prüfwerts des zusätzlichen Blocks zum bidirektional Verketten des zusätzlichen Blocks mit dem letzten Block der Blockchain-Struktur, wobei der Prüfwert des zusätzlichen Blocks unter Verwendung eines zweiten Hashwerts berechnet wird, dessen Berechnung ein Anwenden der Hashfunktion auf die in dem letzten Block gespeicherten Daten und die auf die in dem zusätzlichen Block zu speichernden Daten umfasst,
- Hinzufügen des ersten Prüfwerts des letzten Blocks zu dem letzten Block,
- Hinzufügen des Prüfwerts des zusätzlichen Blocks zu dem zusätzlichen Block,
- Speichern der um den zusätzlichen Block erweiterten Blockchain-Struktur.

Ausführungsformen können den Vorteil haben, dass sie es ermöglichen eine Blockchain bereitzustellen, welche mit Hashverfahren bidirektional verkettet ist. Die Verkettung ermöglicht ferner eine bidirektionale Prüfung der Blockchain-Struktur auf Echtheit bzw. Manipulation. Dabei kann die Blockchain-Struktur nicht nur in einer Richtung, sondern in zwei Richtung geprüft werden. Ferner kann eine erhöhte Sicherheit durch komplexere und sichere Hashverfahren implementiert werden.

Nach Ausführungsformen umfasst das Verfahren ferner:

- Berechnen eines kombinierten Prüfwerts des letzten Blocks, wobei der kombinierte Prüfwert des letzten Blocks unter Verwendung eines vierten Hashwerts berechnet wird, dessen Berechnung ein Anwenden der Hashfunktion auf eine Kombination aus dem ersten und dem zweiten Prüfwert des letzten Blocks umfasst,
- Hinzufügen des kombinierten Prüfwerts des letzten Blocks zu dem letzten Block der Blockchain-Struktur.

Ausführungsformen können den Vorteil haben, dass der kombinierte Prüfwert auf den Daten des vorletzten Blocks der Blockchain-Struktur, des letzten Blocks der Blockchain-Struktur und des zusätzlichen Blocks basiert. Anhand des kombinierten Prüfwerts können somit zugleich der vorangehende als auch der nachfolgende Block auf ihre Integrität geprüft werden.

Nach Ausführungsformen wird der kombinierte Prüfwert $KPW_N$ des letzten Blocks wie folgt berechnet:

$$KPW_N = Hash\{PW_{N-1} + PW_N\},$$

wobei $PW_{N-1}$ den zweiten Prüfwert des letzten Blocks und $PW_N$ den ersten Prüfwert des letzten Blocks bezeichnet. Nach einer alternativen Notation wird der kombinierte Prüfwert $KPW_N$ des letzten Blocks wie folgt berechnet:

$$KPW_N = Hash\{PW2_{N-1} + PW1_N\},$$

wobei $PW2_{N-1}$ den zweiten Prüfwert des letzten Blocks und $PW1_N$ den ersten Prüfwert des letzten Blocks bezeichnet.

Ausführungsformen können den Vorteil haben, dass ein effizientes und sicheres Verfahren zum Berechnen des kombinierten Prüfwerts $KPW_N$ des letzten Blocks, d.h. des N-ten Blocks der Blockchain-Struktur bereitgestellt wird.

Nach Ausführungsformen umfasst der letzte Block einen Platzhalter, welcher den letzten Block als letzten Block der Blockchain-Struktur kennzeichnet, wobei das Hinzufügen des ersten Prüfwerts des letzten Blocks zu dem letzten Block umfasst: Ersetzen des Platzhalters des letzten Blocks durch den ersten Prüfwert des letzten Blocks.

Ausführungsformen können den Vorteil haben, dass anhand des Platzhalters stets der letzte Block der Blockchain-Struktur erkannt werden kann. Wird das Ende der Blockchain-Struktur im Zuge einer Manipulation abgeschnitten, so umfasst die resultierende abgeschnittene Blockchain-Struktur keinen Block mehr, welcher durch einen entsprechenden Platzhalter als letzter Block gekennzeichnet ist. Somit kann allein am Fehlen des entsprechenden Platzhalters ohne weiteren Aufwand erkannt werden, dass die entsprechende Blockchain-Struktur nicht vollständig ist. Nach Ausführungsformen umfasst der Platzhalter beispielsweise eine oder mehrere Nullen bzw. besteht ausschließlich aus einer oder mehreren Nullen.

Nach Ausführungsformen umfasst der zusätzliche Block einen Platzhalter, welcher den zusätzlichen Block als letzten Block der erweiterten Blockchain-Struktur kennzeichnet. Ausführungsformen können den Vorteil haben, dass der zusätzliche Block nach Erweiterung der Blockchain-Struktur als letzter Block der erweiterten Blockchain-Struktur erkannt wird. Zugleich kann erkannt werden, dass die erweiterten Blockchain-Struktur vollständig ist und keine eigentlich nachfolgenden Blöcke entfernt wurden.

Nach Ausführungsformen umfasst das Verfahren ferner:

- Berechnen eines kombinierten Prüfwerts des zusätzlichen Blocks, wobei der kombinierte Prüfwert des zusätzlichen Blocks unter Verwendung eines fünften Hashwerts berechnet wird, dessen Berechnung ein Anwenden der Hashfunktion auf eine Kombination aus dem Prüfwert des zusätzlichen Blocks und dem Platzhalter des zusätzlichen Blocks umfasst,
- Hinzufügen des kombinierten Prüfwerts des zusätzlichen Blocks zu dem zusätzlichen Block der Blockchain-Struktur.

Ausführungsformen können den Vorteil haben, dass anhand des kombinierten Prüfwerts geprüft werden kann, ob es sich bei dem zusätzlichen Block tatsächlich um den letzten Block der erweiterten Blockchain-Struktur handelt. Zugleich kann anhand des kombinierten Prüfwerts die Integrität des vorangehenden Blocks geprüft werden.

Nach Ausführungsformen wird der kombinierte Prüfwert $KPW_{N+1}$ des zusätzlichen Blocks wie folgt berechnet:

$$KPW_{N+1} = Hash\{PW_N + PH_{N+1}\},$$

wobei $PW_N$ den Prüfwert des zusätzlichen Blocks und $PH_{N+1}$ den Platzhalter des zusätzlichen Blocks bezeichnet. Nach einer alternativen Notation wird der kombinierte Prüfwert $KPW_{N+1}$ des zusätzlichen Blocks wie folgt berechnet:

$$KPW_{N+1} = Hash\{PW2_N + PH_{N+1}\},$$

wobei $PW2_N$ den Prüfwert des zusätzlichen Blocks und $PH_{N+1}$ den Platzhalter des zusätzlichen Blocks bezeichnet.

Ausführungsformen können den Vorteil haben, dass ein effizientes und sicheres Verfahren zum Berechnen des kombinierten Prüfwerts $KPW_{N+1}$ des zusätzlichen Blocks, d.h. des (N+1)-ten Blocks der erweiterten Blockchain-Struktur, bereitgestellt wird.

Nach Ausführungsformen umfasst der erste Block der Blockchain-Struktur einen Platzhalter, welcher den ersten Block als ersten Block der Blockchain-Struktur kennzeichnet. Ausführungsformen können den Vorteil haben, dass anhand des Platzhalters stets der erste Block der Blockchain-Struktur erkannt werden kann. Wird der Anfang der Blockchain-Struktur im Zuge einer Manipulation abgeschnitten, so umfasst die resultierende abgeschnittene Blockchain-Struktur keinen Block mehr, welcher durch einen entsprechenden Platzhalter als erster Block gekennzeichnet ist. Somit kann allein am Fehlen des entsprechenden Platzhalters ohne weiteren Aufwand erkannt werden, dass die entsprechende Blockchain-Struktur nicht vollständig ist. Nach Ausführungsformen umfasst der Platzhalter beispielsweise eine oder mehrere Nullen bzw. besteht ausschließlich aus einer oder mehreren Nullen.

Nach Ausführungsformen umfasst der erste Block der Blockchain-Struktur einen kombinierten Prüfwert $KPW_1$ des ersten Blocks, welcher wie folgt berechnet wurde:

$$KPW_1 = Hash\{PH_1 + PW_1\},$$

wobei $PH_1$ den Platzhalter des ersten Blocks und $PW_1$ einen Prüfwert des ersten Blocks bezeichnet. Der Prüfwert des ersten Blocks etabliert eine bidirektionale Verknüpfung mit dem zweiten Block der Blockchain-Struktur. Dabei wurde der Prüfwert des ersten Blocks unter Verwendung eines Hashwerts berechnet wird, dessen Berechnung ein Anwenden der Hashfunktion auf die in dem ersten Block gespeicherten Daten und die in dem zweiten Block gespeicherten Daten umfasst. Nach einer alternativen Notation wurde der kombinierte Prüfwert $KPW_1$ des ersten Blocks wie folgt berechnet:

$$KPW_1 = Hash\{PH_1 + PW1_1\},$$

wobei $PH_1$ den Platzhalter des ersten Blocks und $PW1_1$ einen Prüfwert des ersten Blocks bezeichnet.

Ausführungsformen können den Vorteil haben, dass ein effizientes und sicheres Verfahren zum Berechnen des kombinierten Prüfwerts $KPW_1$ des ersten Blocks der Blockchain-Struktur bereitgestellt wird.

Nach Ausführungsformen weisen die Blöcke der Blockchain-Struktur jeweils eine quadratische (MxM)-Matrixstruktur auf, wobei M eine natürliche Zahl größer-gleich zwei ist. Nach Ausführungsformen werden die gespeicherten Daten der Blöcke der Blockchain-Struktur jeweils von Einträgen einer quadratischen Untermatrix der Matrixstruktur des entsprechenden Blocks umfasst.

Ausführungsformen können den Vorteil haben, dass sie eine Strukturierung der Blöcke bereitstellen, welche ein effektives Erkennen der Daten und Prüfwerte und/oder Berechnen der Prüfwerte ermöglicht. Nach Ausführungsformen wird der erste Prüfwert eines entsprechenden Blocks von einem oder mehreren Einträgen bzw. Elementen einer Spalte oder Zeile der quadratische (MxM)-Matrixstruktur umfasst. Nach Ausführungsformen wird der erste Prüfwert von der M-ten Spalte oder Zeile oder von der ersten Spalte oder Zeile der quadratische (MxM)-Matrixstruktur umfasst. Nach Ausführungsformen wird der zweite Prüfwert des entsprechenden Blocks von einem oder mehreren Einträgen bzw. Elementen einer Zeile oder Spalte der quadratische (MxM)-Matrixstruktur umfasst. Nach Ausführungsformen wird der erste Prüfwert von der M-ten Zeile oder Spalte oder von der ersten Zeile oder Spalte der quadratische (MxM)-Matrixstruktur umfasst. Nach Ausführungsformen wird der kombinierte Prüfwert des entsprechenden Blocks von dem Element $a_{MM}$ oder $a_{11}$ der quadratische (MxM)-Matrixstruktur umfasst. Nach Ausführungsformen handelt es sich bei der quadratischen Untermatrix um eine [(M-1)x(M-1)]-Matrix.

Nach Ausführungsformen umfassen das Berechnen des ersten Prüfwerts des letzten Blocks und das Berechnen des Prüfwerts des zusätzlichen Blocks:

- Berechnen einer Kombination aus den in dem letzten Block gespeicherten Daten und den in dem zusätzlichen Block gespeicherten Daten,
- Berechnen eines Hashwerts der Kombination aus den in dem letzten Block gespeicherten Daten und den in dem zusätzlichen Block gespeicherten Daten,
- Aufteilen des Hashwerts der Kombination aus den in dem letzten Block gespeicherten Daten und den in dem zusätzlichen Block gespeicherten Daten, in einen ersten Teil und einen zweiten Teil, wobei der erste Prüfwert des letzten Blocks den ersten Teil umfasst und wobei der Prüfwert des zusätzlichen Blocks den zweiten Teil umfasst.

Ausführungsformen können den Vorteil haben, dass sie ein effektives Verfahren zum Berechnen der beiden Prüfwerte des letzten und des zusätzlichen Blocks bereitstellen. Nach Ausführungsformen sind die beiden resultierenden Prüfwerte des letzten und des zusätzlichen Blocks somit unterschiedlich.

Nach Ausführungsformen umfasst die Kombination aus den in dem letzten Block gespeicherten Daten und den in dem zusätzlichen Block gespeicherten Daten ein Produkt der Untermatrix des letzten Blocks, deren Einträge die in dem letzten Block gespeichert Daten umfassen, und der Untermatrix des vorletzten Blocks, deren Einträge die in dem zusätzlichen Block zu speichernden Daten umfassen. Nach Ausführungsformen werden der erste Prüfwert $PW1_N$ des letzten Blocks und der Prüfwert $PW2_N$ des zusätzlichen Blocks wie folgt berechnet:

$$Hash\{D_N * D_{N+1}\} = PW1_N + PW2_N,$$

wobei $D_N$ die Untermatrix des letzten Blocks bezeichnet, deren Einträge die gespeicherten Daten des letzten Blocks umfassen, und $D_{N+1}$ die Untermatrix des zusätzlichen Blocks bezeichnet, deren Einträge die gespeicherten Daten des zusätzlichen Blocks umfassen.

Ausführungsformen können den Vorteil haben, dass die aus der Matrixmultiplikation $D_N * D_{N+1}$ resultierende eindeutige Matrix als Eingabe für eine Hashfunktion verwendet wird. Durch die mathematische Eindeutigkeit der Matrixmultiplikation kann sichergestellt werden, dass sich eine Manipulation der Daten im letzten Block N oder im zusätzlichen Block N+1 in einer Veränderung des berechneten Hashwertes und damit in dem ersten Prüfwert des letzten Blocks und dem Prüfwert des zusätzlichen Blocks bemerkbar macht.

Nach Ausführungsformen umfasst das Berechnen des zweiten Prüfwerts des letzten Blocks:

- Berechnen einer Kombination aus den in einem vorletzten Block der Blockchain-Struktur gespeicherten Daten und den in dem letzten Block gespeicherten Daten,

- Berechnen eines Hashwerts der Kombination aus den in dem vorletzten Block gespeicherten Daten und den in dem letzten Block gespeicherten Daten,
- Aufteilen des Hashwerts der Kombination aus den in dem vorletzten Block gespeicherten Daten und den in dem letzten Block gespeicherten Daten, in einen ersten Teil und einen zweiten Teil, wobei ein Prüfwert des vorletzten Blocks den ersten Teil umfasst und wobei der zweite Prüfwert des letzten Blocks den zweiten Teil umfasst.

Ausführungsformen können den Vorteil haben, dass der Prüfwert des vorletzten Blocks und der zweite Prüfwert des letzten Blocks analog zu dem ersten Prüfwert des letzten Blocks und dem Prüfwert des zusätzlichen Blocks berechnet werden. Nach Ausführungsformen umfasst die Kombination aus den in dem vorletzten Block gespeicherten Daten und den in dem letzten Block gespeicherten Daten ein Produkt der Untermatrix des vorletzten Blocks, deren Einträge die in dem vorletzten Block gespeichert Daten umfassen, und der Untermatrix des letzten Blocks, deren Einträge die in dem letzten Block zu speichernden Daten umfassen. Nach Ausführungsformen werden der Prüfwert $PW1_{N-1}$ des vorletzten Blocks und der zweite Prüfwert $PW2_{N-1}$ des letzten Blocks wie folgt berechnet:

$$\mathrm{Hash}\{D_{N-1} * D_N\} = PW1_{N-1} + PW2_{N-1},$$

wobei $D_{N-1}$ die Untermatrix des vorletzten Blocks bezeichnet, deren Einträge die gespeicherten Daten des vorletzten Blocks umfassen, und $D_N$ die Untermatrix des letzten Blocks bezeichnet, deren Einträge die gespeicherten Daten des letzten Blocks umfassen.

Nach Ausführungsformen sind der erste Prüfwert des letzten Blocks und der Prüfwert des zusätzlichen Blocks identisch. Ausführungsformen können den Vorteil haben, dass die Berechnung der entsprechenden Prüfwerte effizient erfolgen kann und jeder der beiden Prüfwerte für sich genommen eine Prüfung der bidirektionalen Verknüpfung zwischen dem letzten Block und dem zusätzlichen Block ermöglicht.

Nach Ausführungsformen wird der erste Prüfwert $PW_N$ des letzten Blocks wie folgt berechnet:

$$PW_N = \mathrm{Hash}\{D_{N+1} + \mathrm{Hash}[D_N + PW_{N-1}]\},$$

wobei $D_{N+1}$ die zu speichernden Daten des zusätzlichen Blocks, $D_N$ die gespeicherten Daten des letzten Blocks und $PW_{N-1}$ den zweiten Prüfwert des letzten Blocks bezeichnet.

Nach Ausführungsformen wurde der zweite Prüfwert $PW_{N-1}$ des letzten Blocks wie folgt berechnet:

$$PW_{N-1} = \mathrm{Hash}\{D_N + \mathrm{Hash}[D_{N-1} + PW_{N-2}]\},$$

wobei $D_N$ die gespeicherten Daten des letzten Blocks, $D_{N-1}$ die gespeicherten Daten des vorletzten Blocks und $PW_{N-2}$ einen Prüfwert des vorletzten Blocks bezeichnet.

Ausführungsformen können den Vorteil haben, dass ausgehend von dem ersten Block der Blockchain mit dem Prüfwert $PW_1$ alle Prüfwerte der nachfolgenden Blöcke berechnet werden können. Beispielsweise wird $PW_1$ wie folgt berechnet wird:

$$PW_1 = \mathrm{Hash}\{D_2 + \mathrm{Hash}[D_1 + PH_1]\},$$

wobei $D_2$ die gespeicherten Daten des zweiten Blocks, $D_1$ die gespeicherten Daten des ersten Blocks und $PH_1$ den Platzhalter des ersten Blocks bezeichnet, welcher den ersten Block als ersten Block der Blockchain-Struktur kennzeichnet. Die Berechnung kann dabei bei jedem beliebigen Block der Blockchain-Struktur ausgehend von einem Prüfwert des entsprechenden Blocks begonnen werden. Hervorzuheben ist, dass jeder dieser Prüfwerte gemäß den obenstehenden Formeln von den Daten der beiden durch diesen Prüfwert bidirektional miteinander zu verkettenden Blöcke sowie von den Daten aller vorangehenden Blöcke abhängt.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Im Weiteren werden Ausführungsformen der Erfindung mit Bezugnahme auf die Zeichnungen näher erläutert. Es zeigen:

Figur 1 ein schematisches Blockdiagramm einer Ausführungsform einer exemplarischen Dokumentenblockchain-Struktur,

Figur 2 ein schematisches Blockdiagramm einer Ausführungsform einer exemplarischen Dokumentenblockchain-Struktur,

Figur 3 ein schematisches Blockdiagramm einer Ausführungsform einer exemplarischen Dokumentenblockchain-Struktur,

Figur 4 ein schematisches Blockdiagramm einer Ausführungsform einer exemplarischen Dokumentenblockchain-Struktur,

Figur 5 ein schematisches Blockdiagramm einer Ausführungsform eines exemplarischen Datenverarbeitungssystems,

Figur 6 ein schematisches Blockdiagramm einer Ausführungsform eines exemplarischen Datenverarbeitungssystems,

Figur 7 ein schematisches Blockdiagramm einer Ausführungsform einer exemplarischen Berechtigungsblockchain-Struktur,

Figur 8 ein schematisches Flussdiagramm eines exemplarischen Verfahrens zum Hinzufügen eines Dokuments,

Figur 9 ein schematisches Flussdiagramm eines exemplarischen Verfahrens zur Zugriffsteuerung auf Attribute,

Figur 10 ein schematisches Blockdiagramm einer Ausführungsform eines exemplarischen Datenverarbeitungssystems,

Figur 11 ein schematisches Blockdiagramm einer Ausführungsform einer exemplarischen linearen Blockchain-Unterstruktur,

Figur 12 ein schematisches Flussdiagramm eines exemplarischen Verfahrens zum Erstellen einer bidirektionalen Blockchain-Unterstruktur,

Figur 13 ein schematisches Flussdiagramm eines exemplarischen Verfahrens zum Erstellen einer bidirektionalen Blockchain-Unterstruktur,

Figur 14 ein schematisches Blockdiagramm eines exemplarischen Verfahrens zum Erstellen eines kombinierten blockabhängigen Prüfwerts,

Figur 15 ein schematisches Flussdiagramm eines exemplarischen Verfahrens zum Erstellen eines kombinierten blockabhängigen Prüfwerts,

Figur 16 ein schematisches Blockdiagramm einer Ausführungsform einer exemplarischen linearen Blockchain-Unterstruktur,

Figuren 17 schematische Blockdiagramme von ersten Ausführungsformen eines ersten Blocks der Blockchain-Unterstruktur aus Figur 16,

Figuren 18 schematische Blockdiagramme von ersten Ausführungsformen eines letzten Blocks der Blockchain-Unterstruktur aus Figur 16,

Figuren 19 schematische Blockdiagramme von ersten Ausführungsformen des letzten Blocks der Blockchain-Unterstruktur aus Figur 16,

Figuren 20 schematische Blockdiagramme von ersten Ausführungsformen eines zusätzlichen Blocks der Blockchain-Unterstruktur aus Figur 16,

Figur 21 ein schematisches Flussdiagramm eines exemplarischen Verfahrens zum Hinzufügen eines zusätzlichen Blocks,

Figur 22 ein schematisches Flussdiagramm eines exemplarischen Verfahrens zum Hinzufügen eines zusätzlichen Blocks,

Figuren 23 schematische Blockdiagramme von zweiten Ausführungsformen eines ersten Blocks der Blockchain-Unterstruktur aus Figur 16,

Figuren 24 schematische Blockdiagramme von zweiten Ausführungsformen eines letzten Blocks der Blockchain-Unterstruktur aus Figur 16,

Figuren 25 schematische Blockdiagramme von zweiten Ausführungsformen des letzten Blocks der Blockchain-Unterstruktur aus Figur 16, und

Figuren 26 schematische Blockdiagramme von zweiten Ausführungsformen eines zusätzlichen Blocks der Blockchain-Unterstruktur aus Figur 16.

Elemente der nachfolgenden Ausführungsformen, die einander entsprechen, werden mit denselben Bezugszeichen gekennzeichnet.

Figur 1 zeigt eine Ausführungsform einer exemplarischen nichtlinearen Dokumentenblockchain-Struktur 100 mit einer Mehrzahl von Dokumenten 102. Die nichtlineare Dokumentenblockchain-Struktur 100 umfasst eine Mehrzahl von linearen Blockchain-Unterstrukturen 104, 108, 110. Jede der linearen Blockchain-Unterstrukturen 104, 108, 110 umfasst jeweils eine Mehrzahl von bidirektional miteinander verknüpften Blöcken. Jedem der Dokumente 102 ist jeweils ein Block $D_1$, $D_2$, ..., $D_N$ in einer Hauptstruktur 104 der Dokumentenblockchain-Struktur 100 zugeordnet, welche von einer der linearen Blockchain-Unterstrukturen 104, 108, 110 der Dokumentenblockchain-Struktur 100 gebildet wird.

Jedes der Dokumente 102 umfasst eine dokumentenindividuelle Nebenstruktur 106. Die Blöcke $D_1$, $D_2$, ..., $D_N$ der Hauptstruktur 104 bilden jeweils einen Anfangsblock einer von der Nebenstruktur 106 umfassten linearen Blockchain-Unterstruktur 108. Die Blöcke der linearen Blockchain-Unterstruktur 108, z.B. $G^1_1$, ..., $G^N_Q$, sind jeweils einer Attributgruppe $G^1_1$, ..., $G^N_Q$ des entsprechenden Dokuments 102 zugeordnet. Eine solche Attributgruppe $G^1_1$, ..., $G^N_Q$ entspricht beispielsweise einer Seite eines äquivalenten Dokuments in Papierform und/oder fasst thematisch zusammengehörige Attribute $A^N_{11}$, ..., $A^N_{1S}$ bzw. $A^N_{Q1}$, ..., $A^N_{QR}$ zusammen. Die Blöcke, etwa $G^1_1$, ..., $G^N_Q$, der linearen Blockchain-Unterstrukturen 108 bilden jeweils einen Anfangsblock weiterer von der Nebenstruktur 106 umfasster linearer Blockchain-Unterstrukturen 110. Die Attribute, z.B. $A^N_{11}$, ..., $A^N_{1S}$ bzw. $A^N_{Q1}$, ..., $A^N_{QR}$, der Attributgruppen, z.B. $G^1_1$, ..., $G^N_Q$, sind über die Blöcke der linearen Blockchain-Unterstrukturen 110 verteilt gespeichert. Beispielsweise ist in jedem der Blöcke der linearen Blockchain-Unterstrukturen 110 jeweils ein Attribut, z.B. $A^N_{11}$, ..., $A^N_{1S}$ bzw. $A^N_{Q1}$, ..., $A^N_{QR}$, des entsprechenden Dokuments $D_N$ gespeichert. Durch eine selektive Zugriffsteuerung auf die individuellen Blöcke der Dokumentenblockchain-Struktur 100 kann eine selektive Zugriffsteuerung auf die individuellen, von den Dokumenten der Dokumentenblockchain-Struktur 100 umfassten Attribute implementiert werden.

Figur 2 zeigt eine Ausführungsform einer exemplarischen nichtlinearen Dokumentenblockchain-Struktur 100, welche eine Mehrzahl von Ergänzung- oder Änderungsdokumenten 107 zu dem Dokument D2 umfasst. Dem Dokument D2 ist eine Ergänzung- oder Änderungsstruktur 105 zugeordnet. Die Ergänzung- oder Änderungsstruktur 105 umfasst eine lineare Blockchain-Unterstruktur 109. Jeder der Blöcke $D_{2.1}$, $D_{2.2}$, ..., $D_{2.N}$ ist jeweils einem der Ergänzung- oder Änderungsdokumenten des Dokuments D2 zugeordnet. Die Blöcke $D_{2.1}$, $D_{2.2}$, ..., $D_{2.N}$ der linearen Blockchain-Unterstruktur 109 bilden jeweils einen Anfangsblock einer von der Ergänzung-oder Änderungsstruktur 105 umfassten linearen Blockchain-Unterstruktur 108. Die Blöcke der linearen Blockchain-Unterstrukturen 108 bilden jeweils einen Anfangsblock weiterer von der Ergänzung- oder Änderungsstruktur 105 umfasster linearer Blockchain-Unterstrukturen 110. Analog zu den Nebenstrukturen 106 der Dokumente 102 aus Figur 1 sind die Blöcke der linearen Blockchain-Unterstrukturen 108 Attributsgruppen $G^{2.1}_1$, ..., $G^{2.1}_I$ zugeordnet, deren Attribute $A^{2.1}_{11}$, ..., $A^{2.1}_{I1}$ über die Blöcke der linearen Blockchain-Unterstrukturen 110 verteilt gespeichert sind. Beispielsweise ist in jedem der entsprechenden Blöcke jeweils ein Attribut gespeichert.

Figur 3 zeigt eine Ausführungsform einer exemplarischen nichtlinearen Dokumentenblockchain-Struktur 100, in welcher nur die umfassten Dokumente 102, 112, 114, nicht deren Unterstrukturen, dargestellt sind. Die Dokumentenblockchain-Struktur 100 umfasst in einer linearen Hauptstruktur eine Mehrzahl von Dokumenten 102 eines Nutzers beginnend mit einer Geburtsurkunde und, im Todesfall des Nutzers, endend mit einer Sterbeurkunde. Die Dokumenten 102 der linearen Hauptstruktur werden durch Änderungsdokumente 112 und Ergänzungsdokumente 114 geändert oder ergänzt, wobei die Änderungsdokumente 112 und Ergänzungsdokumente 114 in Nebenzweigen, d.h. Änderungs- und Ergänzungsstrukturen, an die Dokumenten 102 der linearen Hauptstruktur angehängt werden. Bei einer Änderung kann es sich beispielsweise um eine Adressänderung für einen Personalausweis handeln. Bei einer Ergänzung kann es sich beispielweise Visa zu einem Reisepass oder Anlagen zu einem Arbeitsvertrag handeln.

Figur 4 zeigt eine weitere exemplarische Ausführungsform, welche eine Mehrzahl von Dokumentenblockchain-Strukturen 100 eines Nutzers aus unterschiedlichen Bereichen umfasst, welche miteinander Verknüpft sind. Dokumentenblockchain-Strukturen 100 sind exemplarisch für folgende Bereich dargestellt: Vermögen, Steuer, Rente, Leben, Gesundheit, Versicherung. Die Dokumentenblockchain-Strukturen 100 des Bereichs Leben beginnt mit der Geburtsurkunde des Nutzers und endet mit dessen Sterbeurkunde, kann somit das gesamte Leben des Nutzers umfassen.

Figur 5 zeigt eine exemplarische Ausführungsform einer selektiven Zugriffsteuerung auf Attribute einer Mehrzahl von Dokumenten, welche in Form einer Dokumentenblockchain-Strukturen 100 eines Nutzers 120 bereitgestellt werden. Die Dokumentenblockchain-Strukturen 100 ist auf einem verteilten Datenspeichersystem 122 gespeichert. Mit einem Telekommunikationssystem 121, etwa einem Smartphone oder einem PC, authentifiziert sich der Nutzers 120 gegenüber einem Berechtigungsmanagementsystem, welches die Zugriffsrechte auf die individuellen Blöcke der Dokumentenblockchain-Strukturen 100 verwaltet. Der Nutzers 120 wählt einen zweiten Nutzer 128, welchem er Zugriffsrechte auf ein oder mehrere Attribute, d.h. Blöcke, der Dokumentenblockchain-Strukturen 100 gewähren möchte, aus einer Identitätsliste, möglicher weiterer Nutzer aus, und berechtigt diesen zu den entsprechenden Zugriffen. Die Zugriffsrechte werden mittels ein oder mehrerer Berechtigungsblockchain-Strukturen verwaltet. Beispielsweise ist jedem der Blöcke der Dokumentenblockchain-Strukturen 100 jeweils eine individuelle Berechtigungsblockchain-Strukturen zugeordnet. Dem Nutzer 128 wird ein Zugriffrecht auf einen der Blöcke der Dokumentenblockchain-Strukturen 100 gewährt, indem ein zusätzlicher Block zu der Berechtigungsblockchain-Struktur des entsprechenden Blocks der Dokumentenblockchain-Strukturen 100 hinzugefügt wird, welcher den Nutzer 128 als zugriffberechtigten Nutzer identifiziert.

Figur 6 zeigt die verteilte Struktur des Datenspeichersystem 122 aus Figur 4. Das Datenspeichersystem 122 umfasst eine Mehrzahl von räumlich getrennten individuellen Datenspeichersystemen 122.1, 122.2, ..., 122.N, welche unabhängig voneinander sind. Die Dokumentenblockchain-Strukturen 100 bzw. die Dokumente und/oder die Blöcke der Dokumentenblockchain-Strukturen 100 sind verteilt über die Datenspeichersystem 122.1, 122.2, ..., 122.N gespeichert. Die Datenspeichersystem 122.1, 122.2, ..., 122.N kommunizieren beispielsweise über ein Netzwerk, etwa das Internet, mittel kryptographisch gesicherter Kommunikationskanäle. Die Datenspeichersystem 122.1, 122.2, ..., 122.N bilden somit gemeinsam das Datenspeichersystem 122. Beispielweise sind die Datenspeichersystem 122.1, 122.2, ..., 122.N jeweils einer Instanz zugeordnet, welche Dokumente ausstellt. Jede Instanz, wie etwa eine Behörde, ein Amt, ein Unternehmen oder eine natürliche Person, speichert die von der entsprechenden Instanz ausgestellten Dokumente auf dem der entsprechenden Instanz zugeordneten Datenspeichersystem 122.1, 122.2, ..., 122.N.

Figur 7 zeigt eine exemplarische Berechtigungsblockchain-Struktur 130, welche die Zugriffsrechte auf einen der Blöcke der Dokumentenblockchain-Strukturen 100 verwaltet. Ein Anfangsblock 132 der Berechtigungsblockchain-Struktur 130 umfasst ein Zugriffs-Zertifikat $Z_Z$, welches ein Zugriffsrecht gewährt. Die weiteren Blöcke der Berechtigungsblockchain-Struktur 130 umfassen jeweils ein Nutzer-Zertifikat $Z_{N1}$, $Z_{N2}$, $Z_{N3}$ von Nutzern N1, N2, N3, welchen das Zugriffsrecht gemäß Zugriffs-Zertifikat $Z_Z$ auf den Block gewährt wird, welchem die Berechtigungsblockchain-Struktur 130 zugeordnet ist. Nach Ausführungsformen erfolgt die Zuordnung beispielsweise über Metadaten, welche etwa das Berechtigungsmanagementsystem verwaltet und die sowohl die Berechtigungsblockchain-Struktur 130 als auch den zugeordneten Block der Dokumentenblockchain-Strukturen 100 identifizieren. Die Blöcke der Berechtigungsblockchain-Struktur 130 sind beispielsweise bidirektional miteinander verknüpft.

Figur 8 zeigt ein exemplarische Verfahren zum Erweiterten einer Dokumentenblockchain-Struktur. In Schritt 400 wird ein Dokument ausgestellt. Das Ausstellen umfasst beispielsweise ein Erstellen der von dem Dokument umfassten Daten, d.h. Attribut, in digital codierter Form. Die einzelnen Attribute werden jeweils signiert. Nach Ausführungsformen kann es sich bei den Attributen um einzelne Datenwerte oder um Datenblöcke handeln. In Schritt 402 stimmt der Nutzer einem Hinzufügen des Dokuments zu der Dokumentenblockchain-Struktur zu. In Schritt 404 werden die Blöcke des Dokuments zu der einer Dokumentenblockchain-Struktur hinzugefügt. Das Hinzufügen umfasst beispielsweise ein Erstellen der entsprechenden Blöcke sowie ein bidirektionales Verknüpfen der erstellten Blöcke untereinander und/oder mit bestehenden Blöcken der Dokumentenblockchain-Struktur. Ferner werden Metadaten erstellt, welche etwa von einem Berechtigungsmanagement-System verwaltet erden und die Speicherorte der Blöcke des Dokuments identifizieren. Beispielsweise kann für jeden der Blöcke jeweils ein Anfangsblock einer Berechtigungsblockchain-Struktur erstellt werden, welche ein Zugriffs-Zertifikat des Nutzers für einen Zugriff auf den jeweiligen Block des Dokuments umfassen. Zudem können die Metadaten für jeden der Blöcke jeweils die zugehörige Blockchain-Struktur identifizieren. Schließlich können inertial oder sukzessive zusätzliche Blöcke zu der Berechtigungsblockchain-Struktur hinzugefügt werden, welche jeweils einen weiteren Nutzer identifizieren. Beispielsweise umfassen die zusätzlichen Blöcke jeweils ein Zertifikat des entsprechenden Nutzers. Durch das Hinzufügen der Nutzer zu der Berechtigungsblockchain-Struktur wird diesen ein Zugriffsrecht zum Zugriff auf den entsprechenden Block der Dokumentenblockchain-Struktur erstellt, welchem die Berechtigungsblockchain-Struktur zugeordnet ist. nach Ausführungsformen besteht die Zustimmung des Nutzers zu der Aufnahme des zusätzlichen Dokuments in die Dokumentenblockchain-Struktur in einer Zustimmung bzw. einem Ausführen der Erstellung der Metadaten sowie der Berechtigungsblockchain-Strukturen für die entsprechenden Blöcke des zusätzlichen Dokuments. Bei dem zusätzlichen Dokument kann es sich um ein zusätzliches Dokument für die Hauptstruktur der Dokumentenblockchain-Struktur, eine Ergänzungsdokument zu einem bestehenden Dokument der Hauptstruktur der Dokumentenblockchain-Struktur oder ein Änderungsdokument zu einem bestehenden Dokument der Hauptstruktur der Dokumentenblockchain-Struktur handeln.

Figur 9 zeigt eine Ausführungsform eines Verfahrens zur Durchführung einer selektiven Zugriffsteuerung auf Attribute einer Mehrzahl von Dokumenten. In Schritt 500 wird eine Dokumentenblockchain-Struktur eines ersten Nutzers bereitgestellt. Die Dokumentenblockchain-Struktur ist nichtlinear und umfasst eine Mehrzahl von linearen Blockchain-Unterstrukturen. Jede der linearen Blockchain-Unterstrukturen weist jeweils eine Mehrzahl von bidirektional miteinander verknüpften Blöcken auf. In den Blöcken der Dokumentenblockchain-Struktur sind die Attribute gespeichert, auf welche der Zugriff durch den ersten Nutzer gesteuert wird. Die Blöcke sind beispielsweise über eine Mehrzahl von elektronischen Datenspeichersystemen verteilt gespeichert. In Schritt 502 wird eine Berechtigungsblockchain-Struktur zur Kontrolle der Zugriffsrechte auf die verteilt gespeicherten Blöcke der Dokumentenblockchain-Struktur bereitgestellt. Das Bereitstellen der Berechtigungsblockchain-Struktur erfolgt beispielsweise durch ein elektronisches Berechtigungsmanagementsystem. Die Berechtigungsblockchain-Struktur umfasst einen Anfangsblock sowie ein oder mehrere weitere Blöcke. Diese weiteren Blöcke sind jeweils einem weiteren Nutzer zugeordnet und gewähren diesem ein Zugriffsrecht auf einen der Blöcke der Dokumentenblockchain-Struktur. Beispielweise wird eine Berechtigungsblockchain-Struktur für jeden der Blöcke der Dokumentenblockchain-Struktur bereitgestellt.

In Schritt 504 wird eine Zugriffsberechtigungsanfrage nach einem Zugriffsrecht eines zweiten Nutzers auf einen der Blöcke der persönlichen Dokumentenblockchain-Struktur von dem Berechtigungsmanagementsystem empfangen. Diese Anfrage kann beispielsweise von dem zweiten Nutzer oder von einem der Datenspeichersysteme, auf dessen Block der zweite Nutzer zuzugreifen versucht, stammen. In Schritt 506 wird geprüft, ob der zweite Nutzer ein Zugriffsrecht für den entsprechenden Block besitzt. Hierzu wird geprüft, ob der zweite Nutzer in einen der Blöcke der Berechtigungsblockchain-Struktur für den entsprechenden Block der Dokumentenblockchain-Struktur eingetragen ist. Hierbei können Metadaten verwendet werden, welche den entsprechenden Block der Dokumentenblockchain-Struktur und die zugeordnete Berechtigungsblockchain-Struktur identifizieren und damit einander zuordnen. Ist der zweite Nutzer von der entsprechenden Berechtigungsblockchain-Struktur tatsächlich umfasst, so wird das Zugriffrecht in Schritt 508 bestätigt.

Eine solche Bestätigung kann beispielsweise in Form eines von dem Berechtigungsmanagementsystem ausgestellten Berechtigungstoken. Ferner kann die Bestätigung auch in einem Bereitstellen der Speicheradresse bestehen unter welcher der Block in dem Datenspeichersystem gespeichert ist oder in einem Bereitstellen eines kryptographischen Schlüssels zum Entschlüsseln der von dem Block umfassten Attribute.

In Schritt 510 wird eine Zugriffsanfrage zum Zugreifen auf den entsprechenden Block der Dokumentenblockchain-Struktur empfangen. Beispielsweise empfängt das den entsprechenden Block speichernde Datenspeichersystem die Zugriffsanfrage von dem zweiten Nutzer. Ferner wird in Schritt 512 die entsprechende Bestätigung empfangen. Im Falle einer validen Bestätigung des Zugriffsrechts wird in Schritt 514 der Zugriff auf den angefragten Block der Dokumentenblockchain-Struktur freigegeben.

Nach Ausführungsformen werden beispielsweise eine Mehrzahl von Attributen verschiedener Dokumente angefragt. Die Attribute sind beispielsweise in einer Mehrzahl von Blöcken der Dokumentenblockchain-Struktur über eine Mehrzahl von Datenspeichersystemen verteilt gespeichert. In diesem Fall werden die Zugriffrechte für jeden der entsprechenden Blöcke geprüft und die Zugriffe von den entsprechenden Datenspeichersystemen unter der Voraussetzung einer validen Bestätigung der Zugriffsrechte freigegeben.

Figur 10 zeigt eine ein Computersystem 121 eines ersten Nutzers, beispielsweise ein mobiles tragbares Telekommunikationsgerät, und ein Computersystem 220 eines zweiten Nutzers. Ferner wird ein elektronische Datenverarbeitungssystem 330 gezeigt, welches ein Berechtigungsmanagementsystem 124 und eine Mehrzahl von elektronische Datenspeichersystemen 122.1, 122.2, ..., 122.N umfasst. die Nutzercomputersysteme 121, 220 sowie die Komponenten 122.1-122.N, 124 des Datenverarbeitungssystems 330 sind über ein Netzwerk 320 kommunikativ miteinander verbunden. Eine Kommunikation erfolgt beispielsweise über kryptographisch gesicherte, z.B. verschlüsselte, Kommunikationsverbindungen.

Nutzer-Computersystem 121 des ersten Nutzers umfasst einen Prozessor 202, welcher dazu konfiguriert ist, Programminstruktionen 204 auszuführen. Durch Ausführung der Programminstruktionen 204 steuert der Prozessor 202 das Computersystem 121 so, dass es eine der zuvor beschriebenen Ausführungsformen des kryptographischen Verfahrens zur Durchführung einer selektiven Zugriffsteuerung auf Attribute einer Mehrzahl von Dokumenten oder einzelne Verfahrensschritte desselben ausführt.

Das Computersystem 121 umfasst ferner einen Speicher 206. In dem Speicher ist, beispielsweise in einem geschützten Speicherbereich 208, ein kryptographischer Schlüssel 210 zur kryptographisch gesicherten Kommunikation über das Netzwerk 320 gespeichert. Unter einem geschützten Speicherbereich 208 wird hier ein Bereich des Speichers 206 verstanden, auf den ein Zugriff, das heißt ein Lesezugriff oder ein Schreibzugriff, nur über den Prozessor 202 möglich ist. Nach Ausführungsformen ist der Zugriff von dem mit dem Speicher 206 gekoppelten Prozessor 202 nur dann möglich, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln. Bei dem kryptographischen Schlüssel handelt es sich beispielsweise um einen privaten Schlüssel eines asymmetrischen Schlüsselpaars. Ferner kann das Computersystem 121 zur kryptographisch gesicherten Kommunikation öffentliche kryptographische Schlüssel der verbleibenden Systeme 122.1-122.N, 220, 124 umfassen.

Zudem umfasst das Computersystem 121 eine Kommunikationsschnittstelle 214 zur Kommunikation über das Netzwerk 320 und eine Benutzerschnittstelle, welche beispielsweise eine Display 212, umfasst.

Der erste Nutzer kann sich mit seinem Computersystem 121 gegenüber dem Berechtigungsmanagementsystem 124 authentifizieren, beispielswiese mit dem kryptographischen Schlüssel 210. Der erste Nutzer hat als Inhaber der persönlichen Dokumentenblockchain-Struktur Zugriffsrechte auf alle Blöcke der Dokumentenblockchain-Struktur und kann sich diese beispielsweise auf dem Display 212 anzeigen lassen. Fernere kann der Nutzer einem Hinzufügen weitere Dokumente zu der Dokumentenblockchain-Struktur zustimmen und selektiv Zugriffsrechte auf individuelle Blöcke an weitere Nutzer verteilen bzw. diesen gewähren.

Nutzer-Computersystem 220 des zweiten Nutzers umfasst einen Prozessor 222, welcher dazu konfiguriert ist, Programminstruktionen 224 auszuführen. Durch Ausführung der Programminstruktionen 224 steuert der Prozessor 222 das Computersystem 220 so, dass es eine der zuvor beschriebenen Ausführungsformen des kryptographischen Verfahrens zur Durchführung einer selektiven Zugriffsteuerung auf Attribute einer Mehrzahl von Dokumenten oder einzelne Verfahrensschritte desselben anfragt bzw. initiiert

Das Computersystem 220 umfasst ferner einen Speicher 226. In dem Speicher 226 ist, beispielsweise in einem geschützten Speicherbereich 228, ein kryptographischer Schlüssel 230 zur kryptographisch gesicherten Kommunikation über das Netzwerk 320 gespeichert. Bei dem kryptographischen Schlüssel 230 handelt es sich beispielsweise um einen privaten Schlüssel eines asymmetrischen Schlüsselpaars. Ferner kann das Computersystem 220 zur kryptographisch gesicherten Kommunikation öffentliche kryptographische Schlüssel der verbleibenden Systeme 121, 122.1-122.N, 124 umfassen.

Zudem umfasst das Computersystem 220 eine Kommunikationsschnittstelle 234 zur Kommunikation über das Netzwerk 320 und eine Benutzerschnittstelle, welche beispielsweise ein Display 232, umfasst. Auf eine Bestätigung des Zugriffsrechts des zweiten Nutzers auf einen Block der Dokumentenblockchain-Struktur durch das Berechtigungsmanagementsystem 124, kann das Computersystem 220 über das Netzwerk auf den entsprechenden Block zugreifen, welcher in einem der Speicher 266, 286, 306 der Dateispeichersysteme 122.1, 122.2, 122.N gespeichert ist. Hierzu empfängt das Computersystem 220 ferner eine Angabe unter welcher Speicheradresse der entsprechende Block gespeichert ist. Die entsprechenden Speicheradressen werden beispielswiese durch das Berechtigungsmanagementsystem 124 in Form der Metadaten 250 verwaltet.

Das elektronische Datenverarbeitungssystem 330 umfasst eine Mehrzahl von Dateispeichersystemen 122.1, 122.2, 122.N. Die Dateispeichersysteme 122.1, 122.2, 122.N umfassen jeweils einen Prozessor 262, 282, 302, welcher dazu konfiguriert ist, Programminstruktionen 264, 284, 304 auszuführen. Durch Ausführung der Programminstruktionen 264, 284, 304 steuert der Prozessor 262, 282, 302 das jeweilige Dateispeichersysteme 122.1, 122.2, 122.N so, dass es eine der zuvor beschriebenen Ausführungsformen des kryptographischen Verfahrens zur Durchführung einer selektiven Zugriffsteuerung auf Attribute einer Mehrzahl von Dokumenten oder einzelne Verfahrensschritte desselben ausführt.

Die Dateispeichersysteme 122.1, 122.2, 122.N umfassen ferner jeweils einen Speicher 266, 286, 306. Über die Speicher 266, 286, 306 der Dateispeichersysteme 122.1, 122.2, 122.N verteilt sind die Blöcke 268, 288, 308 der Dokumentenblockchain-Struktur gespeichert. Nach Ausführungsformen sind die Dateispeichersysteme 122.1, 122.2, 122.N jeweils einer Instanz zugeordnet, welche ein oder mehrere Dokumente der Dokumentenblockchain-Struktur ausstellt, wobei die Dateispeichersysteme 122.1, 122.2, 122.N jeweils die Blöcke derjenigen Dokumente speichern, welche der jeweiligen Instanz ausgestellt wurden.

Ferner umfassen die Dateispeichersysteme 122.1, 122.2, 122.N in den Speichern 266, 286, 306, beispielweise in geschützten Speicherbereich 270, 290, 310, jeweils einen dem entsprechenden Dateispeichersysteme 122.1, 122.2, 122.N zugeordneten kryptographischer Schlüssel 272, 292, 312 zur kryptographisch gesicherten Kommunikation über das Netzwerk 320. Bei dem kryptographischen Schlüssel handelt es sich beispielsweise jeweils um einen privaten Schlüssel eines asymmetrischen Schlüsselpaars. Ferner können die Dateispeichersysteme 122.1, 122.2, 122.N zur kryptographisch gesicherten Kommunikation öffentliche kryptographische Schlüssel der verbleibenden Systeme 121, 122.1-122.N, 220, 124 umfassen. Die kryptographischen Schlüssel 272, 292, 312 können ferner als Signaturschlüssel zur Signatur von Blöcke 268, 288, 308 der Dokumentenblockchain-Struktur dienen, welche von dem entsprechenden Dateispeichersysteme 122.1, 122.2, 122.N erstellt werden.

Zudem umfasst die Dateispeichersysteme 122.1, 122.2, 122.N jeweils eine Kommunikationsschnittstelle 214 zur Kommunikation über das Netzwerk 320.

Schließlich umfasst das elektronische Datenverarbeitungssystem 330 noch ein Berechtigungsmanagementsystem 124, über welches der erste Nutzer Zugriffe auf die Attribute der von der Dokumentenblockchain-Struktur umfassten Dokumente selektiv steuern kann.

Das Berechtigungsmanagementsystem 124 umfasst einen Prozessor 242, welcher dazu konfiguriert ist, Programminstruktionen 244 auszuführen. Durch Ausführung der Programminstruktionen 244 steuert der Prozessor 242 das Berechtigungsmanagementsystem 124 so, dass es eine der zuvor beschriebenen Ausführungsformen des kryptographischen Verfahrens zur Durchführung einer selektiven Zugriffsteuerung auf Attribute einer Mehrzahl von Dokumenten oder einzelne Verfahrensschritte desselben ausführt.

Das Berechtigungsmanagementsystem 124 umfasst ferner einen Speicher 246. In dem Speicher 246 ist, beispielweise in einem geschützten Speicherbereich 254, ein kryptographischer Schlüssel 256 zur kryptographisch gesicherten Kommunikation über das Netzwerk 320 gespeichert. Bei dem kryptographischen Schlüssel 256 handelt es sich beispielsweise um einen privaten Schlüssel eines asymmetrischen Schlüsselpaars. Ferner kann das Berechtigungsmanagementsystem 124 zur kryptographisch gesicherten Kommunikation öffentliche kryptographische Schlüssel der verbleibenden Systeme 121, 122.1-122.N, 220 umfassen. Beispielsweise dient der kryptographische Schlüssel 256 als Signatur zur Bestätigung von Zugriffsrechten durch das Berechtigungsmanagementsystem 124, etwa in Form von Berechtigungstoken.

Zur Verwaltung von Zugriffsrechten erfolgt unter Verwendung einer Berechtigungsblockchain-Struktur 130. Beispielsweise ist in dem Speicher 246 des Berechtigungsmanagementsystem 124 eine Berechtigungsblockchain-Struktur 130 für jeden Block 268, 288, 308 der Dokumentenblockchain-Struktur. Ist der zweite Nutzer von einem Block einer der Berechtigungsblockchain-Strukturen 130 umfasst, so verfügt er über ein Zugriffsrecht auf den entsprechenden Block der Dokumentenblockchain-Struktur. Eine Eintragung des zweiten Nutzers in die Berechtigungsblockchain-Strukturen 130 erfolgt unter Veranlassung des ersten Nutzers, welcher den zweiten Nutzer beispielsweise als einen zu berechtigenden Nutzer aus einer Identitätsliste 126 möglicher Nutzer auswählt. Ferner sind in dem Speicher 246 Metadaten 250 gespeichert, die identifizieren welche Berechtigungsblockchain-Strukturen 130 welchen Blöcken 268, 288, 308 der Dokumentenblockchain-Struktur zugeordnet sind. Dabei umfassen die Metadaten 250 beispielsweise auch die Speicheradressen der Blöcken 268, 288, 308 der Dokumentenblockchain-Struktur in den Speichern 266, 286, 306 der Dateispeichersysteme 122.1, 122.2, 122.N. Ferner umfassen die Metadaten 250 nach Ausführungsformen Informationen, welche eine Darstellung der vollständigen Dokumentenblockchain-Struktur für den ersten Nutzer in Normalform ermöglichen, d.h. in einer Darstellung, aus welcher die logischen Abhängigkeiten der Blöcke bzw. Dokumente untereinander ersichtlich sind.

Zudem umfasst das Berechtigungsmanagementsystem 124 eine Kommunikationsschnittstelle 258 zur Kommunikation über das Netzwerk 320.

Figur 11 zeigt eine Ausführungsform einer exemplarischen linearen Blockchain-Struktur 600, welche N-Blöcke 602, 604, 606, 608, 610 umfasst. Bei der linearen Blockchain-Struktur kann es sich beispielsweise um eine der lineare Blockchain-Unterstruktur der nichtlinearen Dokumentenblockchain-Struktur oder um eine der Berechtigungsblockchain-Struktur handeln. Die Blockchain-Struktur 600 soll um einen zusätzlichen Block 612 erweitert werden. Die Blöcke 602, 604, 606, 608, 610 der Blockchain-Struktur 600 sind durch blockabhängige bidirektionale Verkettungsfunktionen miteinander verkettet. Die einzelnen bidirektionalen Verbindungen bzw. Verkettungen $V_1$, $V_{M-2}$, $V_{M-1}$ sind schematisch angedeutet durch Doppelpfeile. Die inneren Blöcke 604, 606, 608 der Blockchain-Struktur 600 umfassen jeweils eine gemeinsame blockabhängige Verkettungsfunktion. In diese gemeinsame blockabhängige Verkettungsfunktion können entweder ein Prüfwert jeder der beiden bidirektional miteinander verketteten als Parameter eingehen. Ferner kann aus den Prüfwerten ein kombinierter Prüfwert berechnet werden und zur Auswahl der blockabhängigen Verkettungsfunktion herangezogen werden. Schließlich kann für jeden der Prüfwerte jeweils eine Funktion ausgewählt werden, welche zur gemeinsame blockabhängige Verkettungsfunktion kombiniert werden. Die entsprechende gemeinsame blockabhängige Verkettungsfunktion wird zu beiden bidirektional miteinander zu verkettenden Blöcken hinzugefügt.

Der Prüfwert der Verkettungsfunktion zum Verketten des letzten Blocks 610 der Blockchain-Struktur 600 in dem zusätzlichen Block 612, d.h. zum Erzeugen der bidirektionalen Verbindung $V_M$, ist sowohl abhängig von Daten, welche in dem letzten Block 610 gespeichert sind, als auch von Daten, welche in dem zusätzlichen Block 612 zu speichern sind. Somit stellt die im Zuge der bidirektionalen Verkettung in dem letzten Block 610 und dem zusätzlichen Block 612 gespeicherte gemeinsame Verkettungsfunktion nur solange eine korrekte Prüffunktion basierend auf korrekten Prüfwerten der beiden entsprechenden Blöcke dar, solange die Daten beider Blöcke unverändert bleiben. Im Falle einer Manipulation, beispielsweise des zusätzlichen Blocks 612, passt die entsprechende Verkettungsfunktion der Verbindung zwischen dem letzten Block 610 und dem zusätzlichen Block 612 nicht mehr zu den Daten des zusätzlichen Blocks 612. Anhand dieser Abweichung lässt sich eine entsprechende Manipulation erkennen.

Figur 12 zeigt ein schematisches Blockdiagramm des Verfahrens zum Erweitern der Blockchain 600 aus Figur 11 um den Block 612. Die Blöcke 606, 608, 610 der Blockchain-Struktur 600 umfassen jeweils eine blockabhängige Verkettungsfunktion, welche schematisch durch Funktionskurven angedeutet sind. Die Blöcke in der Blockchain-Struktur 600, wie etwa der vorletzte Block 608 und der vorvorletzte Block 606, weisen jeweils eine Kombination aus zwei blockabhängige bidirektionalen Verkettungsfunktionen auf, welche eine Verknüpfung der blockabhängigen bidirektionalen Verkettungsfunktionen der bidirektionalen Verbindungen zu dem vorhergehenden Block, beispielsweise Block 606 im Fall des Blocks 608, sowie zu dem nachfolgenden Block, beispielsweise Block 610 im Fall des Blocks 608, darstellen. Die entsprechenden blockabhängigen Verkettungsfunktionen sind als mathematische Funktionen in die entsprechenden Blöcke 606, 608 integriert. Die jeweiligen blockabhängigen Verkettungsfunktionen wurden jeweils unter Verwendung der Daten beider miteinander zu verkettenden Blöcken aus einer erstellt.

Zur bidirektionalen Verkettung des letzten Blocks 610 der Blockchain-Struktur 600 mit dem zusätzlichen Block 612 werden beispielsweise zwei Funktionen 620, 621 aus zwei Funktionenscharen ausgewählt. Eine erste Funktion 620 wird beispielsweise aus einer ersten Funktionenschar in Abhängigkeit von einem Prüfwert der Daten des Blocks 610 gemäß einer eindeutigen Zuordnungsbedingung zwischen einem Parameter der ausgewählten ersten Funktion und dem Prüfwert des Blocks 610 ausgewählt. Die die zweite Funktion 621 wird beispielsweise aus einer zweiten Funktionenschar in Abhängigkeit von einem Prüfwert der Daten des zusätzlichen Blocks 612 gemäß einer eindeutigen Zuordnungsbedingung zwischen einem Parameter der ausgewählten zweiten Funktion und dem Prüfwert des Blocks 612 ausgewählt. Die beiden Funktionen 620, 621 werden zu einer gemeinsamen blockabhängigen Verkettungsfunktion 622 kombiniert. Bei einer entsprechenden Kombination kann es sich beispielsweise um eine arithmetische Verknüpfung, wie etwa eine Addition, Subtraktion, Multiplikation und/oder Division handeln. Die blockabhängige bidirektionale Verkettungsfunktion 622 wird zur bidirektionalen Verkettung des Blocks 610 mit dem Block 612 sowohl zu dem Block 610 als auch zu dem Block 612 hinzugefügt. Dabei wird die Verkettungsfunktion 622 mit der in dem Block 610 bereits vorhandenen Verkettungsfunktion der bidirektionalen Verkettung zwischen Block 608 und Block 610 verknüpft.

Nach alternativen Ausführungsformen werden die beiden Prüfwerte der beiden bidirektional zu verkettenden Blöcke 610, 612 zu einem kombinierten Prüfwert kombiniert und die blockabhängige bidirektionale Verkettungsfunktion 622 als Funktion aus einer Funktionenschar in Abhängigkeit von dem kombinierten Prüfwert der der beiden Blöcke 610, 612 gemäß einer eindeutigen Zuordnungsbedingung zwischen einem Parameter der ausgewählten Funktion, d.h. der blockabhängigen bidirektionalen Verkettungsfunktion 622, und dem kombinierten Prüfwert der Blöcke 610, 612 ausgewählt. Nach einer weiteren Alternative umfassen die Funktionen der Funktionenschar eine Mehrzahl von n Parametern, z.B. n=2, und sind unter Verwendung der jeweiligen n Parameter, welche ein n-Tupel von Parametern bilden, eindeutig identifizierbar. In diesem Fall wird aus den beiden Prüfwerten der 610, 612 ein n-Tupel von Prüfwerten gebildet und eine Funktion 622 der Funktionenschar in Abhängigkeit von dem n-Tupel von Prüfwerten gemäß einer eindeutigen Zuordnungsbedingung zwischen dem n-Tupel von Parametern der ausgewählten Funktion und dem n-Tupel von Prüfwerten ausgewählt.

Figur 13 zeigt eine Ausführungsform eines exemplarischen Verfahrens zum Erweitern einer bidirektional verketteten Blockchain-Struktur um einen zusätzlichen Block. In Schritt 700 wird eine bidirektional verkettete Blockchain-Struktur bereitgestellt. In Schritt 702 werden die zu speichernden Daten bereitgestellt. In Block 704 wird eine Funktionenschar bereitgestellt. Die Funktionenschar umfasst eine Mehrzahl von Funktionen, wobei sich die Funktionen in mindestens einem ersten Parameter unterscheiden und unter Verwendung des jeweiligen ersten Parameters eindeutig identifizierbar sind. In Block 706 wird ein zusätzlicher Block zum Erweitern der Blockchain-Struktur erzeugt. Der zusätzliche Block umfasst die zu speichernden Daten und ist dazu vorgesehen, mit dem letzten Block der Blockchain-Struktur bidirektional verkettet zu werden. In Schritt 708 wird eine blockabhängige Verkettungsfunktion zum bidirektionalen Verketten des letzten Blocks der Blockchain-Struktur mit dem zusätzlichen Block unter Verwendung der Funktionenschar ausgewählt. Hierzu wird beispielsweise ein kombinierter blockabhängiger Prüfwert berechnet, welcher sowohl von den Daten des letzten Blocks der Blockchain-Struktur als auch von den Daten des hinzuzufügenden zusätzlichen Blocks abhängt. Beispielsweise wird für jeden der Blöcke ein individueller Prüfwert berechnet und die beiden resultierenden Prüfwerte werden miteinander kombiniert. Nach weiteren Ausführungsformen umfassen die Funktionen der in Block 704 bereitgestellten Funktionenschar n-Tupel von Parametern und aus den beiden Prüfwert der miteinander bidirektional zu verkettenden Blöcke wird ein n-Tupel von Prüfwerten erstellt. Die Funktion der Funktionenschar wird in Abhängigkeit von dem n-Tupel von Prüfwerten gemäß einer eindeutigen Zuordnungsbedingung zwischen dem n-Tupel von Parametern der ausgewählten ersten Funktion und dem n-Tupel von Prüfwerten ausgewählt. Nach einer weiteren Alternative werden in Block 704 zwei Funktionenscharen bereitgestellt. Aus der ersten der beiden Funktionenscharen wird dann in Block 708 eine erste Funktion unter Verwendung eines ersten Prüfwerts eines ersten der beiden miteinander bidirektional zu verkettenden Blöcke ausgewählt. Ferner wird aus der zweiten der beiden Funktionenscharen eine zweite Funktion unter Verwendung des zweiten Prüfwerts des zweiten der beiden miteinander bidirektional zu verkettenden Blöcke ausgewählt. Die beiden resultierenden Funktionen werden zu einer gemeinsamen blockabhängigen bidirektionalen Verkettungsfunktion kombiniert. In Schritt 710 wird die in Schritt 708 erstellte blockabhängige bidirektionale Verkettungsfunktion zu dem letzten Block der Blockchain-Struktur hinzugefügt. In Schritt 712 wird die blockabhängige bidirektionale Verkettungsfunktion Funktion zu dem zusätzlichen Block hinzugefügt. Nach Ausführungsformen umfasst der Schritt 710 ein Verknüpfen der in Schritt 708 erstellten blockabhängigen bidirektionalen Verkettungsfunktion mit der in dem letzten Block der Blockchain-Struktur bereits vorhandenen blockabhängigen bidirektionalen Verkettungsfunktion der bidirektionalen Verkettung zwischen dem letzten Block und dem vorletzten Block der Blockchain-Struktur. Bei der entsprechenden Verknüpfung kann es sich beispielsweise um eine arithmetische Verknüpfung handeln. Beispielsweise können die beiden Verkettungsfunktionen miteinander addiert oder multipliziert werden.

Figur 14 zeigt ein schematisches Blockdiagramm einer Berechnung des Prüfwerts zweier miteinander zu verkettender Blöcke 610, 612, wie sie etwa von Schritt 406 der Figur 13 umfasst wird. Die Daten der beiden miteinander zu verkettenden Blöcke 610, 612 sind beispielsweise jeweils in einer quadratischen (TxT)-Matrixstruktur 660, 670 gespeichert. Bei T handelt es sich beispielsweise um eine natürlich Zahl $T \geq 2$. Weisen die Matrixstrukturen 660, 670 der beiden Blöcke 610, 612 unterschiedliche Größen auf, so werden eine oder beide Matrixstrukturen 660, 670 derart erweitert, dass zwei gleich große quadratische Matrixstrukturen resultieren. Hierzu werden beispielsweise zusätzliche Matrixelemente bzw. zusätzliche Zeilen und/oder Spalten hinzugefügt. Die hinzugefügten Matrixelemente umfassen jeweils einen Platzhalter, beispielsweise den Wert 0. Weist beispielsweise die Matrixstruktur des Blocks 610 eine Spalte weniger auf, d.h. fehlt beispielsweise die T-te Spalte, so wird diese ergänzt, wobei alle Elemente der T-ten Spalte $D1_{1T}$ bis $D1_{TT}$ jeweils auf 0 gesetzt werden. Zum Berechnen des kombinierten blockabhängigen Prüfwerts PW wird beispielsweise für jede Spalte 662 der Matrixstruktur 660 des Blocks 610 die Summe aller Elemente der entsprechenden Spalte 662 berechnet. Für die i-te Spalte ergibt sich dabei die Summe $\sum_{Si} = \sum_{j=1}^{T} d1_{ji}$. Zudem wird für jede der Zeilen 672 der Matrixstruktur 670 des Blocks 612 jeweils die Summe aller Elemente der entsprechenden Zeile 672 berechnet. Für die i-te Zeile ergibt sich dabei die Summe $\sum_{Zi} = \sum_{j=1}^{T} d2_{ij}$. In einem nächsten Schritt wird jeweils die für die i-te Spalte der Matrixstruktur 660 des Blocks 610 berechnete Summe $\Sigma_{Si}$ zu der Summe $\Sigma_{Zi}$ der i-ten Zeile der Matrixstruktur 670 des Blocks 612 addiert. Die resultierenden T-Summen $\Sigma_{11}$ bis $\Sigma_{TT}$ werden als Zahlen aneinandergehängt, sodass eine Zahlenfolge resultiert, welche den kombinierten blockabhängigen Prüfwert bildet: $PW = \Sigma_{11}\Sigma_{22}...\Sigma_{T-1T-1}\Sigma_{TT}$. Nach alternativen Ausführungsformen könnten zur Berechnung des kombinierten Prüfwerts auch die Summen über die Zeilen der Matrixstruktur 660 und die Summen über die Spalten der Matrixstruktur 670 gebildet werden.

Figur 15 zeigt ein exemplarisches Verfahren zum Berechnen eines kombinierten blockabhängigen Prüfwerts gemäß Figur 14. In Schritt 800 wird für jede Spalte eine Matrixstruktur eines ersten Blocks eine Summe aus allen Elementen der entsprechenden Spalte berechnet. In Schritt 802 wird für jede Zeile einer Matrixstruktur eines zweiten Blocks, welche mit dem ersten Block bidirektional verkettet werden sollen, eine Summe aus allen Elementen der entsprechenden Zeile berechnet. In Schritt 804 wird jeder Spalte der Matrix des ersten Blocks eine Zeile der Matrix des zweiten Blocks zugeordnet. Beispielsweise wird die i-te Spalte der i-ten Zeile zugeordnet. Für jedes der resultierenden Paare aus der entsprechenden i-ten Spalte der Matrixstruktur des ersten Blocks und der i-ten Zeile der Matrixstruktur des zweiten Blocks wird eine kombinierte Summe berechnet. In Schritt 806 werden die in Schritt 804 berechneten Summen in einer Zahlenfolge aneinandergereiht, sodass sie einen kombinierten blockabhängigen Prüfwert bilden.

Figur 16 zeigt eine Ausführungsform einer exemplarischen linearen Blockchain-Struktur 600, welche N Blöcke 602, 604, 606, 608, 610 umfasst. Bei der linearen Blockchain-Struktur kann es sich beispielsweise um eine der lineare Blockchain-Unterstruktur der nichtlinearen Dokumentenblockchain-Struktur oder um eine der Berechtigungsblockchain-Struktur handeln. Die Blockchain-Struktur 600 soll um einen zusätzlichen Block 612 erweitert werden. Die Blöcke 602, 604, 606, 608, 610 der Blockchain-Struktur 600 sind durch Prüfwerte bidirektional miteinander verkettet. Die einzelnen bidirektionalen Verknüpfungen sind schematisch angedeutet durch Doppelpfeile. Die inneren Blöcke 604, 606, 608 der Blockchain-Struktur 600 umfassen jeweils zumindest zwei Prüfwerte, bei welchen es sich beispielsweise um Hashwerte handelt. Ein erster dieser Prüfwerte ist beispielsweise von den Daten des entsprechenden inneren Blocks und von den Daten des unmittelbar nachfolgenden Blocks abhängig. Ein zweiter dieser Prüfwerte ist beispielsweise von den Daten des entsprechenden inneren Blocks und von den Daten des unmittelbar vorangehenden Blocks abhängig. Der erste und der zweite Prüfwert sind beispielsweise in einem gemeinsamen Hashwert miteinander kombiniert. Die entsprechenden Prüfwerte sind in die Blöcke integriert. Der Prüfwert zur Verknüpfung des vorletzten Blocks 608 der Blockchain-Struktur 600 mit dem letzten Block 610 umfasst somit sowohl Daten, welche in dem vorletzten Blocks 608 gespeichert sind, als auch Daten, welche in dem letzten Blocks 610 gespeichert sind. Somit stellen der im vorletzten Block 608 und der in letzten Block 610 gespeicherte Prüfwert nur solange korrekte Hashwerte der beiden entsprechenden Blöcke dar, solange die Daten beider Blöcke unverändert bleiben. Im Falle einer Manipulation, beispielsweise des letzten Block 610, passt der Prüfwert des vorletzten Blocks 608 nicht mehr zu den Daten des letzten Blocks 610, woran sich die Manipulation erkennen lässt.

Figur 17A zeigt ein schematisches Blockdiagramm einer ersten Ausführungsform des ersten Blocks $B_1$ 602 aus Figur 16. Der Block $B_1$ 602 umfasst einen Platzhalter $PH_1$ 1101, welcher den Block $B_1$ 602 als ersten Block der Blockchain-Struktur 600 kennzeichnet. Dieser Platzhalter $PH_1$ 1101 ist nicht dazu vorgesehen durch einen anderen Wert ersetzt zu werden, wenn die Blockchain-Struktur 600 erweitert wird. Vielmehr bleibt der Platzhalter $PH_1$ 1101, da der Block $B_1$ 602 dazu vorgesehen ist unverändert der erste Block der Blockchain-Struktur 600 zu bleiben.

Ferner umfasst der Block $B_1$ 602 einen Prüfwert $PW_1$ 1104, welcher beispielsweise ein Hashwert einer Kombination der in dem Block $B_1$ 602 gespeicherten Daten $D_1$ 1108 und den in dem zweiten Block 604 gespeicherten Daten $D_2$ ist. Beispielsweise wird der Prüfwert $PW_1$ 1104 wie folgt berechnet:

$$PW_1 = Hash\{D_2 + Hash[D_1 + PH_1]\}.$$

Zudem umfasst der Block $B_1$ 602 einen kombinierten Prüfwert $KPW_1$ 1106, welcher beispielsweise ein Hashwert einer Kombination des Platzhalters $PH_1$ 1101 und des Prüfwerts $PW_1$ 1104 ist. Mit anderen Worten handelt es sich bei dem kombinierten Prüfwert $KPW_1$ 1106 um einen mehrfach gehashten Hashwert, welcher unter Verwendung der Daten $D_1$ des ersten Blocks $B_1$ 602 und den Daten $D_2$ des zweiten Blocks $B_2$ 604 der Blockchain-Struktur 600 berechnet wurde und diese beiden Blöcke 602, 604 somit miteinander verkettet. Der kombinierte Prüfwert $KPW_1$ 1106 wird beispielsweise wie folgt berechnet:

$$KPW_1 = Hash\{PH_1 + PW_1\}.$$

Figur 17B zeigt ein schematisches Blockdiagramm einer weiteren Ausführungsform des ersten Blocks $B_1$ 602 aus Figur 17A. Der Block $B_1$ 602 ist beispielsweise in Form einer quadratischen (MxM)-Matrix strukturiert. Die Daten $D_1$ des Blocks $B_1$ 602 sind in Einträgen einer quadratischen [(M-1)x(M-1)]-Matrix 1108 gespeichert. Der Platzhalter $PH_1$ 1101 ist beispielsweise in der M-ten Zeile der (MxM)-Matrix gespeichert. Der Prüfwert $PW_1$ 1104 ist beispielsweise in der M-ten Spalte der (MxM)-Matrix gespeichert. Der kombinierte Prüfwert $KPW_1$ 1106 ist beispielsweise in dem Element $a_{MM}$ der (MxM)-Matrix gespeichert. Nach Ausführungsformen besteht der Platzhalter $PH_1$ 1101 ausschließlich aus Nullen, sodass alle Element $a_{iM}$ der (MxM)-Matrix mit $1 \leq i < M$ gleich Null gesetzt sind.

Figur 18A zeigt ein schematisches Blockdiagramm einer ersten Ausführungsform des letzten Blocks $B_N$ 610 der Blockchain-Struktur 600 aus Figur 16, bevor die Blockchain-Struktur 600 um den zusätzlichen Block $B_{N+1}$ 612 erweitert wird. Bei dem letzten Blocks $B_N$ 610 der Blockchain-Struktur 600 handelt es sich um den N-ten Block der Blockchain-Struktur 600. Der Block $B_N$ 610 umfasst einen Platzhalter $PH_N$ 1123, welcher den Block $B_N$ 610 als letzten Block der Blockchain-Struktur 600 kennzeichnet. Dieser Platzhalter $PH_N$ 1123 ist dazu vorgesehen durch einen Prüfwert einer bidirektionalen Verknüpfung mit dem zusätzlichen Block $B_{N+1}$ Wert ersetzt zu werden, wenn die Blockchain-Struktur 600 erweitert wird.

Ferner umfasst der Block $B_N$ 610 einen Prüfwert $PW_{N-1}$ 1122, welcher beispielsweise ein Hashwert einer Kombination der in dem vorletzten Block $B_{N-1}$ 608 gespeicherten Daten $D_{N-1}$ und den in dem letzten Block $B_N$ 610 gespeicherten Daten $D_N$ ist. Beispielsweise wird der Prüfwert $PW_{N-1}$ 1122 des letzten Blocks $B_N$ 610 wie folgt berechnet:

$$PW_{N-1} = Hash\{D_N + Hash[D_{N-1} + PW_{N-2}]\},$$

wobei $PW_{N-2}$ einen Prüfwert des vorletzten Blocks $B_{N-2}$ 606 bezeichnet, welcher der oben genannten rekursiven Formel folgend analog zu Prüfwert $PW_{N-1}$ 1122 des letzten Blocks $B_N$ 610 berechnet werden kann.

Zudem umfasst der Block $B_N$ 610 einen kombinierten Prüfwert $KPW_N$ 1126, welcher beispielsweise ein Hashwert einer Kombination des Platzhalters $PH_N$ 1123 und des Prüfwerts $PW_{N-1}$ 1122 ist. Mit anderen Worten handelt es sich bei dem kombinierten Prüfwert $KPW_N$ 1126 um einen mehrfach gehashten Hashwert, welcher unter Verwendung der Daten $D_{N-1}$ des vorletzten Blocks $B_{N-1}$ 608 und den Daten $D_N$ des letzten Blocks $B_N$ 610 der Blockchain-Struktur 600 berechnet wurde und diese beiden Blöcke 608, 610 somit miteinander verkettet. Der kombinierte Prüfwert $KPW_N$ 1126 wird beispielsweise wie folgt berechnet:

$$KPW_N = Hash\{PW_{N-1} + PH_N\},$$

solange es sich bei dem Block $B_N$ 610 um den letzten Block der Blockchain-Struktur 600 handelt und der Platzhalter $PH_N$ 1123, welcher den Blocks $B_N$ 610 als letzten Block kennzeichnet, noch nicht durch einen Prüfwert einer weiteren bidirektionalen Verknüpfung mit einem zusätzlichen Block $B_{N+1}$ 612 ersetzt wurde.

Figur 18B zeigt ein schematisches Blockdiagramm einer weiteren Ausführungsform des letzten Blocks $B_N$ 610 aus Figur 16. Der Block $B_N$ 110 ist beispielsweise in Form einer quadratischen (MxM)-Matrix strukturiert. Die Daten $D_N$ des Blocks $B_N$ 610 sind in Einträgen einer quadratischen [(M-1)x(M-1)]-Matrix 1128 gespeichert. Der Platzhalter $PH_N$ 1123 ist beispielsweise in der M-ten Spalte der (MxM)-Matrix gespeichert. Der Prüfwert $PW_N$ 1122 ist beispielsweise in der M-ten Zeile der (MxM)-Matrix gespeichert. Der kombinierte Prüfwert $KPW_N$ 1126 ist beispielsweise in dem Element $a_{MM}$ der (MxM)-Matrix gespeichert. Nach Ausführungsformen besteht der Platzhalter $PH_N$ 1123 ausschließlich aus Nullen, sodass alle Element $a_{Mi}$ der (MxM)-Matrix mit $6 \leq i < M$ gleich Null gesetzt sind.

Nach Ausführungsformen wird der Prüfwert, welcher eine bidirektionale Verknüpfung zu einem vorangehenden Block implementiert in der M-ten Zeile der (MxM)-Matrixstruktur gespeichert, während der Prüfwert, welcher eine bidirektionale Verknüpfung zu einem nachfolgenden Block implementiert in der M-ten Spalte der (MxM)-Matrixstruktur gespeichert. Somit umfasst jeder Block, welcher mit zwei Blöcken, d.h. einem vorangehenden und einem nachfolgenden Block, bidirektional verkettet ist, einen Prüfwert für jede der beiden Verknüpfungen. Nach Ausführungsformen umfasst der Block ferner einen kombinierten Prüfwert, welcher einen Hashwert einer Kombination der beiden Prüfwerte der beiden bidirektionalen Verknüpfungen umfasst. Handelt es sich bei dem entsprechenden Block um den ersten oder letzten Block 602, 610 der Blockchain-Struktur 600, d.h. einen Block, welcher nur mit einem weiteren Block (dem zweiten Block 604 bzw. dem vorletzten Block 608) bidirektional verkettet ist, so umfasst der Block einen Prüfwert, welcher die eine bidirektionale Verknüpfung implementiert, sowie einen Platzhalter für einen weiteren Prüfwert einer weiteren potentiellen bidirektionalen Verknüpfung zu einem weiteren Block. Dieser Platzhalter kennzeichnet den entsprechenden Block als den ersten oder letzten Block der Blockchain-Struktur. Der kombinierte Prüfwert des entsprechenden Blocks umfasst den Prüfwert der entsprechenden bidirektionalen Verknüpfung sowie den Platzhalter. Der kombinierte Prüfwert beruht dabei auf einer mehrfachen Anwendung der Hashfunktion.

Figuren 19A und 19B zeigen schematische Blockdiagramme der Ausführungsformen des letzten Blocks $B_N$ 610 der Blockchain-Struktur 600 aus der Figur 18A bzw. 18B nach Erweiterung der Blockchain-Struktur 600 um den zusätzlichen Block $B_{N+1}$ 612, sodass die erweiterte Blockchain-Struktur 600 N+1 Blöcke umfasst. Der zusätzliche Block $B_{N+1\,6}$12 ist mithin der neue letzte Block der Blockchain-Struktur 600, während der bisherige letzte Block $B_N$ 610 der vorletzte Block der erweiterten Blockchain-Struktur 600 ist.

Zum Erweitern der Blockchain-Struktur 600 um den zusätzlichen Block $B_{N+1\,6}$12 wird der letzte Block $B_N$ 610 bidirektional mit dem zusätzlichen Block $B_{N+1\,6}$12 verkettet. Hierbei wird ein Prüfwert $PW_N$ 1124 berechnet, welcher beispielsweise ein Hashwert einer Kombination der in dem letzten Block $B_N$ 610 gespeicherten Daten $D_N$ 1128 und den in dem zusätzlichen Block $B_{N+1}$ 612 zu speichernden Daten $D_{N+1}$ ist. Beispielsweise wird der Prüfwert $PW_N$ 1124 des letzten Blocks $B_N$ 610 wie folgt berechnet:

$$PW_N = Hash\{D_{N+1} + Hash[D_N + PW_{N-1}]\}.$$

Der Platzhalter $PH_N$ wird durch den Prüfwert $PW_N$ 1124 ersetzt und der kombinierte Prüfwert $KPW_N$ 1126 wird aktualisiert. Beispielsweise wird der aktualisierte kombinierte Prüfwert $KPW_N$ 1126 wie folgt berechnet:

$$KPW_N = Hash\{PW_{N-1} + PW_N\} = Hash\{PW_{N-1} + Hash\{D_{N+1} + Hash[D_N + PW_{N-1}]\}\}.$$

Der kombinierte Prüfwert $KPW_N$ 1126 umfasst somit Daten $D_N$ 1128 des letzten Blocks $B_N$ 610 und Daten $D_{N+1}$ des zusätzlichen Blocks $B_{N+1}$ 612. Ferner ist der kombinierte Prüfwert $KPW_N$ 1126 aufgrund der Rekursivität der zuvor genannten Formel von den Daten aller vorangehenden Blöcke der Blockchain-Struktur 600 abhängig.

Figur 20A zeigt ein schematisches Blockdiagramm einer ersten Ausführungsform des zusätzlichen Blocks $B_{N+1}$ 612 der Blockchain-Struktur 600 aus Figur 16, nachdem die Blockchain-Struktur 100 um den zusätzlichen Block $B_{N+1}$ 612 erweitert wurde. Bei dem zusätzlichen Block $B_{N+1}$ 612 der Blockchain-Struktur 600 handelt es sich um den (N+1)-ten Block der erweiterten Blockchain-Struktur 600. Der Block $B_{N+1}$ 612 umfasst einen Platzhalter $PH_{N+1}$ 1143, welcher den Block $B_{N+1}$ 612 als letzten Block der erweiterten Blockchain-Struktur 600 kennzeichnet. Dieser Platzhalter $PH_N$ 1143 ist dazu vorgesehen durch einen Prüfwert einer bidirektionalen Verknüpfung im Falle einer zusätzlichen Erweiterung der Blockchain-Struktur 600 ersetzt zu werden.

Ferner umfasst der Block $B_{N+1}$ 612 den Prüfwert $PW_N$ 1124 der bidirektionalen Verknüpfung zwischen Block $B_N$ 610 und Block $B_{N+1}$ 612. Zudem umfasst der Block $B_{N+1}$ 612 einen kombinierten Prüfwert $KPW_{N+1}$ 1146, welcher beispielsweise ein Hashwert einer Kombination des Platzhalters $PH_{N+1}$ 1143 und des Prüfwerts $PW_N$ 1124 ist. Mit anderen Worten handelt es sich bei dem kombinierten Prüfwert $KPW_{N+1}$ 1146 um einen mehrfach gehashten Hashwert, welcher unter Verwendung der Daten $D_N$ des Blocks $B_N$ 610 und den Daten $D_{N+1}$ des zusätzlichen Blocks $B_{N+1}$ 612 berechnet wird. Der kombinierte Prüfwert $KPW_{N+1}$ 1146 wird beispielsweise wie folgt berechnet:

$$KPW_{N+1} = Hash\{PW_N + PH_{N+1}\}.$$

Hierbei handelt es sich bei dem Block $B_{N+1}$ 612 um den letzten Block der Blockchain-Struktur 600. Wird der Platzhalter $PH_{N+1}$ 1143 im Zuge einer Erweiterung der Blockchain-Struktur 600 durch einen Prüfwert ersetzt, so wird der kombinierte Prüfwert $KPW_{N+1}$ 1146 durch einen aktualisierten kombinierten Prüfwert $KPW_{N+1}$ 1146 ersetzt, welcher unter Verwendung des Prüfwerts berechnet wird, welcher den Platzhalter $PH_{N+1}$ 1143 ersetzt.

Figur 20B zeigt ein schematisches Blockdiagramm einer weiteren Ausführungsform des zusätzlichen Blocks $B_{N+1}$ 612 aus Figur 16. Der Block $B_{N+1}$ 612 ist beispielsweise in Form einer quadratischen (MxM)-Matrix strukturiert. Die Daten $D_{N+1}$ des Blocks $B_{N+1}$ 612 sind in Einträgen einer quadratischen [(M-1)x(M-1)]-Matrix 1148 gespeichert. Der Platzhalter $PH_{N+1}$ 1143 ist beispielsweise in der M-ten Spalte der (MxM)-Matrix gespeichert. Der Prüfwert $PW_{N+1}$ 1124 ist beispielsweise in der M-ten Zeile der (MxM)-Matrix gespeichert. Der kombinierte Prüfwert $KPW_{N+1}$ 1146 ist beispielsweise in dem Element $a_{MM}$ der (MxM)-Matrix gespeichert. Nach Ausführungsformen besteht der Platzhalter $PH_{N+1}$ 1143 ausschließlich aus Nullen, sodass alle Element $a_{Mi}$ der (MxM)-Matrix mit $6 \leq i < M$ gleich Null gesetzt sind.

Nach Ausführungsformen werden aufeinanderfolgende Blöcke zum Implementieren der bidirektionalen Verkettung jeweils mit einem identischen Prüfwert versehen, wie beispielsweise der Block $B_N$ 610 und der Block $B_{N+1}$ 612 jeweils mit dem identischen Prüfwert $PW_{N+1}$ 1124 versehen werden.

Figur 21 zeigt ein schematisches Flussdiagramm eines exemplarischen Verfahrens zum Hinzufügen eines zusätzlichen Blocks zu einer bidirektional verketteten Blockchain-Struktur. In Schritt 400 wird eine bidirektional verkettete Blockchain-Struktur bereitgestellt. In Schritt 402 werden zu speichernde Daten bereitgestellt. In Schritt 404 wird ein zusätzlicher Block für die Blockchain-Struktur erzeugt. Beispielsweise weist der zusätzliche Block die Form einer (MxM)-Matrix auf. Vor der bidirektionalen Verkettung mit der Blockchain-Struktur weist die Matrix des zusätzlichen Blocks beispielweise in der M-ten Zeile und M-ten Spalte jeweils einen Platzhalter auf. Beispielsweise weisen die Einträge der M-ten Zeile und M-ten Spalte nur Nullen auf. Die zu speichernden Daten werden in den Matrixelementen der verbliebenen [(M-1)x(M-1]-Untermatrix gespeichert. In Schritt 406 wird der Prüfwert $PW_N$ der bidirektionalen Verknüpfung berechnet. Der Prüfwert $PW_N$ umfasst beispielsweise einen Hashwert einer Kombination der in dem letzten Block $B_N$ gespeicherten Daten $D_N$ und den in dem zusätzlichen Block $B_{N+1}$ zu speichernden Daten $D_{N+1}$ ist. Ferner geht in den Prüfwert $PW_N$ der Prüfwert $PW_{N-1}$ des Vorgängerblocks $B_{N-1}$ mit ein. Der Prüfwert $PW_{N-1}$ des Vorgängerblocks $B_{N-1}$ wird nach Ausführungsformen in der M-ten Zeile des letzten Blocks $B_N$ bereitgestellt. Beispielsweise wird der Prüfwert $PW_N$ des letzten Blocks $B_N$ wie folgt berechnet:

$$PW_N = Hash\{D_{N+1} + Hash[D_N + PW_{N-1}]\}.$$

In Schritt 408 wird der Prüfwert $PW_N$ zu dem letzten Block $B_N$ hinzugefügt. Beispielsweise wird er in die M-te Spalte geschrieben. In Schritt 410 wird der Prüfwert $PW_N$ zu dem zusätzlichen Block $B_{N+1}$ hinzugefügt. Beispielsweise wird er in die M-te Zeile geschrieben. In Schritt 412 wird der kombinierte Prüfwert $KPW_N$ des letzten Blocks $B_N$ unter Verwendung des Prüfwerts $PW_N$ neu berechnet und das den kombinierten Prüfwert $KPW_N$ speichernde Matrixelement $a_{MM}$ damit aktualisiert. Beispielsweise wird der aktualisierte kombinierte Prüfwert $KPW_N$ wie folgt aus den Einträgen der M-ten Zeile und M-ten Spalte des letzten Blocks $B_N$ berechnet:

$$KPW_N = Hash\{PW_{N-1} + PW_N\}.$$

In Schritt 414 wird der kombinierte Prüfwert $KPW_{N+1}$ des zusätzlichen Blocks $B_{N+1}$ unter Verwendung des Prüfwerts $PW_N$ berechnet. Beispielsweise wird der kombinierte Prüfwert $KPW_{N+1}$ wie folgt aus den Einträgen der M-ten Zeile (Prüfwert $PW_N$) und M-ten Spalte (Platzhalter $PH_N$) des zusätzlichen Blocks $B_{N+1}$ berechnet:

$$KPW_{N+1} = Hash\{PW_N + PH_{N+1}\}.$$

In Schritt 416 wird der kombinierte Prüfwert $KPW_{N+1}$ beispielsweise im Matrixelement $a_{MM}$ des zusätzlichen Blocks $B_{N+1}$ gespeichert. Damit sind die beiden Blöcke $B_N$ und $B_{N+1}$ bidirektional miteinander verkettet und die Blockchain-Struktur um den zusätzlichen Blocks $B_{N+1}$ erweitert. Dieses Verfahren wird für jeden zusätzlich anzuhängenden Block wiederholt.

Die Figuren 23 bis 26 entsprechen den Figuren 17 bis 20 und zeigen zweite Ausführungsformen der Blöcke der Blockchain-Struktur 600 aus Figur 16 im Falle eines alternativen Verknüpfungsverfahrens zum Erstellen bidirektionaler Verknüpfungen gemäß Figur 22. Figur 22 zeigt das entsprechende Verfahren in Form eines schematischen Flussdiagramms. Die Schritte 1000 bis 1004 entsprechen dabei den Schritten 900 bis 904 aus Figur 21. In Schritt 1006 werden Prüfwerte der bidirektionalen Verknüpfung zwischen den Blöcken $B_N$ und $B_{N+1}$ berechnet. Hierbei werden ein Prüfwert $PW1_N$ für den letzten Block $B_N$ und ein Prüfwert $PW2_N$ für den letzten Block $B_{N+1}$ berechnet. Zunächst wird eine Matrixoperation unter Verwendung der beiden Untermatrizen $D_N$ und $D_{N+1}$ durchgeführt, welche die gespeicherten Daten der Blöcke $B_N$ und $B_{N+1}$ umfassen. Beispielsweise wird eine Matrixmultiplikation $D_N$*$D_{N+1}$ durchgeführt. Die resultierende eindeutige Matrix wird als Eingabe für eine Hashfunktion Hash($D_N$*$D_{N+1}$) verwendet. Durch die mathematische Eindeutigkeit der Matrixmultiplikationen kann sichergestellt, dass sich eine Manipulation der Daten $D_N$ im Block $B_N$ ebenso wie eine Manipulation der Daten $D_{N+1}$ im $B_{N+1}$ in einer Veränderung des Hashwertes Hash($D_N$*$D_{N+1}$) bemerkbar macht. Der resultierende Hashwert wird zweigeteilt, beispielsweise gemäß der Formel:

$$Hash\{D_N * D_{N+1}\} = PW1_N + PW2_N.$$

In Schritt 1008 wird der Prüfwert $PW1_N$ für den letzten Block $B_N$ zu diesem hinzugefügt, beispielsweise wird er in die M-te Spalte des Blocks $B_N$ geschrieben. In Schritt 1010 wird der Prüfwert $PW2_N$ für den zusätzlichen Block $B_{N+1}$ zu diesem hinzugefügt, beispielsweise wird er in die M-te Spalte des Blocks $B_N$ geschrieben.

In Schritt 1012 wird der kombinierte Prüfwert $KPW_N$ des letzten Blocks $B_N$ unter Verwendung des Prüfwerts $PW_N$ neu berechnet und das den kombinierten Prüfwert $KPW_N$ speichernde Matrixelement $a_{MM}$ mit dem neu berechneten Prüfwert $PW_N$ aktualisiert. Beispielsweise wird der aktualisierte kombinierte Prüfwert $KPW_N$ wie folgt aus den Einträgen der M-ten Zeile und M-ten Spalte des letzten Blocks $B_N$ berechnet:

$$KPW_N = Hash\{PW2_{N-1} + PW1_N\}.$$

In Schritt 1014 wird der kombinierte Prüfwert $KPW_{N+1}$ des zusätzlichen Blocks $B_{N+1}$ unter Verwendung des Prüfwerts $PW2_N$ des zusätzlichen Blocks $B_{N+1}$ berechnet. Beispielsweise wird der kombinierte Prüfwert $KPW_{N+1}$ wie folgt aus den Einträgen der M-ten Zeile (Prüfwert $PW2_N$) und M-ten Spalte (Platzhalter $PH_N$) des zusätzlichen Blocks $B_{N+1}$ berechnet:

$$KPW_{N+1} = Hash\{PW2_N + PH_{N+1}\}.$$

In Schritt 1016 wird der kombinierte Prüfwert $KPW_{N+1}$ beispielsweise im Matrixelement $a_{MM}$ des zusätzlichen Blocks $B_{N+1}$ gespeichert. Damit sind die beiden Blöcke $B_N$ und $B_{N+1}$ bidirektional miteinander verkettet und die Blockchain-Struktur um den zusätzlichen Blocks $B_{N+1}$ erweitert. Dieses Verfahren wird für jeden zusätzlich anzuhängenden Block wiederholt.

Die Figuren 23 bis 26 zeigen schematische zweite Ausführungsformen des ersten Blocks $B_1$ 602, des letzten Blocks $B_N$ 610 und des zusätzlichen Blocks $B_{N+1}$ 612 der Blockchain-Struktur 600 aus Figur 16. Die in den Figuren 23 bis 26 gezeigten Blöcke 602, 610, 612 entsprechen im Wesentlichen den in den Figuren 17 bis 20 gezeigten Blöcke 602, 610, 612. Die Blöcke 602, 610, 612 der Figuren 23 bis 26 unterscheiden sich jedoch darin, dass sie unter Verwendung des Verfahrens aus Figur 22 erstellt wurden. Somit sind die Prüfwerte, welche zum Erzeugen der bidirektionalen Verknüpfungen zwischen aufeinanderfolgenden Blöcken verwendet werden, im Allgemeinen nicht identisch, sondern unterscheiden sich voneinander. Somit umfasst der erste Block $B_1$ der Figuren 23A und 23B einen Prüfwert $PW1_1$ 204, welcher dem erste Block $B_1$ zugeordnet ist. Dieser Prüfwert $PW1_1$ 1104 wurde zusammen mit einem dem zweiten Block $B_2$ 604 der Blockchain-Struktur 600 zugeordneten Prüfwert $PW2_1$ unter Verwendung des Verfahrens aus Figur 22 aus den Daten $D_1$ und $D_2$ des ersten und zweiten Blocks berechnet. Der letzte Block $B_N$ 610 der Figuren 24A und 24B sowie 25A und 25B umfasst einen dem letzte Block $B_N$ 610 zugeordneten Prüfwert $PW2_{N-1}$ 1122, welcher zusammen mit einem dem vorletzten Block $B_{N-1}$ 608 der Blockchain-Struktur 600 zugeordneten Prüfwert $PW1_{N-1}$ unter Verwendung des Verfahrens aus Figur 22 aus den Daten $D_{N-1}$ und $D_N$ des vorletzten und letzten Blocks berechnet wurde. Ferner wird der in den Figuren 25A und 25B gezeigte Prüfwert $PW1_N$ 1124 des letzten Blocks $B_N$ 610 zusammen mit dem in den Figuren 24A und 24B gezeigten Prüfwert $PW2_N$ 1142 des zusätzlichen Blocks $B_N$ 612 berechnet. Hierbei wird das Verfahren aus Figur 22 auf die Daten $D_N$ des letzten Blocks $B_N$ 610 und die Daten des zusätzlichen Blocks $B_N$ 612 angewendet, welche beispielsweise mittels einer Matrixmultiplikation miteinander kombiniert werden.

Die kombinierten Prüfwerte $KPW_1$ 206, $KPW_N$ 1126, $KPW_{N+1}$ 1146 der in den Figuren 23 bis 26 gezeigten Blöcke $B_1$ 602, $B_N$ 610, $B_{N+1}$ 612 werden analog zu den kombinierten Prüfwerten $KPW_1$ 1106, $KPW_N$ 1126, $KPW_{N+1}$ 1146 der Figuren 17 bis 20 berechnet. Das heißt der kombinierte Prüfwert $KPW_1$ 1106 in den Figuren 23A und 23B wurde berechnet als $KPW_1 = Hash\{PH_1 + PW1_1\}$. Der kombinierte Prüfwert $KPW_N$ 1126 in den Figuren 24A und 24B wurde berechnet als $KPW_N = Hash\{PW2_{N^-1} + PH_N\}$. Der kombinierte Prüfwert $KPW_N$ 1126 in den Figuren 25A und 25B wird im Zuge der bidirektionalen Verkettung der Blöcke $B_N$ 610 und $B_{N+1}$ 612 berechnet als $KPW_N = Hash\{PW2_{N-1} + PW1_N\}$. Der kombinierte Prüfwert $KPW_{N+1}$ 1146 in den Figuren 26A und 26B wird schließlich berechnet als $KPW_{N+1} = Hash\{PW2_N + PH_N\}$.

Nach Auswendungsformen können die Prüfwerte, welche zum Erzeugen der bidirektionalen Verknüpfungen zwischen aufeinanderfolgenden Blöcken verwendet werden, auch identisch sein. Dies hängt davon ab, ob der Hashwert der Matrixmultiplikation symmetrisch (identische Prüfwerte) oder symmetrisch (unterschiedliche Prüfwerte) aufgeteilt wird.

**Bezugszeichenliste**

| | |
|---|---|
| 100 | Dokumentenblockchain-Struktur |
| 102 | Dokument |
| 104 | Hauptstruktur |
| 105 | Ergänzungs-/Änderungsstruktur |
| 106 | Nebenstruktur |
| 108 | lineare Blockchain-Unterstruktur |
| 109 | lineare Blockchain-Unterstruktur |
| 110 | lineare Blockchain-Unterstruktur |
| 112 | Änderungsdokument |
| 114 | Ergänzungsdokument |
| 116 | Instanz |
| 120 | erster Nutzer |
| 121 | Nutzer-Computersystem |
| 122 | Datenspeichersystem |
| 124 | Berechtigungsmanagementsystem |
| 126 | Identitätsliste |
| 128 | zweiter Nutzer |
| 130 | Berechtigungsblockchain-Struktur |
| 132 | Zugriffs-Zertifikat |
| 134 | Nutzer-Zertifikat |
| 202 | Prozessor |
| 204 | Programminstruktionen |
| 206 | Speicher |

208 geschützter Speicherbereich
210 kryptographischer Schlüssel
212 Display
214 kommunikationsschnittstelle
220 Nutzer-Computersystem
222 Prozessor
224 Programminstruktionen
226 Speicher
228 geschützter Speicherbereich
230 kryptographischer Schlüssel
232 Display
234 Kommunikationsschnittstelle
242 Prozessor
244 Programminstruktionen
246 Speicher
130 Berechtigungsblockchain-Struktur
250 Metadaten
126 Identitätsliste
254 geschützter Speicherbereich
256 kryptographischer Schlüssel
258 Kommunikationsschnittstelle
262 Prozessor
264 Programminstruktionen
266 Speicher
268 Blöcke
270 geschützter Speicherbereich
272 kryptographischer Schlüssel
274 Kommunikationsschnittstelle
282 Prozessor
284 Programminstruktionen
286 Speicher
288 Blöcke
290 geschützter Speicherbereich
292 kryptographischer Schlüssel
294 Kommunikationsschnittstelle
302 Prozessor
304 Programminstruktionen
306 Speicher
308 Blöcke
310 geschützter Speicherbereich
312 kryptographische Schlüssel
314 Kommunikationsschnittstelle
320 Netzwerk
330 Datenverarbeitungssystem
600 Blockchain-Unterstruktur
602 erster Block
604 zweiter Block
606 vorvorletzter Block
608 vorletzter Block
610 letzter Block
612 zusätzlicher Block
620 Funktion
621 Funktion
622 bidirektionale Verkettungsfunktion
630 erweiterte Blockchain-Unterstruktur
660 Matrixstruktur
662 Spalte
670 Matrixstruktur

672 Zeile
1101 Platzhalter
1104 Prüfwert
1106 kombinierter Prüfwert
1108 Daten
1122 Prüfwert
1123 Platzhalter
1124 Prüfwert
1126 kombinierter Prüfwert
1128 Daten
1142 Prüfwert
1143 Platzhalter
1146 kombinierter Prüfwert
1148 Daten

**Patentansprüche**

**1.** Kryptographisches Verfahren zur Durchführung einer selektiven Zugriffsteuerung auf Attribute einer Mehrzahl von Dokumenten (102), welche einem ersten Nutzer zugeordnet sind, wobei die Attribute in ein oder mehreren Speichern (266, 286, 306) manipulationssicher gespeichert sind, wobei das Verfahren umfasst:

Bereitstellen einer nichtlinearen persönlichen Dokumentenblockchain-Struktur (100), welche dem ersten Nutzer zugeordnet ist und eine Mehrzahl von linearen Blockchain-Unterstrukturen (104, 108, 109, 110, 600) umfasst, wobei jede der linearen Blockchain-Unterstrukturen jeweils eine Mehrzahl von bidirektional miteinander verknüpften Blöcken umfasst,
wobei eine erste lineare Blockchain-Unterstruktur der Dokumentenblockchain-Struktur eine Hauptstruktur (104) der Dokumentenblockchain-Struktur bildet,
wobei Blöcke der Hauptstruktur jeweils einem individuellen Dokument der Mehrzahl von Dokumenten zugeordnet sind, einen Anfangsblock einer von einer dokumentenindividuellen Nebenstruktur (106) der Dokumentenblockchain-Struktur umfassten zweiten linearen Blockchain-Unterstruktur (108) bilden, welche dem entsprechenden Dokument zugeordnet ist, und einen Identifikator des entsprechenden Dokuments umfassen,
wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind,
Bereitstellen einer Berechtigungsblockchain-Struktur (130) zur Kontrolle der Zugriffsrechte auf die Blöcke der Dokumentenblockchain-Struktur, wobei die Berechtigungsblockchain-Struktur einen Anfangsblock sowie ein oder mehrere weitere Blöcken umfasst, wobei die weiteren Blöcke jeweils einem weiteren Nutzer ein Zugriffsrecht auf einen der Blöcke der Dokumentenblockchain-Struktur gewähren,
auf eine Zugriffsberechtigungsanfrage nach einem Zugriffsrecht eines zweiten Nutzer (128) auf einen der Blöcke der persönlichen Dokumentenblockchain-Struktur des ersten Nutzers mit ein oder mehreren Attributen eines der Dokumente hin, Prüfen von Zugriffsrechten des zweiten Nutzers für einen Zugriff auf den entsprechenden Block, wobei ein Zugriff auf den entsprechenden Block nur dann gewährt wird, wenn der zweite Nutzer als ein zugriffsberechtigter Nutzer von der Berechtigungsblockchain-Struktur umfasst ist,
auf eine erfolgreiche Prüfung hin, Bestätigen der erfolgreichen Prüfung für den zweiten Nutzer,
auf eine Zugriffsanfrage des zweiten Nutzers unter Bereitstellen der Bestätigung der erfolgreichen Prüfung hin, Gewähren des Zugriffs auf den entsprechenden Block für den zweiten Nutzer.

**2.** Verfahren nach Anspruch 1, wobei die Bestätigung der erfolgreichen Prüfung für den zweiten Nutzer einen ersten Berechtigungstoken umfasst, welches an den zweiten Nutzer gesendet wird und dem zweiten Nutzer den Zugriff auf den Block der persönlichen Dokumentenblockchain-Struktur des ersten Nutzers gewährt,
wobei insbesondere an den zweiten Nutzer eine Mehrzahl von Berechtigungstoken gesendet wird, welche das erste Berechtigungstoken umfassen und dem zweiten Nutzer Zugriff auf eine Mehrzahl von Blöcken der persönlichen Dokumentenblockchain-Struktur des ersten Nutzers erlauben, wobei die Mehrzahl von Blöcken mehrere Attribute von mehreren Dokumenten des ersten Nutzers umfassen.

**3.** Verfahren nach einem der vorangehenden Ansprüche, wobei zumindest eines der Dokumente eine Mehrzahl von Attributgruppen umfasst,

wobei Blöcke der zweiten linearen Blockchain-Unterstruktur der dokumentenindividuellen Nebenstruktur des entsprechenden Dokuments jeweils einer der Attributgruppen zugeordnet sind, einen Anfangsblock einer dritten linearen Blockchain-Unterstruktur (110) der entsprechenden dokumentenindividuellen Nebenstruktur bilden, und einen Identifikator der entsprechenden Attributgruppe umfassen,
wobei den Attributgruppen des Dokuments jeweils ein oder mehrere der Attribute des entsprechenden Dokuments zugeordnet sind, welche über ein oder mehrere Blöcke der dritten linearen Blockchain-Unterstruktur verteilt gespeichert sind,
wobei insbesondere in den Blöcken der dritten linearen Blockchain-Unterstrukturen der dokumentenindividuellen Nebenstruktur des entsprechenden Dokuments jeweils genau ein Attribut gespeichert ist.

**4.** Verfahren nach einem der vorangehenden Ansprüche, wobei zumindest einem der Dokumente ein oder mehrere Ergänzungsdokumente (114) zugeordnet sind, welche das entsprechende Dokument ergänzen, wobei eine vierte lineare Blockchain-Unterstruktur der persönlichen Dokumentenblockchain-Struktur des ersten Nutzers eine dokumentenindividuelle Ergänzungsstruktur (105) des entsprechenden Dokuments bildet, wobei ein erster Block der vierten linearen Blockchain-Unterstruktur mit dem Block der Hauptstruktur, welcher dem entsprechenden Dokument zugeordnet ist, bidirektional verknüpft ist,

wobei ein oder mehrere der Blöcke der Ergänzungsstruktur jeweils einem individuellen Ergänzungsdokument der ein oder mehrere Ergänzungsdokumente zugeordnet sind, einen Anfangsblock einer von einer ergänzungsdokumentenindividuellen Nebenstruktur umfassten fünften linearen Blockchain-Unterstruktur bilden, welche dem entsprechenden Ergänzungsdokument zugeordnet ist, und einen Identifikator des entsprechenden Ergänzungsdokuments umfassen,
wobei jedes der Ergänzungsdokumente jeweils eine Mehrzahl von Attributen umfasst, welche über eine Mehrzahl von Blöcken der dem entsprechenden Ergänzungsdokument zugeordneten ergänzungsdokumentenindividuellen Nebenstruktur verteilt gespeichert sind, und/oder
wobei zumindest einem der Dokumente ein oder mehrere Änderungsdokumente (112) zugeordnet sind, welche Änderungen des entsprechenden Dokuments umfassen, wobei eine sechste lineare Blockchain-Unterstruktur der persönlichen Dokumentenblockchain-Struktur des ersten Nutzers eine dokumentenindividuelle Änderungsstruktur (105) des entsprechenden Dokuments bildet, wobei ein erster Block der sechsten linearen Blockchain-Unterstruktur mit dem Block der Hauptstruktur, welcher dem entsprechenden Dokument zugeordnet ist, bidirektional verknüpft ist,
wobei ein oder mehrere der Blöcke der Änderungsstruktur jeweils einem individuellen Änderungsdokument der ein oder mehrere Änderungsdokumente zugeordnet sind, einen Anfangsblock einer von einer änderungsdokumentenindividuellen Nebenstruktur umfassten siebten linearen Blockchain-Unterstruktur bilden, welche dem entsprechenden Änderungsdokument zugeordnet ist, und einen Identifikator des entsprechenden Änderungsdokuments umfassen,
wobei jedes der Änderungsdokumente jeweils eine Mehrzahl von Attributen umfasst, welche über eine Mehrzahl von Blöcken der dem entsprechenden Änderungsdokument zugeordneten änderungsdokumentenindividuellen Nebenstruktur verteilt gespeichert sind, und/oder
wobei zumindest einem der Dokumente ein oder mehrere ergänzende Attributgruppen zugeordnet sind, wobei ein oder mehrere Blöcke der zweiten linearen Blockchain-Unterstruktur der dokumentenindividuellen Nebenstruktur des entsprechenden Dokuments jeweils einer der ergänzenden Attributgruppen zugeordnet sind, einen Anfangsblock einer achten linearen Blockchain-Unterstruktur der entsprechenden dokumentenindividuellen Nebenstruktur bilden, und einen Identifikator der entsprechenden ergänzenden Attributgruppe umfassen,
wobei den ergänzenden Attributgruppen jeweils ein oder mehrere ergänzende Attribute für das entsprechende Dokument zugeordnet sind, welche über ein oder mehrere Blöcke der achten linearen Blockchain-Unterstruktur verteilt gespeichert sind.

**5.** Verfahren nach einem der vorangehenden Ansprüche, wobei zumindest einem Attribut eines der Dokumente eine Änderung in Form eines geänderten Attributs zugeordnet ist,
wobei das geänderte Attribut in einem zusätzlichen Block der dem entsprechenden Dokument zugeordneten dokumentenindividuellen Nebenstruktur gespeichert ist.

**6.** Verfahren nach einem der vorangehenden Ansprüche, wobei dem ersten Nutzer ein ausschließliches Recht zum Hinzufügen von zusätzlichen Blöcken zu der persönlichen Dokumentenblockchain-Struktur des ersten Nutzers zugeordnet ist,
wobei das Verfahren insbesondere ein Hinzufügen eines zusätzlichen Dokuments zu der persönlichen Dokumentenblockchain-Struktur des ersten Nutzers umfasst, wobei das Hinzufügen des zusätzlichen Dokuments umfasst:

Ausstellen des zusätzlichen Dokuments durch eine berechtigte Ausstellungsinstanz (116), wobei die Attribute des zusätzlichen Dokuments durch die Ausstellungsinstanz mit einem der Ausstellungsinstanz zugeordneten privaten kryptographischen Schlüssel (272, 292, 312) signiert werden,
Zustimmen des ersten Nutzers zu dem Hinzufügen des zusätzlichen Dokuments,
Hinzufügen des zusätzlichen Dokuments in Form eines zusätzlichen Blocks zu der Hauptstruktur, wobei der zusätzliche Block dem zusätzlichen Dokument zugeordnet ist, einen Anfangsblock einer von einer zusätzlichen dokumentenindividuellen Nebenstruktur für die Dokumentenblockchain-Struktur umfassten zusätzlichen zweiten linearen Blockchain-Unterstruktur bildet, welche dem zusätzlichen Dokument zugeordnet ist, und einen Identifikator des zusätzlichen Dokuments umfasst,
wobei die signierten Attribute des zusätzlichen Dokuments über eine Mehrzahl von Blöcken der zusätzlichen dokumentenindividuellen Nebenstruktur verteilt gespeichert werden, und
wobei das Hinzufügen zu der Hauptstruktur ein bidirektionales Verknüpfen des zusätzlichen Blocks mit einem letzten Block der Hauptstruktur umfasst.

7. Verfahren nach einem der vorangehenden Ansprüche, wobei das Verfahren ein Ändern eines Dokuments der persönlichen Dokumentenblockchain-Struktur des ersten Nutzers durch Hinzufügen eines Änderungsdokuments umfasst, wobei das Hinzufügen des Änderungsdokuments umfasst:

Ausstellen des Änderungsdokuments durch eine berechtigte Ausstellungsinstanz, wobei die Attribute des Änderungsdokuments durch die Ausstellungsinstanz mit einem der Ausstellungsinstanz zugeordneten privaten kryptographischen Schlüssel signiert werden,
Zustimmen des ersten Nutzers zu dem Hinzufügen des Änderungsdokuments,
Hinzufügen des Änderungsdokuments in Form eines zusätzlichen Blocks entweder zu dem Block des zu ändernden Dokuments der Hauptstruktur oder zu einer Änderungsstruktur, wobei der zusätzliche Block dem Änderungsdokument zugeordnet ist, einen Anfangsblock einer von einer änderungsdokumentenindividuellen Nebenstruktur für die Dokumentenblockchain-Struktur umfassten zusätzlichen achten linearen Blockchain-Unterstruktur bildet, welche dem Änderungsdokuments zugeordnet ist, und einen Identifikator des Änderungsdokuments umfasst,
wobei die signierten Attribute des Änderungsdokuments über eine Mehrzahl von Blöcken der änderungsdokumentenindividuellen Nebenstruktur verteilt gespeichert werden,
wobei das Hinzufügen des zusätzlichen Blocks zu der Hauptstruktur ein bidirektionales Verknüpfen des zusätzlichen Blocks mit dem Block des zu ändernden Dokuments der Hauptstruktur umfasst oder
wobei das Hinzufügen des zusätzlichen Blocks zu der Änderungsstruktur ein bidirektionales Verknüpfen des zusätzlichen Blocks mit einem letzten Block der Änderungsstruktur umfasst, und/oder
wobei das Verfahren ein Ergänzen eines Dokuments der persönlichen Dokumentenblockchain-Struktur des ersten Nutzers durch Hinzufügen eines Ergänzungsdokuments umfasst, wobei das Hinzufügen des Ergänzungsdokuments umfasst:

Ausstellen des Ergänzungsdokuments durch eine berechtigte Ausstellungsinstanz, wobei die Attribute des Ergänzungsdokuments durch die Ausstellungsinstanz mit einem der Ausstellungsinstanz zugeordneten privaten kryptographischen Schlüssel signiert werden,
Zustimmen des ersten Nutzers zu dem Hinzufügen des Ergänzungsdokuments,
Hinzufügen des Ergänzungsdokuments in Form eines zusätzlichen Blocks entweder zu dem Block des zu ergänzenden Dokuments der Hauptstruktur oder einer Ergänzungsstruktur, wobei der zusätzliche Block dem Ergänzungsdokument zugeordnet ist, einen Anfangsblock einer von einer ergänzungsdokumentenindividuellen Nebenstruktur für die Dokumentenblockchain-Struktur umfassten zusätzlichen neunten linearen Blockchain-Unterstruktur bildet, welche dem Ergänzungsdokuments zugeordnet ist, und einen Identifikator des Ergänzungsdokuments umfasst,
wobei die signierten Attribute des Ergänzungsdokuments über eine Mehrzahl von Blöcken der Ergänzungsdokumentenindividuellen Nebenstruktur verteilt gespeichert werden, und
wobei das Hinzufügen des zusätzlichen Blocks zu der Hauptstruktur ein bidirektionales Verknüpfen des zusätzlichen Blocks mit dem Block des zu ergänzenden Dokuments der Hauptstruktur umfasst oder
wobei das Hinzufügen des zusätzlichen Blocks zu der Ergänzungsstruktur ein bidirektionales Verknüpfen des zusätzlichen Blocks mit einem letzten Block der Ergänzungsstruktur umfasst, und/oder
wobei das Verfahren ein Ergänzen eines der Dokumente um eine ergänzende Attributgruppen umfasst, wobei das Ergänzen umfasst:

Ausstellen der ergänzenden Attributgruppe durch eine berechtigte Ausstellungsinstanz, wobei die Attribute der ergänzenden Attributgruppe durch die Ausstellungsinstanz mit einem der Ausstellungsinstanz zugeordneten privaten kryptographischen Schlüssel signiert werden,
Zustimmen des ersten Nutzers zu dem Hinzufügen der ergänzenden Attributgruppe,
Hinzufügen der ergänzenden Attributgruppe in Form eines zusätzlichen Blocks der zweiten linearen Blockchain-Unterstruktur der dokumentenindividuellen Nebenstruktur des zu ergänzenden Dokuments, wobei der zusätzliche Block der ergänzenden Attributgruppe zugeordnet ist, einen Anfangsblock einer zehnten linearen Blockchain-Unterstruktur der entsprechenden dokumentenindividuellen Nebenstruktur bildet, und einen Identifikator der entsprechenden ergänzenden Attributgruppe umfasst,
wobei die signierten Attribute über ein oder mehrere Blöcke der zehnten linearen Blockchain-Unterstruktur verteilt gespeichert sind,
wobei das Hinzufügen des zusätzlichen Blocks ein bidirektionales Verknüpfen des zusätzlichen Blocks der zweiten linearen Blockchain-Unterstruktur der dokumentenindividuellen Nebenstruktur des zu ergänzenden Dokuments mit einem letzten Block der zweiten linearen Blockchain-Unterstruktur umfasst, und/oder
wobei das Verfahren ein Ändern eines Attributs eines Dokuments der persönlichen Dokumentenblockchain-Struktur des ersten Nutzers umfasst, wobei das Ändern umfasst:

Ausstellen eines geänderten Attributs durch eine berechtigte Ausstellungsinstanz, wobei das geänderte Attribut durch die Ausstellungsinstanz mit einem der Ausstellungsinstanz zugeordneten privaten kryptographischen Schlüssel signiert wird,
Zustimmen des ersten Nutzers zu dem Hinzufügen des Attributs,
Hinzufügen des Attributs in Form eines zusätzlichen Blocks der dem entsprechenden Dokument zugeordneten dokumentenindividuellen Nebenstruktur, welcher das geänderte Attribut umfasst,
wobei das Hinzufügen ein bidirektionales Verknüpfen des zusätzlichen Blocks mit einem Block der dem entsprechenden Dokument zugeordneten dokumentenindividuellen Nebenstruktur umfasst.

**8.** Verfahren nach einem der vorangehenden Ansprüche, wobei die Hauptstruktur einen Anfangsblock umfasst, welcher einem Anfangsdokument zugeordnet ist, dessen Ausstellung eine Voraussetzung für die Ausstellung der weiteren Dokumente der Mehrzahl von Dokumenten ist, welchen die nachfolgenden Blöcke der Hauptstruktur zugeordnet sind, und/oder

wobei die Möglichkeit die persönliche Dokumentenblockchain-Struktur des ersten Nutzers zu erweitern mit einer Erweiterung der Hauptstruktur um einen Endblock beendet wird, welcher einem Enddokument zugeordnet ist, dessen Ausstellung eine Ausstellung weiterer Dokumente des ersten Nutzers für die Dokumentenblockchain-Struktur ausschließt, und/oder
wobei die Blöcke der persönlichen Dokumentenblockchain-Struktur des ersten Nutzers auf eine Mehrzahl von räumlich getrennten Datenbanken verteilt gespeichert sind, und/oder
wobei eine Mehrzahl von Berechtigungsblockchain-Strukturen bereitgestellt wird, welche jeweils einem der Blöcke der Hauptstruktur zugeordnet sind, und/oder
wobei eine Mehrzahl von Berechtigungsblockchain-Strukturen bereitgestellt wird, welche jeweils einem der Blöcke der Nebenstrukturen zugeordnet sind, und/ oder
wobei die Blöcke der Berechtigungsblockchain-Struktur jeweils bidirektional miteinander verknüpft sind.

**9.** Verfahren nach einem der vorangehenden Ansprüche, wobei der Anfangsblock der Berechtigungsblockchain-Struktur ein Zugriffs-Zertifikat (132) umfasst, welches ein Zugriffsrecht gewährt, wobei die weiteren Blöcke der Berechtigungsblockchain-Struktur jeweils ein Nutzer-Zertifikat (134) des zweiten Nutzers umfasst, dem das entsprechende Zugriffsrecht des Zugriffs-Zertifikat auf den entsprechenden Block der persönlichen Dokumentenblockchain-Struktur des ersten Nutzers gewährt wird,
wobei insbesondere das Zugriffs-Zertifikat ein oder mehrere der folgenden Zugriffs-Zertifikattypen umfasst:

- ein Lesezugriffs-Zertifikat, welches einem Nutzer einen lesenden Zugriff auf den Inhalt eines Blocks ermöglicht;
- ein Indexzugriffs-Zertifikat, welches einem Nutzer Kenntnis der Existenz des Blocks in der persönlichen Dokumentenblockchain-Struktur des ersten Nutzers und einen lesenden Zugriff auf Metadaten des Blocks ermöglicht, wobei die Metadaten Prüfwerte der bidirektionalen Verbindungen des entsprechenden Blocks mit Nachbarblöcken in der Dokumentenblockchain-Struktur umfassen.

**10.** Verfahren nach einem der vorangehenden Ansprüche, wobei aufeinanderfolgende bidirektional miteinander verknüpfte Blöcken beide jeweils einen Prüfwert umfassen, wobei der Prüfwert eines ersten der beiden Blöcke zumindest von den in dem zweiten der beiden Blöcke gespeicherten Daten abhängt und wobei der Prüfwert des zweiten der beiden Blöcke zumindest von den in dem ersten der beiden Blöcke gespeicherten Daten abhängt,
wobei insbesondere auf eine Freigabe hin Metadaten (250) an den zweiten Nutzer gesendet werden, welche einen Speicherort des Blocks der der persönlichen Dokumentenblockchain-Struktur des ersten Nutzers auf der Mehrzahl von räumlich getrennten Datenbanken identifizieren,

**11.** Verfahren nach einem der vorangehenden Ansprüche, wobei das Verfahren ferner ein Gewähren eines Zugriffs für einen weiteren zweiten Nutzer auf einen der Blöcke der persönlichen Dokumentenblockchain-Struktur des ersten Nutzers umfasst, wobei das Gewähren ein Hinzufügen eines zusätzlichen Blocks zu einer Berechtigungsblockchain-Struktur, welche dem entsprechenden Block der persönlichen Dokumentenblockchain-Struktur des ersten Nutzers zugeordnet ist, wobei der zusätzliche Block einen Identifikator eines weiteren zweiten Nutzers umfasst und mit einem letzten Block der Berechtigungsblockchain-Struktur bidirektional verknüpft wird,
wobei insbesondere eine Liste möglicher zweiter Nutzer bereitgestellt und der Identifikator des entsprechenden weiteren zweiten Nutzers aus der Liste ausgewählt wird.

**12.** Verfahren nach einem der vorangehenden Ansprüchen, wobei eine Mehrzahl von nichtlinearen persönlichen Dokumentenblockchain-Strukturen des ersten Nutzers bereitgestellt werden, welche jeweils eine Hauptstruktur umfassen und über ein oder mehrere bidirektionale Verknüpfungen zwischen Blöcken der Hauptstruktur miteinander verknüpft sind.

**13.** Elektronisches Datenspeichersystem (122) zum Durchführen eines kryptographischen Verfahrens zur selektiven Zugriffsteuerung auf Attribute einer Mehrzahl von Dokumenten (102), welche einem ersten Nutzer (120) zugeordnet sind, wobei ein oder mehrere der Attribute in einem Speicher (266, 286, 306) des elektronischen Datenspeichersystemen manipulationssicher gespeichert sind, wobei das Datenspeichersystem eine Kommunikationsschnittstelle (274, 294, 314) zum Kommunizieren über ein Netzwerk (320) umfasst, wobei der Speicher des Datenspeichersystems einen Block (268, 288, 308) einer nichtlinearen persönlichen Dokumentenblockchain-Struktur (100) des ersten Nutzers umfasst, in welchem zumindest eines der Attribute gespeichert,

wobei die nichtlinearen persönlichen Dokumentenblockchain-Struktur dem ersten Nutzer zugeordnet ist und eine Mehrzahl von linearen Blockchain-Unterstrukturen (104, 108, 109, 110, 600) umfasst, wobei jede der linearen Blockchain-Unterstrukturen jeweils eine Mehrzahl von bidirektional miteinander verknüpften Blöcken umfasst,
wobei eine erste lineare Blockchain-Unterstruktur der Dokumentenblockchain-Struktur eine Hauptstruktur (104) der Dokumentenblockchain-Struktur bildet,
wobei Blöcke der Hauptstruktur jeweils einem individuellen Dokument der Mehrzahl von Dokumenten zugeordnet sind, einen Anfangsblock einer von einer dokumentenindividuellen Nebenstruktur (106) der Dokumentenblockchain-Struktur umfassten zweiten linearen Blockchain-Unterstruktur (108) bilden, welche dem entsprechenden Dokument zugeordnet ist, und einen Identifikator des entsprechenden Dokuments umfassen,
wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind,
wobei das Datenspeichersystem ferner einen Prozessor (262, 282, 302) umfasst und in dem Speicher ferner maschinenlesbare Instruktionen (264, 284, 304) gespeichert sind, wobei ein Ausführen der maschinenlesbaren Instruktionen durch den Prozessor das Datenspeichersystem zu Folgendem veranlasst:

Empfangen einer Zugriffsanfrage eines zweiten Nutzers (128) nach dem Block mit dem zumindest einen Attribut mittels der Kommunikationsschnittstelle über das Netzwerk von einem anfragenden Telekommunikationssystem (220) des zweiten Nutzers,
Empfang einer Bestätigung einer erfolgreichen Prüfung des Zugriffsrechts des zweiten Nutzers für den Zugriff auf den Block mit dem zumindest einen Attribut bestätigt, wobei die Bestätigung voraussetzt, dass der zweite Nutzer als ein zugriffsberechtigter Nutzer von einer Berechtigungsblockchain-Struktur (130) für Zugriffe auf den entsprechenden Block umfasst ist,
auf die Bestätigung hin, Senden des Blocks mit dem zumindest einen Attribut mittels der Kommunikationsschnittstelle über das Netzwerk an das anfragende Telekommunikationssystem des zweiten Nutzers.

**14.** Elektronisches Berechtigungsmanagementsystem (124) zum Durchführen eines kryptographischen Verfahrens zur selektiven Zugriffsteuerung auf Attribute einer Mehrzahl von Dokumenten (102), welche einem ersten Nutzer (120) zugeordnet sind, wobei die Attribute in ein oder mehreren Speichern (266, 286, 306) von ein oder mehreren elektronischen Datenspeichersystemen (122) manipulationssicher gespeichert sind, wobei das Berechtigungsmanagementsystem eine Kommunikationsschnittstelle (258) zum Kommunizieren über ein Netzwerk (320) umfasst, wobei das Berechtigungsmanagementsystem einen Speicher (246) umfasst, in welchem eine Berechtigungsblockchain-Struktur (130) zur Kontrolle der Zugriffsrechte auf einen Block einer nichtlinearen persönlichen Dokumentenblockchain-Struktur (100) des ersten Nutzers mit dem zumindest einen Attribut gespeichert ist, wobei die Berechtigungsblockchain-Struktur einen Anfangsblock sowie ein oder mehrere weitere Blöcken umfasst, wobei die weiteren Blöcke jeweils einem weiteren Nutzer ein Zugriffsrecht auf einen der Blöcke der Dokumentenblockchain-Struktur gewähren,

wobei die nichtlinearen persönlichen Dokumentenblockchain-Struktur dem ersten Nutzer zugeordnet ist und eine Mehrzahl von linearen Blockchain-Unterstrukturen (104, 108, 109, 110, 600) umfasst, wobei jede der linearen Blockchain-Unterstrukturen jeweils eine Mehrzahl von bidirektional miteinander verknüpften Blöcken umfasst,
wobei eine erste lineare Blockchain-Unterstruktur der Dokumentenblockchain-Struktur eine Hauptstruktur (104) der Dokumentenblockchain-Struktur bildet,
wobei Blöcke der Hauptstruktur jeweils einem individuellen Dokument der Mehrzahl von Dokumenten zugeordnet sind, einen Anfangsblock einer von einer dokumentenindividuellen Nebenstruktur (106) der Dokumentenblockchain-Struktur umfassten zweiten linearen Blockchain-Unterstruktur (108) bilden, welche dem entsprechenden Dokument zugeordnet ist, und einen Identifikator des entsprechenden Dokuments umfassen,
wobei jedes der Dokumente jeweils eine Mehrzahl von Attributen umfasst, welche über eine Mehrzahl von Blöcken der dem entsprechenden Dokument zugeordneten dokumentenindividuellen Nebenstruktur verteilt gespeichert sind,
wobei das Berechtigungsmanagementsystem ferner einen Prozessor (242) umfasst und in dem Speicher ferner maschinenlesbare Instruktionen (244) gespeichert sind, wobei ein Ausführen der maschinenlesbaren Instruktionen durch den Prozessor das Berechtigungsmanagementsystem zu Folgendem veranlasst:

Empfangen einer Zugriffsberechtigungsanfrage nach einem Zugriffsrecht eines zweiten Nutzers auf den Block mit dem zumindest einen Attribut mittels der Kommunikationsschnittstelle über das Netzwerk von einem anfragenden Telekommunikationssystem (220),
Prüfen, ob der zweite Nutzer als ein zugriffsberechtigter Nutzer von einer Berechtigungsblockchain-Struktur für Zugriffe auf den entsprechenden Block umfasst ist,
auf eine erfolgreiche Prüfung hin, Bestätigen der erfolgreichen Prüfung des Zugriffsrechts des zweiten Nutzers für den Zugriff auf den Block mit dem zumindest einen Attribut, und Senden der Bestätigung mittels der Kommunikationsschnittstelle über das Netzwerk an das anfragende Telekommunikationssystem.

**15.** Elektronische Datenverarbeitungssystem (330) zum Durchführen eines kryptographischen Verfahrens zur selektiven Zugriffsteuerung auf Attribute einer Mehrzahl von Dokumenten (102), welche einem ersten Nutzer (120) zugeordnet sind, wobei die Attribute in ein oder mehreren Speichern (266, 286, 306) manipulationssicher gespeichert sind, wobei das elektronische Datenverarbeitungssystem ein oder mehrere elektronische Datenspeichersysteme (122) nach Anspruch 13 und ein elektronisches Berechtigungsmanagementsystem (124) nach Anspruch 14 umfasst.

## Claims

**1.** A cryptographic method for carrying out selective access control to attributes of a plurality of documents (102) assigned to a first user, the attributes being stored in a tamper-proof manner in one or more memories (266, 286, 306), the method comprising:

providing a non-linear personal document blockchain structure (100), which is assigned to the first user and comprises a plurality of linear blockchain substructures (104, 108, 109, 110, 600), each of the linear blockchain substructures comprising a plurality of blocks that are bidirectionally linked to one another,
a first linear blockchain substructure of the document blockchain structure forming a primary structure (104) of the document blockchain structure,
blocks of the primary structure in each case being assigned to an individual document of the plurality of documents, forming a starting block of a second linear blockchain substructure (108), which is comprised by a document-specific secondary structure (106) of the document blockchain structure and assigned to the corresponding document, and comprising an identifier of the corresponding document,
each of the documents comprising a plurality of attributes, which are stored distributed across a plurality of blocks of the document-specific secondary structure assigned to the corresponding document;

providing an authorization blockchain structure (130) for monitoring the access rights to the blocks of the document blockchain structure, the authorization blockchain structure comprising a starting block and one or more further blocks, the further blocks in each case granting an access right to a further user to one of the blocks of the document blockchain structure;

in response to an access authorization request for an access right of a second user (128) to one of the blocks of the personal document blockchain structure of the first user comprising one or more attributes of one of the documents, verifying access rights of the second user for access to the corresponding block, access to the corresponding block only being granted when the second user is comprised by the authorization blockchain structure as a user who has been granted access rights;

in response to a successful verification, confirming the successful verification for the second user; and

in response to an access request by the second user while providing the confirmation of the successful verification, granting access to the corresponding block to the second user.

**2.** The method according to claim 1, wherein the confirmation of the successful verification for the second user comprises a first authorization token, which is transmitted to the second user and grants the second user access to the block of the personal document blockchain structure of the first user,

a plurality of authorization tokens being in particular transmitted to the second user, which comprise the first authorization token and allow the second user to access a plurality of blocks of the personal document blockchain structure of the first user, the plurality of blocks comprising a plurality of attributes of a plurality of documents of the first user.

**3.** A method according to any one of the preceding claims, wherein at least one of the documents comprises a plurality of attribute groups,

blocks of the second linear blockchain substructure of the document-specific secondary structure of the corresponding document in each case being assigned to one of the attribute groups, forming a starting block of a third linear blockchain substructure (110) of the corresponding document-specific secondary structure, and comprising an identifier of the corresponding attribute group,

in each case one or more of the attributes of the corresponding document, which are stored distributed across one or more blocks of the third linear blockchain substructure, being assigned to the attribute groups of the document, and

in each case exactly one attribute being in particular stored in the blocks of the third linear blockchain substructures of the document-specific secondary structure of the corresponding document.

**4.** A method according to any one of the preceding claims, wherein one or more supplementary documents (114) supplementing the corresponding document are assigned to at least one of the documents, a fourth linear blockchain substructure of the personal document blockchain structure of the first user forming a document-specific supplementary structure (105) of the corresponding document, and a first block of the fourth linear blockchain substructure being bidirectionally linked to the block of the primary structure which is assigned to the corresponding document,

one or more of the blocks of the supplementary structure being in each case assigned to an individual supplementary document of the one or more supplementary documents, forming a starting block of a fifth linear blockchain substructure, which is comprised by a supplementary document-specific secondary structure and assigned to the corresponding supplementary document, and comprising an identifier of the corresponding supplementary document,

each of the supplementary documents comprising a plurality of attributes, which are stored distributed across a plurality of blocks of the supplementary document-specific secondary structure assigned to the corresponding supplementary document, and/or

one or more change documents (112) that include changes of the corresponding document being assigned to at least one of the documents, a sixth linear blockchain substructure of the personal document blockchain structure of the first user forming a document-specific change structure (105) of the corresponding document, and a first block of the sixth linear blockchain substructure being bidirectionally linked to the block of the primary structure which is assigned to the corresponding document,

one or more of the blocks of the change structure in each case being assigned to an individual change document of the one or more change documents, forming a starting block of a seventh linear blockchain substructure, which is comprised by a change document-specific secondary structure and assigned to the corresponding change document, and comprising an identifier of the corresponding change document,

each of the change documents comprising a plurality of attributes, which are stored distributed across a plurality of blocks of the change document-specific secondary structure assigned to the corresponding change document, and/or
one or more supplementary attribute groups being assigned to at least one of the documents, one or more blocks of the second linear blockchain substructure of the document-specific secondary structure of the corresponding document in each case being assigned to one of the supplementary attribute groups, forming a starting block of the eighth linear blockchain substructure of the corresponding document-specific secondary structure, and comprising an identifier of the corresponding supplementary attribute group, and
in each case one or more supplementary attributes for the corresponding document, which are stored distributed across one or more blocks of the eighth linear blockchain substructure, being assigned to the supplementary attribute groups.

**5.** A method according to any one of the preceding claims, wherein a change in the form of a changed attribute is assigned to at least one attribute of one of the documents,
the changed attribute being stored in an additional block of the document-specific secondary structure assigned to the corresponding document.

**6.** A method according to any one of the preceding claims, wherein an exclusive right to add additional blocks to the personal document blockchain structure of the first user is assigned to the first user,
the method in particular comprising adding an additional document to the personal document blockchain structure of the first user, the addition of the additional document comprising:

issuing the additional document by an authorized issuing authority (116), the attributes of the additional document being signed by the issuing authority with a private cryptographic key (272, 292, 312) assigned to the issuing authority;
the first user agreeing to the addition of the additional document;
adding the additional document in the form of an additional block to the primary structure, the additional block being assigned to the additional document, forming a starting block of an additional second linear blockchain substructure, which is comprised by an additional document-specific secondary structure for the document blockchain structure and assigned to the additional document, and comprising an identifier of the additional document,
the signed attributes of the additional document being stored distributed across a plurality of blocks of the additional document-specific secondary structure, and
the addition to the primary structure comprising bidirectionally linking the additional block to the last block of the primary structure.

**7.** A method according to any one of the preceding claims, wherein the method comprises changing a document of the personal document blockchain structure of the first user by adding a change document, the addition of the change document comprising:

issuing the change document by an authorized issuing authority, the attributes of the change document being signed by the issuing authority with a private cryptographic key assigned to the issuing authority;
the first user agreeing to the addition of the change document;
adding the change document in the form of an additional block either to the block of the document of the primary structure to be changed or to a change structure, the additional block being assigned to the change document, forming a starting block of an additional eighth linear blockchain substructure, which is comprised by a change document-specific secondary structure for the document blockchain structure and assigned to the change document, and comprising an identifier of the change document,
the signed attributes of the change document being stored distributed across a plurality of blocks of the change document-specific secondary structure,
the addition of the additional block to the primary structure comprising bidirectionally linking the additional block to the block of the document of the primary structure to be changed, or
the addition of the additional block to the change structure comprising bidirectionally linking the additional block to the last block of the change structure, and/or
wherein the method comprises supplementing a document of the personal document blockchain structure of the first user by adding a supplementary document, the addition of the supplementary document comprising:

issuing the supplementary document by an authorized issuing authority, the attributes of the supplementary document being signed by the issuing authority with a private cryptographic key assigned to the issuing authority;
the first user agreeing to the addition of the supplementary document;
adding the supplementary document in the form of an additional block either to the block of the document of the primary structure to be supplemented or a supplementary structure, the additional block being assigned to the supplementary document, forming a starting block of an additional ninth linear blockchain substructure, which is comprised by a supplementary document-specific secondary structure for the document blockchain structure and assigned to the supplementary document, and comprising an identifier of the supplementary document,
the signed attributes of the supplementary document being stored distributed across a plurality of blocks of the supplementary document-specific secondary structure, and
the addition of the additional block to the primary structure comprising bidirectionally linking the additional block to the block of the document of the primary structure to be supplemented, or
the addition of the additional block to the supplementary structure comprising bidirectionally linking the additional block to a last block of the supplementary structure, and/or
wherein the method comprises supplementing one of the documents with a supplementary attribute group, the supplementation comprising:

issuing the supplementary attribute group by an authorized issuing authority, the attributes of the supplementary attribute group being signed by the issuing authority with a private cryptographic key assigned to the issuing authority;
the first user agreeing to the addition of the supplementary attribute group;
adding the supplementary attribute group in the form of an additional block of the second linear blockchain substructure of the document-specific secondary structure of the document to be supplemented, the additional block being assigned to the supplementary attribute group, forming a starting block of the tenth linear blockchain substructure of the corresponding document-specific secondary structure, and comprising an identifier of the corresponding supplementary attribute group,
the signed attributes being stored distributed across one or more blocks of the tenth linear blockchain substructure,
the addition of the additional block comprising bidirectionally linking the additional block of the second linear blockchain substructure of the document-specific secondary structure of the document to be supplemented to a last block of the second linear blockchain substructure, and/or
wherein the method comprises changing an attribute of a document of the personal document blockchain structure of the first user, the change comprising:

issuing a changed attribute by an authorized issuing authority, the changed attribute being signed by the issuing authority with a private cryptographic key assigned to the issuing authority;
the first user agreeing to the addition of the attribute;
adding the attribute in the form of an additional block of the document-specific secondary structure assigned to the corresponding document, the block comprising the changed attribute,
the addition comprising bidirectionally linking the additional block to a block of the document-specific secondary structure assigned to the corresponding document.

**8.** A method according to any one of the preceding claims, wherein the primary structure comprises a starting block assigned to a starting document, the issue of which is a prerequisite for issuing the further documents of the plurality of documents to which the subsequent blocks of the primary structure are assigned, and/or

wherein the option of expanding the personal document blockchain structure of the first user is ended with an expansion of the primary structure by an ending block assigned to an ending document, the issue of which precludes further documents of the first user for the document blockchain structure from being issued, and/or
wherein the blocks of the personal document blockchain structure of the first user are stored distributed among a plurality of spatially separated databases, and/or
wherein a plurality of authorization blockchain structures is provided, which are each assigned to one of the blocks of the primary structure, and/or
wherein a plurality of authorization blockchain structures is provided, which are each assigned to one of the blocks of the secondary structures, and/or
wherein the blocks of the authorization blockchain structure are in each case bidirectionally linked to one another.

**9.** A method according to any one of the preceding claims, wherein the starting block of the authorization blockchain structure comprises an access certificate (132) granting an access right, the further blocks of the authorization blockchain structure in each case comprising a user certificate (134) of the second user who is granted the corresponding access right of the access certificate to the corresponding block of the personal document blockchain structure of the first user,
the access certificate in particular encompassing one or more of the following access certificate types:

• a read access certificate, which gives a user read access to the content of a block; and
• an index access certificate, which gives a user knowledge about the existence of the block in the personal document blockchain structure of the first user and read access to metadata of the block, the metadata comprising check values of the bidirectional connections of the corresponding block to neighboring blocks of the document blockchain structure.

**10.** A method according to any one of the preceding claims, wherein consecutive blocks that are bidirectionally linked to one another in each case comprise a check value, the check value of a first of the two blocks depending at least on the data stored in the second of the two blocks, and the check value of the second of the two blocks depending at least on the data stored in the first of the two blocks,
in particular in response to an approval, metadata (250) which identifies a memory location of the block of the personal document blockchain structure of the first user on the plurality of spatially separated databases being transmitted to the second user.

**11.** A method according to any one of the preceding claims, wherein the method furthermore comprises granting access to a further second user to one of the blocks of the personal document blockchain structure of the first user, the granting comprising adding an additional block to an authorization blockchain structure, which is assigned to the corresponding block of the personal document blockchain structure of the first user, and the additional block comprising an identifier of a further second user and being bidirectionally linked to a last block of the authorization blockchain structure,
in particular a list of possible second users being provided, and the identifier of the corresponding further second user being selected from the list.

**12.** A method according to any one of the preceding claims, wherein a plurality of non-linear personal document blockchain structures of the first user is provided, which in each case comprise a primary structure and are linked to one another via one or more bidirectional links between blocks of the primary structure.

**13.** An electronic data storage system (122) for carrying out a cryptographic method for selective access control to attributes of a plurality of documents (102) assigned to a first user (120), one or more of the attributes being stored in a tamper-proof manner in a memory (266, 286, 306) of the electronic data storage system, the data storage system comprising a communication interface (274, 294, 314) for communicating via a network (320), the memory of the data storage system comprising a block (268, 288, 308) of a non-linear personal document blockchain structure (100) of the first user in which at least one of the attributes is stored,

the non-linear personal document blockchain structure being assigned to the first user and comprising a plurality of linear blockchain substructures (104, 108, 109, 110, 600), each of the linear blockchain substructures comprising a plurality of blocks that are bidirectionally linked to one another,
a first linear blockchain substructure of the document blockchain structure forming a primary structure (104) of the document blockchain structure,
blocks of the primary structure in each case being assigned to an individual document of the plurality of documents, forming a starting block of a second linear blockchain substructure (108), which is comprised by a document-specific secondary structure (106) of the document blockchain structure and assigned to the corresponding document, and comprising an identifier of the corresponding document,
each of the documents comprising a plurality of attributes, which are stored distributed across a plurality of blocks of the document-specific secondary structure assigned to the corresponding document;
the data storage system furthermore comprising a processor (262, 282, 302), and furthermore machine-readable instructions (264, 284, 304) being stored in the memory, an execution of the machine-readable instructions by the processor prompting the data storage system to:

receive an access request of a second user (128) for the block comprising the at least one attribute by means of the communication interface via the network from a requesting telecommunications system (220) of the second user;

receive a confirmation of a successful verification of the access right of the second user for access to the block comprising the at least one attribute, the confirmation requiring that the second user is comprised by an authorization blockchain structure (130) as a user who has been granted access rights to access the corresponding block; and
in response to the confirmation, to transmit the block comprising the at least one attribute by means of the communication interface via the network to the requesting telecommunications system of the second user.

**14.** An electronic authorization management system (124) for carrying out a cryptographic method for selective access control to attributes of a plurality of documents (102) assigned to a first user (120), the attributes being stored in a tamper-proof manner in one or more memories (266, 286, 306) of one or more electronic data storage systems (122), the authorization management system comprising a communication interface (258) for communicating via a network (320), the authorization management system comprising a memory (246) in which an authorization blockchain structure (130) for monitoring the access rights to a block of a non-linear personal document blockchain structure (100) of the first user comprising the at least one attribute is stored, the authorization blockchain structure comprising a starting block and one or more further blocks, the further blocks in each case granting an access right to a further user to one of the blocks of the document blockchain structure,

the non-linear personal document blockchain structure being assigned to the first user and comprising a plurality of linear blockchain substructures (104, 108, 109, 110, 600), each of the linear blockchain substructures comprising a plurality of blocks that are bidirectionally linked to one another,
a first linear blockchain substructure of the document blockchain structure forming a primary structure (104) of the document blockchain structure,
blocks of the primary structure in each case being assigned to an individual document of the plurality of documents, forming a starting block of a second linear blockchain substructure (108), which is comprised by a document-specific secondary structure (106) of the document blockchain structure and assigned to the corresponding document, and comprising an identifier of the corresponding document,
each of the documents comprising a plurality of attributes, which are stored distributed across a plurality of blocks of the document-specific secondary structure assigned to the corresponding document;
the authorization management system furthermore comprising a processor (242), and furthermore machine-readable instructions (244) being stored in the memory, an execution of the machine-readable instructions by the processor prompting the authorization management system to:

receive an access authorization request for an access right of a second user to the block comprising the at least one attribute by means of the communication interface via the network from a requesting telecommunications system (220);
verify whether the second user is comprised by an authorization blockchain structure as a user who has been granted access to access the corresponding block; and
in response to a successful verification, confirm the successful verification of the access right of the second user for access to the block comprising the at least one attribute, and transmit the confirmation by means of the communication interface via the network to the requesting telecommunications system.

**15.** An electronic data processing system (330) for carrying out a cryptographic method for selective access control to attributes of a plurality of documents (102) assigned to a first user (120), the attributes being stored in a tamper-proof manner in one or more memories (266, 286, 306), the electronic data processing system comprising one or more electronic data storage systems (122) according to claim 13 and an electronic authorization management system (124) according to claim 14.

## Revendications

**1.** Procédé cryptographique d'exécution d'une commande d'accès sélective à des attributs d'une multiplicité de documents (102), lesquels sont associés à un premier utilisateur, où les attributs sont enregistrés protégés contre des manipulations dans une ou plusieurs mémoires (266, 286, 306), le procédé comprenant :

la préparation d'une structure de chaine de blocs de documents (100) personnelle non linéaire, laquelle est associée au premier utilisateur et comprend une multiplicité de sous-structures de chaine de blocs (104, 108, 109, 110, 600) linéaires, où chacune des sous-structures de chaine de blocs linéaire comprend respectivement une multiplicité de blocs combinés entre eux de manière bidirectionnelle,

dans lequel une première sous-structure de chaine de blocs linéaire de la structure de chaine de blocs de documents forme une structure principale (104) de la structure de chaine de blocs de documents,
dans lequel des blocs de la structure principale sont associés respectivement à un document individuel de la multiplicité des documents, forment un bloc de départ d'une deuxième sous-structure de chaine de blocs (108) linéaire comprise par une structure secondaire (106) individuelle pour le document de la structure de chaine de blocs de documents, laquelle est associée au document correspondant, et comprennent un identificateur du document correspondant,
dans lequel chacun des documents comprend respectivement une multiplicité d'attributs, lesquels sont enregistrés distribués par le biais d'une multiplicité de blocs de la structure secondaire individuelle pour le document associée au document correspondant,
la préparation d'une structure de chaine de blocs d'autorisation (130) pour la commande des droits d'accès aux blocs de la structure de chaine de blocs de documents, où la structure de chaine de blocs d'autorisation comprend un bloc de départ ainsi qu'un ou plusieurs autres blocs, où les autres blocs accordent respectivement à un autre utilisateur un droit d'accès à un des blocs de la structure de chaine de blocs de documents,
suite à une demande d'autorisation d'accès après un droit d'accès d'un deuxième utilisateur (128) à l'un des blocs de la structure de chaîne de blocs de documents personnelle du premier utilisateur avec un ou plusieurs attributs d'un des documents, la vérification de droits d'accès du deuxième utilisateur pour un accès au bloc respectif, où un accès au bloc correspondant n'est accordé que si le deuxième utilisateur est compris comme étant un utilisateur autorisé à l'accès par la structure de chaine de blocs d'autorisation,
suite à la vérification réussie, la confirmation de la vérification réussie par le deuxième utilisateur,
suite à une demande d'accès du deuxième utilisateur moyennant la production de la confirmation de la vérification réussie, l'accord pour l'accès au bloc correspondant pour le deuxième utilisateur.

**2.** Procédé selon la revendication 1, dans lequel la confirmation de la vérification réussie pour le deuxième utilisateur comprend un premier jeton d'autorisation, lequel est envoyé au deuxième utilisateur et accorde au deuxième utilisateur l'accès au bloc de la structure de chaine de blocs de documents personnelle du premier utilisateur,
dans lequel, en particulier, une multiplicité de jetons d'autorisation est envoyée au deuxième utilisateur, lesquels comprennent le premier jeton d'autorisation et permettent au deuxième utilisateur l'accès à une multiplicité de blocs de la structure de chaine de blocs de documents personnelle du premier utilisateur, où la multiplicité de blocs comprend plusieurs attributs de plusieurs documents du premier utilisateur.

**3.** Procédé selon l'une des revendications précédentes dans lequel au moins un des documents comprend une multiplicité de groupes d'attributs,

dans lequel des blocs de la deuxième sous-structure de chaine de blocs linéaire de la structure secondaire individuelle pour le document du document correspondant sont respectivement associés à un des groupes d'attributs, forment un bloc de départ d'une troisième sous-structure (110) de chaine de bloc linéaire de la structure secondaire individuelle pour le document correspondant, et comprennent un identificateur du groupe d'attributs correspondant,
dans lequel respectivement un ou plusieurs des attributs du document correspondant sont associés aux groupes d'attributs du document, lesquels sont enregistrés distribués sur un ou plusieurs blocs de la troisième sous-structure de chaine de blocs linéaire,
dans lequel, en particulier, exactement un attribut est enregistré dans les blocs des troisièmes sous-structures de chaine de blocs linéaires de la structure secondaire individuelle pour le document du document correspondant.

**4.** Procédé selon l'une des revendications précédentes, dans lequel un ou plusieurs documents complémentaires (114) sont associés à au moins un des documents, lesquels complètent le document correspondant, où une quatrième sous-structure de chaine de blocs linéaire de la structure de chaine de blocs de documents personnelle du premier utilisateur forme une structure complémentaire (105) individuelle pour le document du document correspondant, où un premier bloc de la quatrième sous-structure de chaine de blocs linéaire est combiné de manière bidirectionnelle avec le bloc de la structure principale, lequel est associé au document correspondant,

dans lequel un ou plusieurs des blocs de la structure complémentaire sont respectivement associés à un document complémentaire individuel, forment un bloc de départ d'une cinquième sous-structure de chaine de blocs linéaire comprise par une structure secondaire individuelle pour le document complémentaire, laquelle est associée au document complémentaire correspondant, et comprennent un identificateur du document complémentaire correspondant,

dans lequel chacun des documents complémentaires comprend respectivement une multiplicité d'attributs, lesquels sont enregistrés distribués par le biais d'une multiplicité de blocs de la structure secondaire individuelle pour le document complémentaire associée au document complémentaire correspondant, et/ou

dans lequel un ou plusieurs documents de modification (112) sont associés à au moins un moins un des documents, lesquels comprennent des modifications du document correspondant, où une sixième sous-structure de chaine de blocs linéaire de la structure de chaine de blocs de documents personnelle du premier utilisateur forme une structure de modification (105) individuelle pour le document du document correspondant, où un premier bloc de la sixième sous-structure de chaine de blocs linéaire est combiné de manière bidirectionnelle avec le bloc de la structure principale, lequel est associé au document correspondant,

dans lequel un ou plusieurs des blocs de la structure de modification sont associés respectivement à un document de modification individuel parmi un ou plusieurs documents de modification, forment un bloc de départ d'une septième sous-structure de chaine de blocs linéaire comprise par une structure secondaire individuelle pour les documents de modification, laquelle est associée au document de modification correspondant, et comprennent un identificateur du document de modification correspondant,

dans lequel chacun des documents de modification comprend respectivement une multiplicité d'attributs, lesquels sont enregistrés distribués par le biais d'une multiplicité de blocs de la structure secondaire individuelle pour le document de modification associée au document de modification correspondant, et/ou

dans lequel un ou plusieurs groupes d'attributs complémentaires sont associés à au moins à un des documents, où un ou plusieurs blocs de la deuxième sous-structure de chaine de blocs linéaire de la structure secondaire individuelle pour le document du document correspondant sont associés respectivement aux groupes d'attributs complémentaires, forment un bloc de départ d'une huitième sous-structure de chaine de blocs linéaire de la structure secondaire individuelle pour le document correspondante, et comprennent un identificateur du groupe d'attributs complémentaires correspondants,

dans lequel respectivement un ou plusieurs attributs complémentaires pour le document correspondant sont associés aux groupes d'attributs complémentaires, lesquels sont enregistrés distribués par le biais d'un ou de plusieurs blocs de la huitième sous-structure de chaine de blocs linéaire.

**5.** Procédé selon l'une des revendications précédentes, dans lequel une modification sous la forme d'un attribut modifiée est associée à au moins un attribut d'un des documents,
dans lequel l'attribut modifié est enregistré dans un bloc supplémentaire de la structure secondaire individuelle pour un document associée au document correspondant.

**6.** Procédé selon l'une des revendications précédentes, dans lequel un droit exclusif pour l'ajout de blocs supplémentaires à la structure de chaine de blocs de documents personnelle du premier utilisateur est associé au premier utilisateur,
où le procédé comprend en particulier un ajout d'un document supplémentaire à la structure de chaine de blocs de documents personnelle du premier utilisateur, où l'ajout du document supplémentaire comprend :

la délivrance du document supplémentaire par une instance de délivrance (116) habilitée, où les attributs du document supplémentaire sont signés par l'instance de délivrance avec une clé cryptographique privée (272, 292, 312) associée à l'instance de délivrance,

l'accord du premier utilisateur pour l'ajout du document supplémentaire,

l'ajout du document supplémentaire sous la forme d'un bloc supplémentaire à la structure principale, où le bloc supplémentaire est associé au document supplémentaire, forme un bloc de départ d'une deuxième sous-structure de chaine de blocs linéaire supplémentaire comprise par une structure secondaire individuelle pour un document supplémentaire pour la structure de chaine de blocs, laquelle est associée au document supplémentaire, et comprend un identificateur du document supplémentaire,

où les attributs signés du document supplémentaire sont enregistrés distribués par le biais d'une multiplicité de blocs de la structure secondaire individuelle pour le document supplémentaire, et

où l'ajout comprend une combinaison bidirectionnelle du bloc supplémentaire avec un dernier bloc de la structure principale à la structure principale.

**7.** Procédé selon l'une des revendications précédentes, où le procédé comprend une modification d'un document de la structure de chaine de blocs de documents personnelle du premier utilisateur par l'ajout d'un document de modification, où l'ajout du document de modification comprend :

la délivrance du document de modification par une instance de délivrance habilitée, où les attributs du document de modification sont signés par l'instance de délivrance avec une clé cryptographique privée associée à l'instance de délivrance,
l'accord du premier utilisateur pour l'ajout du document de modification,
l'ajout du document de modification sous la forme d'un bloc supplémentaire soit au bloc du document à modifier de la structure principale, soit à une structure de modification, où le bloc supplémentaire est associé au document de modification, forme un bloc de départ d'une huitième sous-structure de chaine de blocs linéaire supplémentaire comprise par une structure secondaire individuelle pour un document de modification pour la structure de chaine de blocs, laquelle est associée au document de modification, et comprend un identificateur du document de modification,
où les attributs signés du document de modification sont enregistrés distribués par le biais d'une multiplicité de blocs de la structure secondaire individuelle pour le document supplémentaire,
où l'ajout du bloc supplémentaire à la structure principale comprend une combinaison bidirectionnelle du bloc supplémentaire avec le bloc du document à modifier de la structure principale, ou
où l'ajout du bloc supplémentaire à la structure de modification comprend une combinaison bidirectionnelle du bloc supplémentaire avec un dernier bloc de la structure de modification, et/ou
où le procédé comprend un apport complémentaire d'un document de la structure de chaine de blocs de documents personnelle du premier utilisateur par l'ajout d'un document complémentaire, où l'ajout du document complémentaire comprend :

> la délivrance du document complémentaire par une instance de délivrance habilitée, où les attributs du document complémentaire sont signés par l'instance de délivrance avec une clé cryptographique privée associée à l'instance de délivrance,
> l'accord du premier utilisateur pour l'ajout du document complémentaire,
> l'ajout du document complémentaire sous la forme d'un bloc supplémentaire soit au bloc du document à compléter de la structure principale, soit à une structure complémentaire, où le bloc supplémentaire est associé au document complémentaire , forme un bloc de départ d'une neuvième sous-structure de chaine de blocs linéaire supplémentaire comprise par une structure secondaire individuelle pour le document complémentaire pour la structure de chaine de blocs, laquelle est associée au document complémentaire, et comprend un identificateur du document complémentaire,
> où les attributs signés du document complémentaire sont enregistrés distribués par le biais d'une multiplicité de blocs de la structure secondaire individuelle pour le document complémentaire, et
> où l'ajout du bloc supplémentaire à la structure principale comprend une combinaison bidirectionnelle du bloc supplémentaire avec le bloc du document à compléter de la structure principale, ou
> où l'ajout du bloc supplémentaire à la structure complémentaire comprend une combinaison bidirectionnelle du bloc supplémentaire avec un dernier bloc de la structure complémentaire, et/ou
> où le procédé comprend un ajout complémentaire à un des documents d'un groupe d'attributs complémentaire, où l'ajout complémentaire comprend :
>
> > la délivrance du groupe d'attributs complémentaire par une instance de délivrance habilitée, où les attributs du groupe d'attributs complémentaire sont signés par l'instance de délivrance avec une clé cryptographique privée associée à l'instance de délivrance,
> > l'accord du premier utilisateur pour l'ajout du groupe d'attributs complémentaire,
> > l'ajout du groupe d'attributs complémentaire sous la forme d'un bloc supplémentaire de la deuxième sous-structure de chaine de blocs linéaire de la structure secondaire individuelle pour le document du document à compléter, où le bloc supplémentaire est associé au groupe d'attributs complémentaire, forme un bloc de départ d'une dixième sous-structure de chaine de blocs linéaire de la structure secondaire individuelle pour le document correspondante, et comprend un identificateur du groupe d'attributs complémentaire correspondant,
> > où les attributs signés du document de modification sont enregistrés distribués par le biais d'un ou de plusieurs blocs de la dixième sous-structure de chaine de blocs linéaire,
> > où l'ajout du bloc supplémentaire comprend une combinaison bidirectionnelle du bloc supplémentaire de la deuxième sous-structure de chaine de blocs linéaire de la structure secondaire individuelle pour le document du document complémentaire avec un dernier bloc de la deuxième sous-structure de chaine de blocs linéaire, et/ou
> > où le procédé comprend une modification d'un attribut d'un document de la structure de chaine de blocs de documents personnelle du premier utilisateur, où la modification comprend :
> >
> > > la délivrance d'un attribut modifié par une instance de délivrance habilitée, où l'attribut modifié est signé par l'instance de délivrance avec une clé cryptographique privée associée à l'instance de délivrance,
l'accord du premier utilisateur pour l'ajout de l'attribut,
l'ajout de l'attribut sous la forme d'un bloc supplémentaire de la structure secondaire individuelle pour le document associée au document correspondant, lequel comprend l'attribut modifié,
où l'ajout comprend une combinaison bidirectionnelle du bloc supplémentaire avec un bloc de la structure secondaire individuelle pour le document associée au document correspondant.

**8.** Procédé selon l'une des revendications précédentes, dans lequel la structure principale comprend un bloc de départ, lequel est associé à un document de départ, dont la délivrance est une condition pour la délivrance du nouveau document parmi la multiplicité de documents, auxquels sont associés les blocs suivants de la structure principale, et/ou

dans lequel la possibilité d'agrandir le structure de chaine de blocs de documents personnelle est terminée avec un agrandissement de la structure principale avec un bloc terminal, lequel est associé au document terminal dont la délivrance exclut une délivrance de nouveaux documents du premier utilisateur pour la structure de chaine de blocs de documents, et/ou
dans lequel les blocs de la structure de chaine de blocs de documents personnelle du premier utilisateur sont enregistrés distribués sur une multiplicité de banques de données séparées dans l'espace, et/ou
dans lequel une multiplicité de structures de chaines de blocs d'autorisation est mise en place, laquelle est respectivement associée à un des blocs de la structure principale, et/ou
dans lequel une multiplicité de structures de chaines de blocs d'autorisation est mise en place, laquelle est respectivement associée à un des blocs des structures secondaires, et/ou
dans lequel les blocs de la structure de chaine de blocs d'autorisation sont combinés de manière bidirectionnelle les uns au autres respectivement.

**9.** Procédé selon l'une des revendications précédentes, dans lequel le bloc de départ de la structure de chaine de blocs d'autorisation comprend un certificat d'accès (132), lequel accorde un droit d'accès, où les autres blocs de la structure de chaine de blocs d'autorisation comprennent respectivement un certificat d'utilisateur (134) du deuxième utilisateur, auquel le droit d'accès correspondant du certificat d'accès au bloc correspondant de la structure de chaine de blocs de documents personnelle du premier utilisateur est accordé,
dans lequel, en particulier, le certificat d'accès comprend un ou plusieurs parmi les types de certificats d'accès :

- un certificat d'accès en lecture, lequel permet à un utilisateur un accès en lecture pour le contenu d'un bloc ;
- un certificat d'accès à l'index, lequel permet à un utilisateur la connaissance de l'existence du bloc dans la structure de chaine de blocs de documents personnelle du premier utilisateur et un accès en lecture pour des métadonnées du bloc, où les métadonnées comprennent des valeurs de vérification des combinaisons bidirectionnelles du bloc correspondant avec des blocs voisins dans la structure de chaine de blocs de documents.

**10.** Procédé selon l'une des revendications précédentes, dans lequel des blocs successifs combinés les uns avec les autres de manière bidirectionnelle comprennent les deux respectivement une valeur de vérification, où la valeur de vérification d'un premier des deux blocs dépend au moins des données enregistrées dans le deuxième des deux blocs et où la valeur de vérification du deuxième des deux blocs dépend au moins des données enregistrées dans le premier des deux blocs,
où, en particulier, suite à une libération, des métadonnées (250) sont envoyées au deuxième utilisateur, lesquelles identifient un lieu d'enregistrement du bloc de la structure de chaine de blocs de documents personnelle du premier utilisateur sur la multiplicité des banques de données séparées dans l'espace,

**11.** Procédé selon l'une des revendications précédentes, où le procédé comprend en outre un accord pour un accès pour un nouveau deuxième utilisateur pour un des blocs de la structure de chaine de blocs de documents personnelle du premier utilisateur, où l'accord ▧ un ajout d'un bloc supplémentaire à une structure de chaine de blocs d'autorisation, laquelle est associée au bloc correspondant de la structure de chaine de blocs de documents personnelle du premier utilisateur, où le bloc supplémentaire comprend un identificateur d'un nouveau deuxième utilisateur et est combiné de manière bidirectionnelle avec un dernier bloc de la structure de chaine de blocs d'autorisation,
où, en particulier, une liste de deuxièmes utilisateurs possibles est établie et l'identificateur du nouveau deuxième utilisateur correspondant est choisi dans la liste.

**12.** Procédé selon l'une des revendications précédentes, dans lequel une multiplicité de structures de chaine de blocs personnelles non linéaires du premier utilisateur est préparée, lesquelles comprennent respectivement une structure principale et sont combinées les unes aux autres par le biais d'une ou de plusieurs combinaisons bidirectionnelles entre des blocs de la structure principale.

**13.** Système de mémoire de données (122) électronique permettant l'exécution d'un procédé cryptographique pour l'exécution d'un procédé cryptographique pour la commande d'accès sélective à des attributs d'une multiplicité de documents (102), lesquels sont associés à un premier utilisateur (120), où un ou plusieurs des attributs sont enregistrés de manière sécurisée contre les manipulations dans une mémoire (266, 286, 306) du système de mémoire de données électronique, où le système de mémoire de données comprend une interface de communication (274, 294, 314) pour la communication par le biais d'un réseau (320), où la mémoire du système de mémoire de données comprend un bloc (268, 288, 308) d'une structure de chaine de blocs de documents (100) personnelle du premier utilisateur, dans laquelle au moins un des attributs est enregistré,

dans lequel la structure de chaine de blocs de documents personnelle est associée au premier utilisateur et comprend une multiplicité de sous-structures de chaines de blocs (104, 108, 109, 110, 600) linéaires, où chacune des sous-structures de chaines de blocs linéaire comprend respectivement une multiplicité de blocs combinés les uns aux autres de manière bidirectionnelle,
dans lequel une première sous-structure de chaine de blocs linéaire de la structure de chaines de blocs de documents forme la structure principale (104) de la structure de chaine de blocs de documents,
dans lequel des blocs de la structure principale sont respectivement associés à un document individuel de la multiplicité des documents, forment un bloc de départ d'une deuxième sous-structure de chaine de blocs linéaire (108) comprise par une structure secondaire (106) individuelle pour un document de la structure de chaine de blocs de documents, laquelle est associée au document correspondant, et comprennent un identificateur du document correspondant,
dans lequel chacun des documents comprend respectivement une multiplicité d'attributs, lesquels sont enregistrés distribués par le biais d'une multiplicité de blocs de la structure secondaire individuelle pour le document associée au document correspondant,
où le système de mémoire de données comprend en outre un processeur (262, 282, 302) et en outre des instructions (264, 284, 304) lisibles par machine sont enregistrées dans la mémoire, où une exécution des instructions lisibles par machine par le processeur fait en sorte que le système de mémoire de données effectue ce qui suit :

la réception d'une demande d'accès d'un deuxième utilisateur (128) à un bloc avec l'au moins un attribut au moyen de l'interface de communication par le biais du réseau d'un système de télécommunications (220) demandeur du deuxième utilisateur,
la réception d'une confirmation d'une vérification réussie du droit d'accès du deuxième utilisateur pour l'accès au bloc avec l'au moins un attribut, où la confirmation exige que le deuxième utilisateur soit compris en tant qu'utilisateur habilité à un accès par une structure de chaine de blocs d'autorisation (130) à des accès au bloc correspondant,
suite à la confirmation, l'envoi du bloc avec l'au moins un attribut au moyen de l'interface de communication par le biais du réseau au système de télécommunications demandeur du deuxième utilisateur.

**14.** Système de gestion d'autorisation (124) électronique permettant l'exécution d'un procédé cryptographique pour la commande d'accès sélective à des attributs d'une multiplicité de documents (102), lesquels sont associés à un premier utilisateur (120), où les attributs sont enregistrés de manière sécurisée contre les manipulations dans une ou plusieurs mémoires (266, 286, 306) d'un ou de plusieurs systèmes de mémoire de données électroniques (122), où le système de gestion d'autorisation comprend une interface de communication (258) pour la communication par le biais d'un réseau (320), où le système de gestion d'autorisation comprend une mémoire (246), dans laquelle est enregistrée une structure de chaine de blocs d'autorisation (130) permettant la commande des droits d'accès à un bloc d'une structure de chaine de blocs de documents (100) personnelle non linéaire du premier utilisateur avec l'au moins un attribut, où la structure de chaine de blocs d'autorisation comprend un bloc de départ ainsi qu'un ou plusieurs autres blocs, où les autres blocs accordent respectivement à un autre utilisateur un droit d'accès à l'un des blocs de la structure de chaine de blocs de documents,

dans lequel la structure de chaine de blocs de documents personnelle non linéaire est associée au premier utilisateur et comprend une multiplicité de sous-structures de chaine de blocs linéaires (104, 108, 109, 110, 600), où chacune des sous-structures de chaine de blocs linéaire comprend respectivement une multiplicité de blocs combinés les uns aux autres de manière bidirectionnelle,
dans lequel une première sous-structure de chaine de blocs linéaire de la structure de chaines de blocs de documents forme une structure principale (104) de la structure de chaine de blocs de documents,
dans lequel des blocs de la structure principale sont respectivement associés à un document individuel de la multiplicité des documents, forment un bloc de départ d'une deuxième sous-structure de chaine de blocs linéaire (108) comprise par une structure secondaire (106) individuelle pour le document de la structure de chaine de blocs de documents, laquelle est associée au document correspondant, et comprennent un identificateur du document correspondant,
dans lequel chacun des documents comprend respectivement une multiplicité d'attributs, lesquels sont enregistrés distribués par le biais d'une multiplicité de blocs de la structure secondaire individuelle pour le document associée au document correspondant,
où le système de gestion d'autorisation comprend en outre un processeur (262) et en outre des instructions (244) lisibles par machine sont enregistrées dans la mémoire, où une exécution des instructions lisibles par machine par le processeur fait en sorte que le système de gestion d'autorisation effectue ce qui suit :

la réception d'une demande d'autorisation d'accès pour un droit d'accès d'un deuxième utilisateur au bloc avec l'au moins un attribut au moyen de l'interface de communication par le biais du réseau d'un système de télécommunications (220),
la vérification que le deuxième utilisateur est compris en tant qu'utilisateur habilité à un accès par une structure de chaine de blocs d'autorisation pour des accès au bloc correspondant,
suite à une vérification réussie, la confirmation de la vérification réussie du droit d'accès du deuxième utilisateur pour l'accès au bloc avec l'au moins un attribut, et l'envoi de la confirmation au moyen de l'interface de communication par le biais du réseau au système de télécommunications demandeur.

**15.** Système de traitement de données (330) électronique permettant l'exécution d'un procédé cryptographique pour la commande d'accès sélective à des attributs d'une multiplicité de documents (102), lesquels sont associés à un premier utilisateur (120), où les attributs sont enregistrés de manière sécurisée contre les manipulations dans une ou plusieurs mémoires (266, 286, 306), où le système de traitement de données électronique comprend un ou plusieurs systèmes de mémoire de données (122) électroniques selon la revendication 13 et un système de gestion d'autorisation (124) électronique selon la revendication 14.

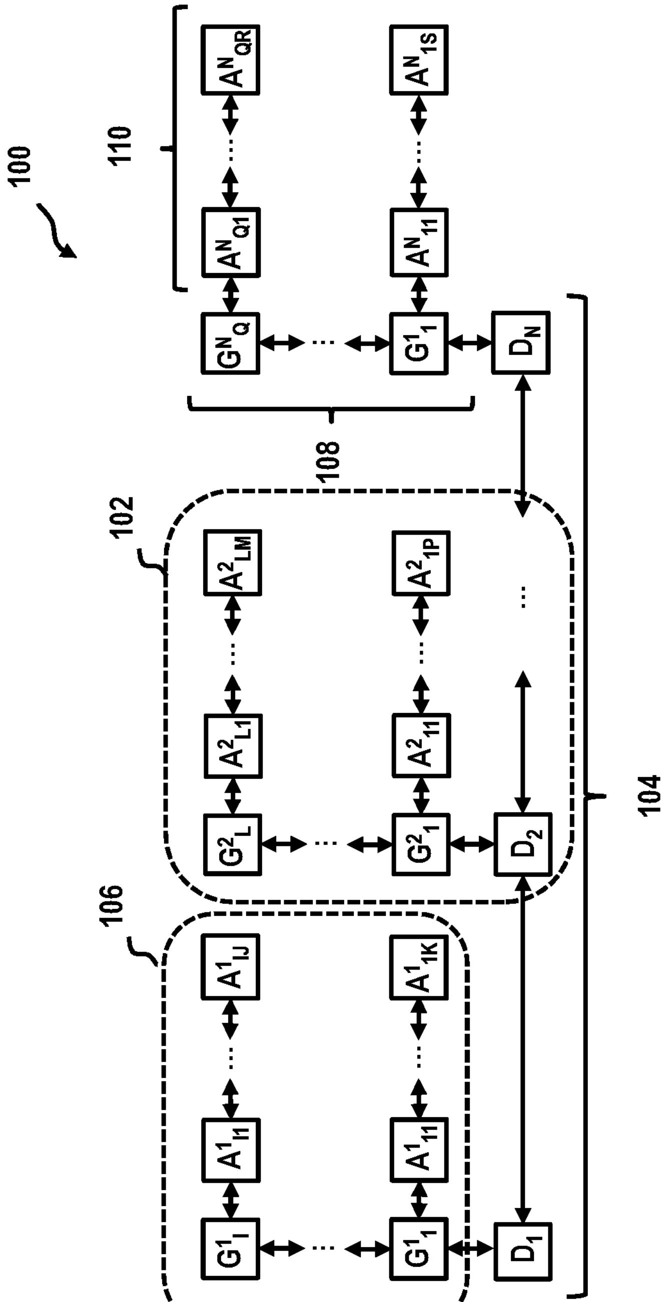


Fig. 1

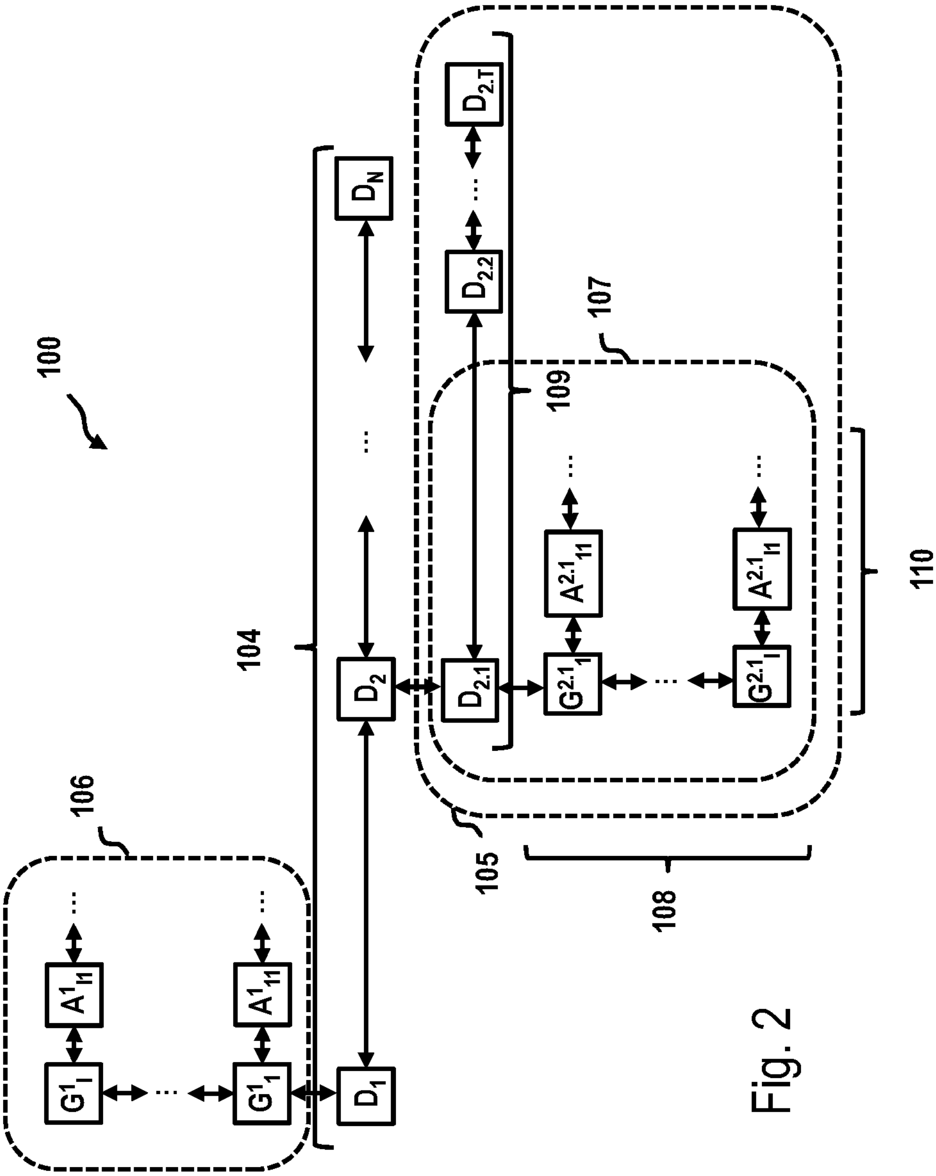


Fig. 2

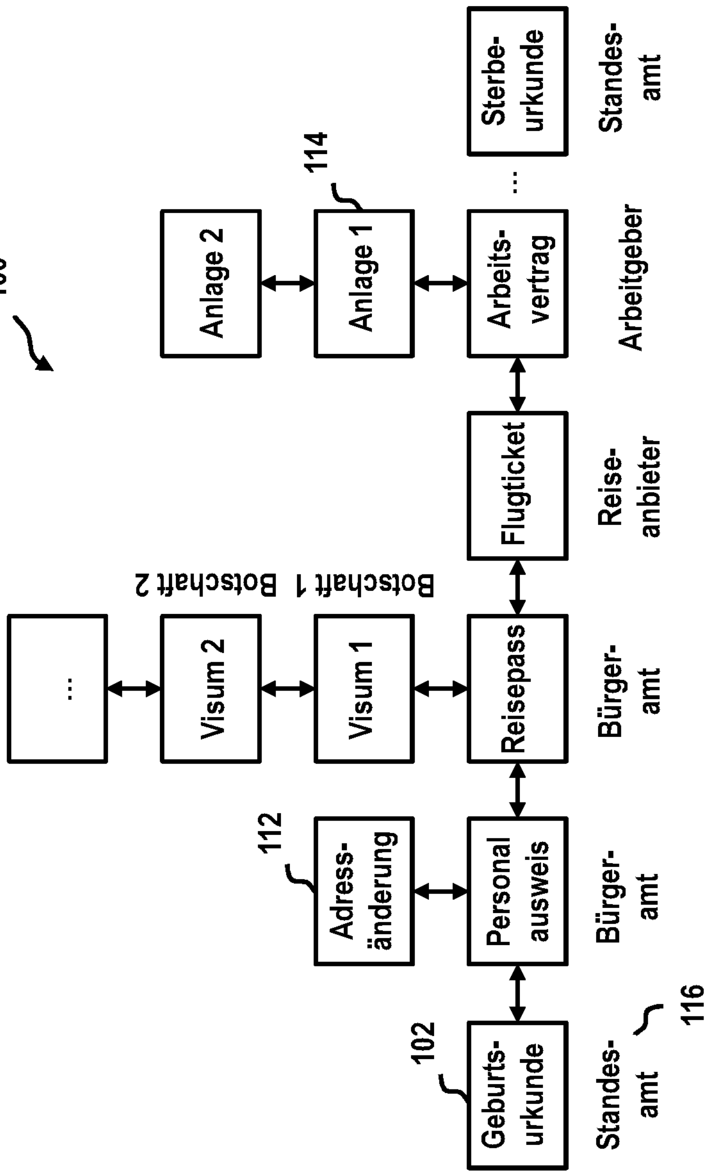
100
Geburts-urkunde
102
Standes-amt
116
Personal ausweis
Bürger-amt
Adress-änderung
112
Reisepass
Bürger-amt
Visum 1
Visum 2
...
Botschaft 1
Botschaft 2
Flugticket
Reise-anbieter
Arbeits-vertrag
Arbeitgeber
Anlage 1
114
Anlage 2
...
Sterbe-urkunde
Standes-amt

Fig. 3

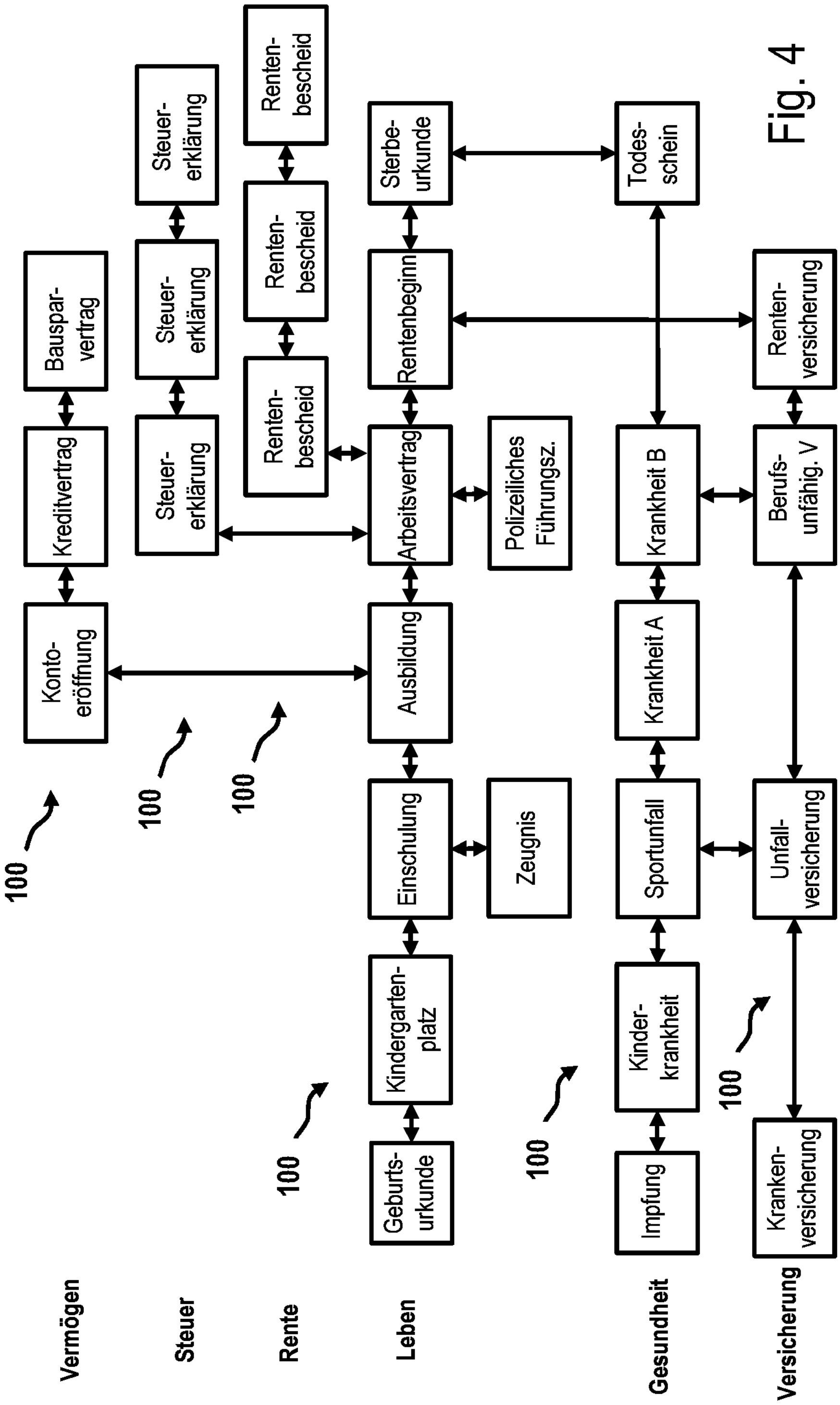
Vermögen
Steuer
Rente
Leben
Gesundheit
Versicherung
100
Konto-eröffnung
Kreditvertrag
Bauspar-vertrag
Steuer-erklärung
Steuer-erklärung
Steuer-erklärung
Renten-bescheid
Renten-bescheid
Renten-bescheid
Geburts-urkunde
Kindergarten-platz
Einschulung
Ausbildung
Arbeitsvertrag
Rentenbeginn
Sterbe-urkunde
Zeugnis
Polizeiliches Führungsz.
Impfung
Kinder-krankheit
Sportunfall
Krankheit A
Krankheit B
Todes-schein
Kranken-versicherung
Unfall-versicherung
Berufs-unfähig. V
Renten-versicherung

Fig. 4

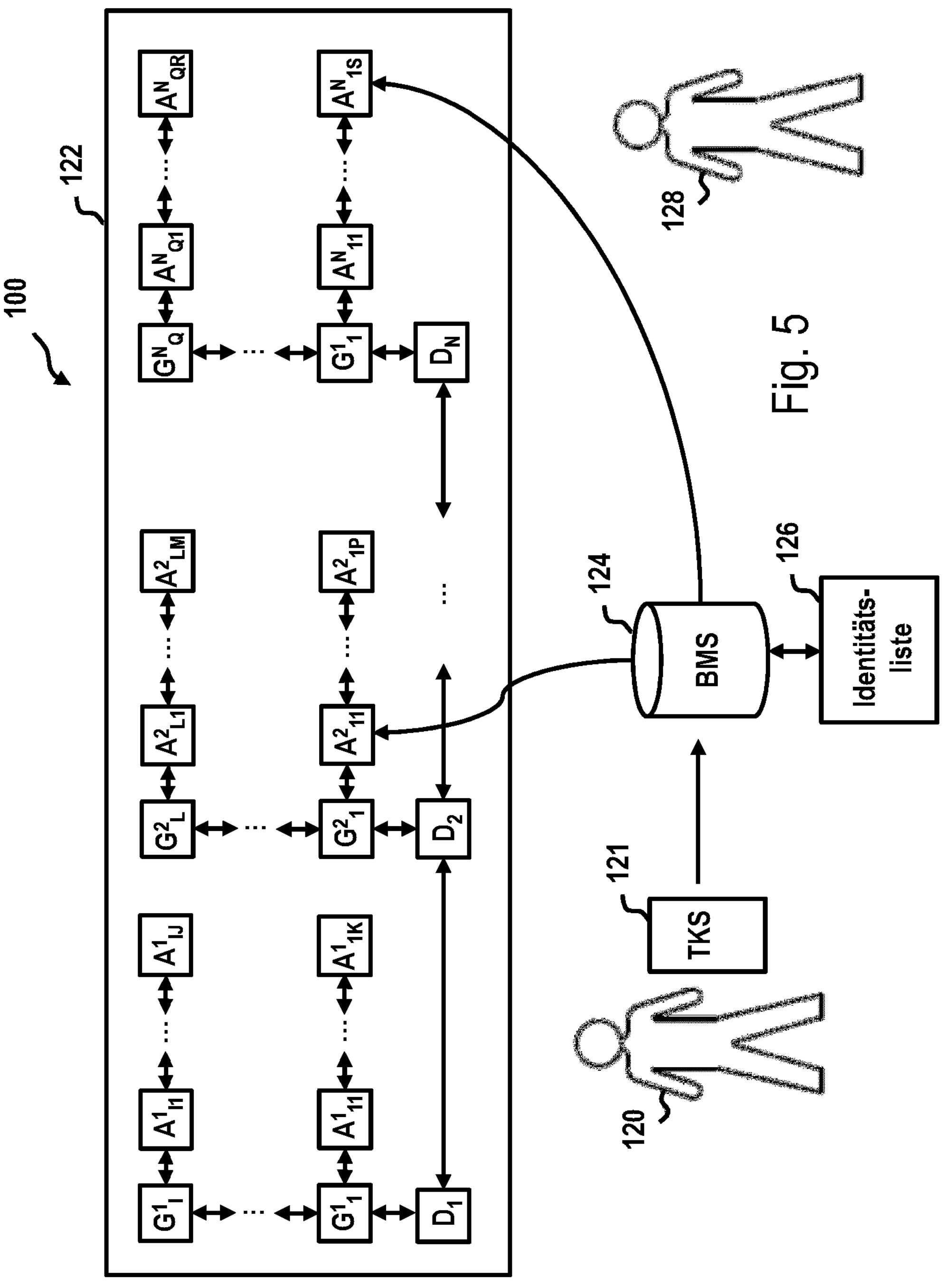
100
122
G1I
A1I1
A1IJ
G11
A111
A11K
D1
G2L
A2L1
A2LM
G21
A211
A21P
D2
GNQ
ANQ1
ANQR
G11
AN11
AN1S
DN
124
BMS
126
Identitäts-
liste
121
TKS
120
128

Fig. 5

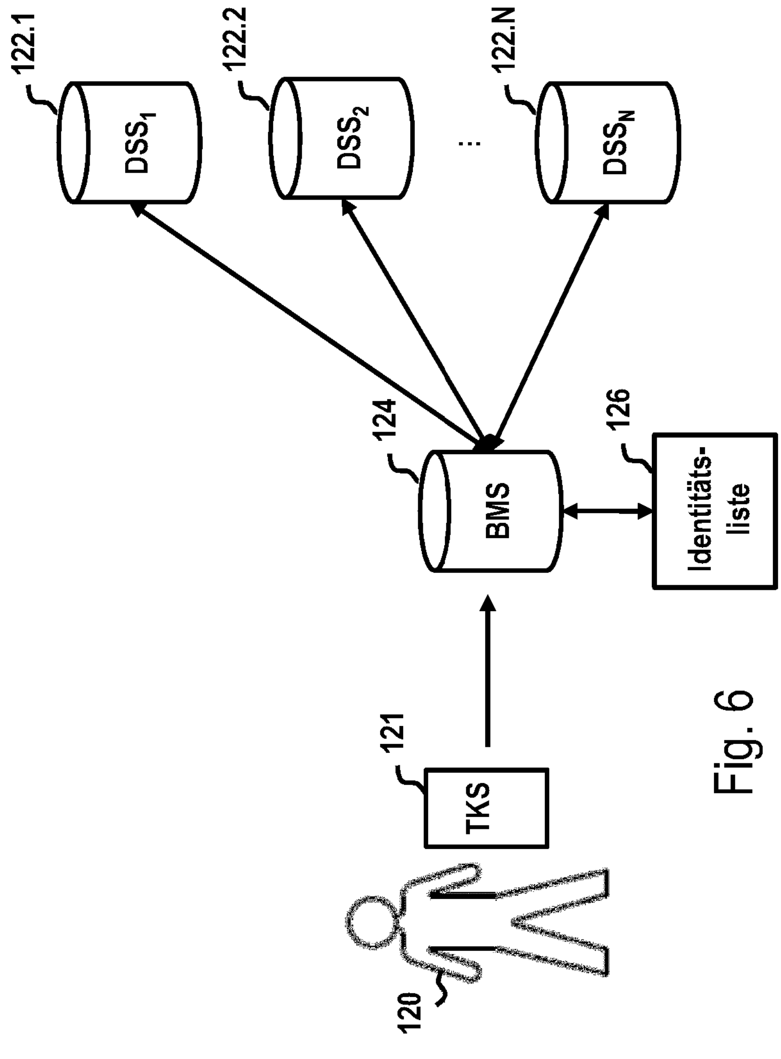

122.1
122.2
122.N
DSS1
DSS2
...
DSSN
124
BMS
126
Identitäts-liste
121
TKS
120


Fig. 6

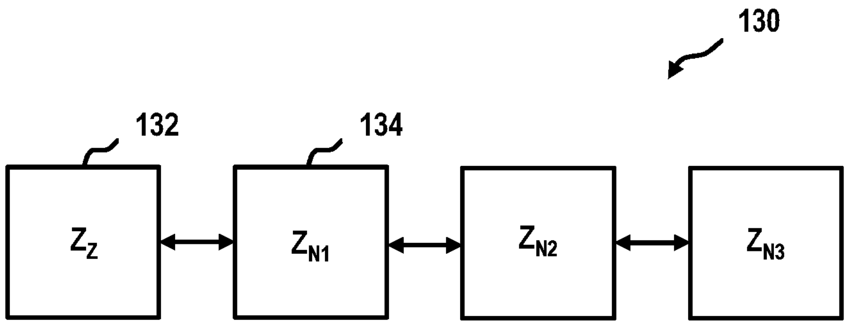
130
132
134
Z
Z
Z
N1
Z
N2
Z
N3

Fig. 7

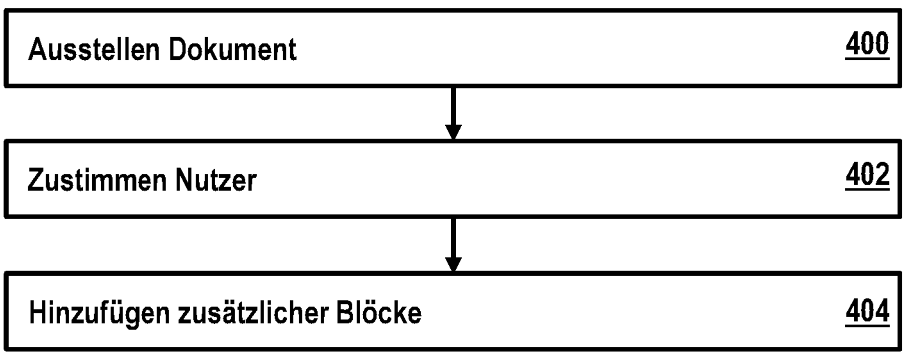
Ausstellen Dokument
400
Zustimmen Nutzer
402
Hinzufügen zusätzlicher Blöcke
404

Fig. 8

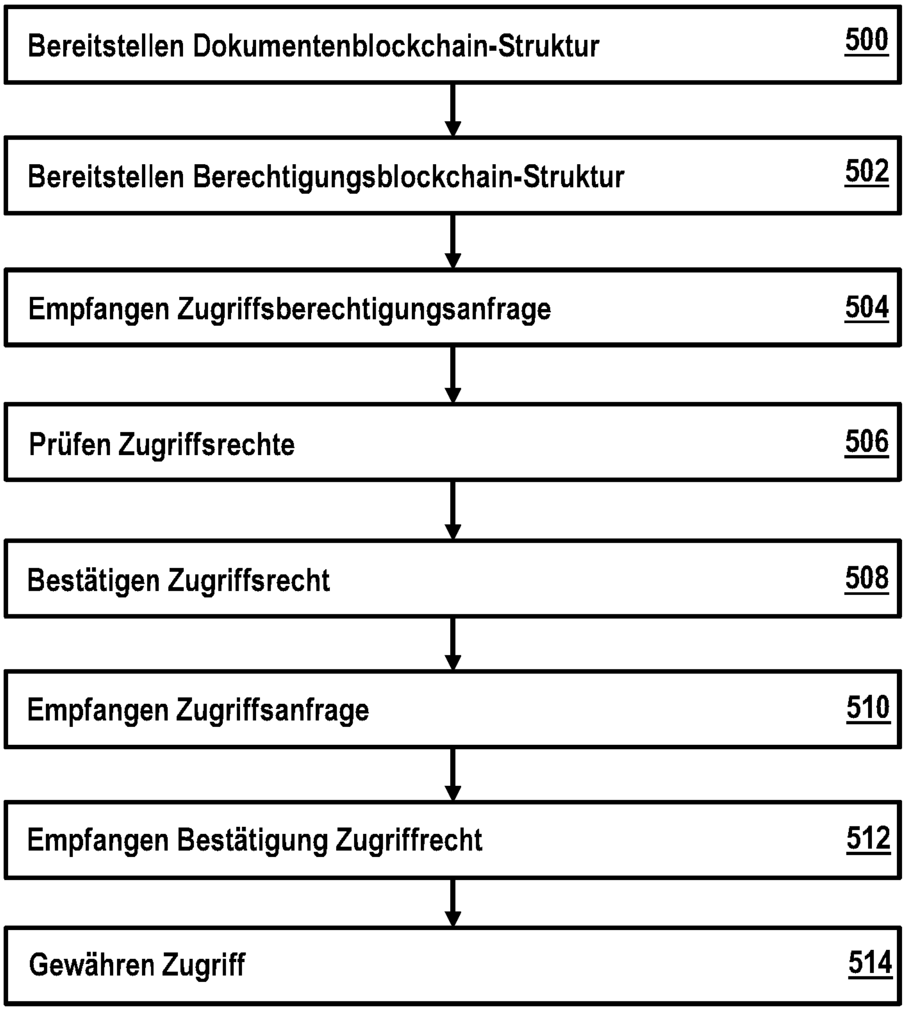
Bereitstellen Dokumentenblockchain-Struktur
500
Bereitstellen Berechtigungsblockchain-Struktur
502
Empfangen Zugriffsberechtigungsanfrage
504
Prüfen Zugriffsrechte
506
Bestätigen Zugriffsrecht
508
Empfangen Zugriffsanfrage
510
Empfangen Bestätigung Zugriffrecht
512
Gewähren Zugriff
514

Fig. 9

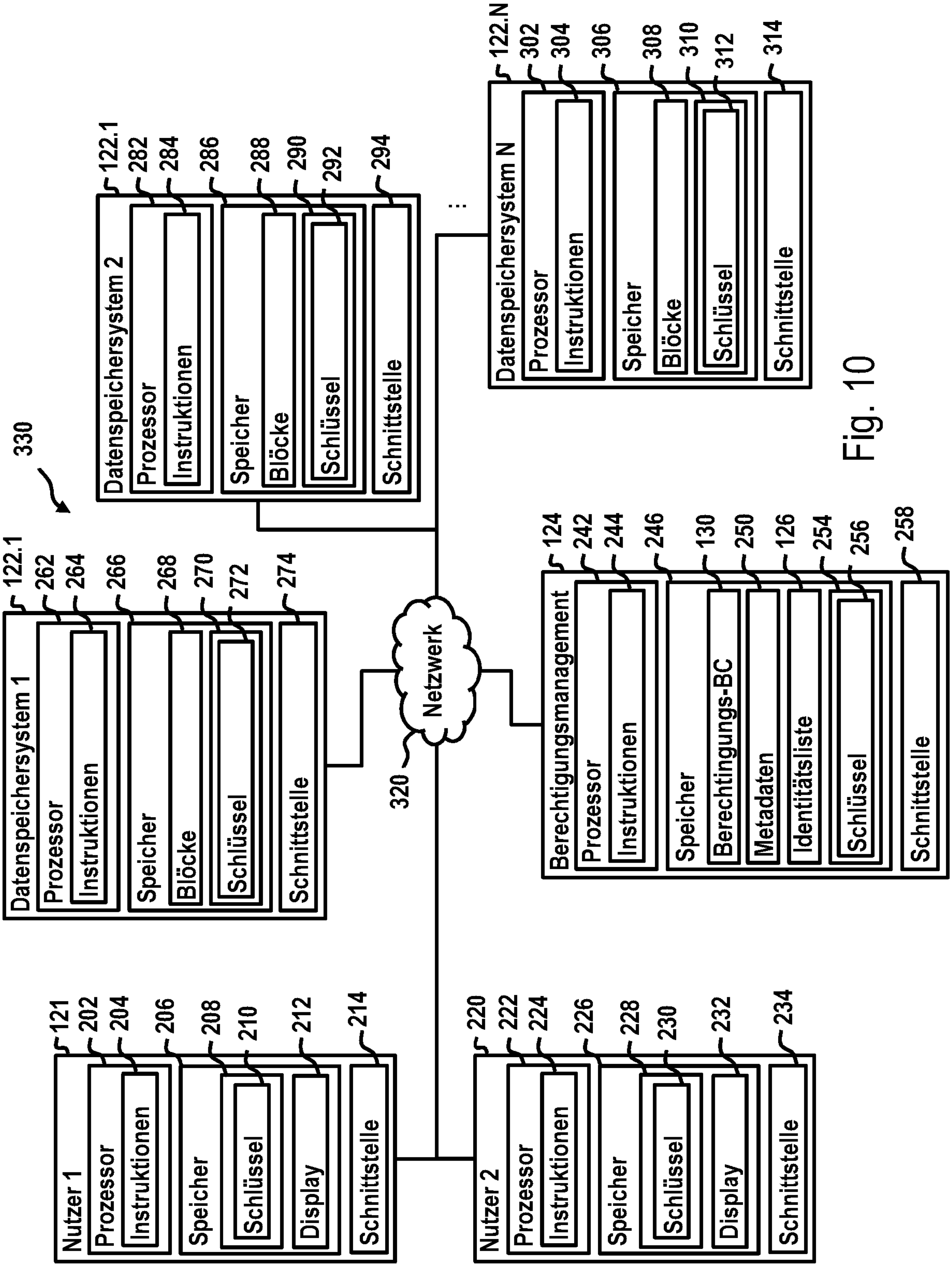
330
Datenspeichersystem 1
Prozessor
Instruktionen
Speicher
Blöcke
Schlüssel
Schnittstelle
122.1
262
264
266
268
270
272
274
Datenspeichersystem 2
Prozessor
Instruktionen
Speicher
Blöcke
Schlüssel
Schnittstelle
122.1
282
284
286
288
290
292
294
Datenspeichersystem N
Prozessor
Instruktionen
Speicher
Blöcke
Schlüssel
Schnittstelle
122.N
302
304
306
308
310
312
314
...
Netzwerk
320
Berechtigungsmanagement
Prozessor
Instruktionen
Speicher
Berechtingungs-BC
Metadaten
Identitätsliste
Schlüssel
Schnittstelle
124
242
244
246
130
250
126
254
256
258
Nutzer 1
Prozessor
Instruktionen
Speicher
Schlüssel
Display
Schnittstelle
121
202
204
206
208
210
212
214
Nutzer 2
Prozessor
Instruktionen
Speicher
Schlüssel
Display
Schnittstelle
220
222
224
226
228
230
232
234

Fig. 10

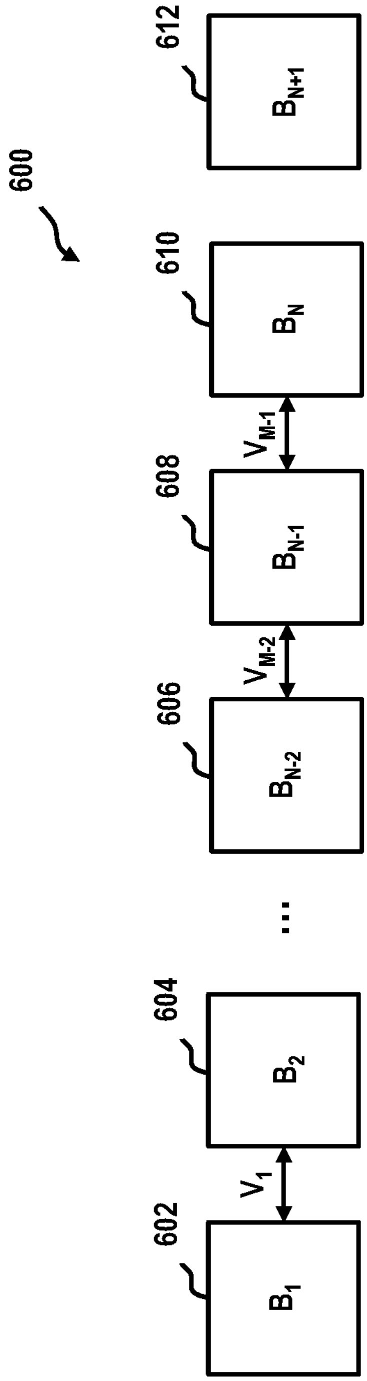


Fig. 11

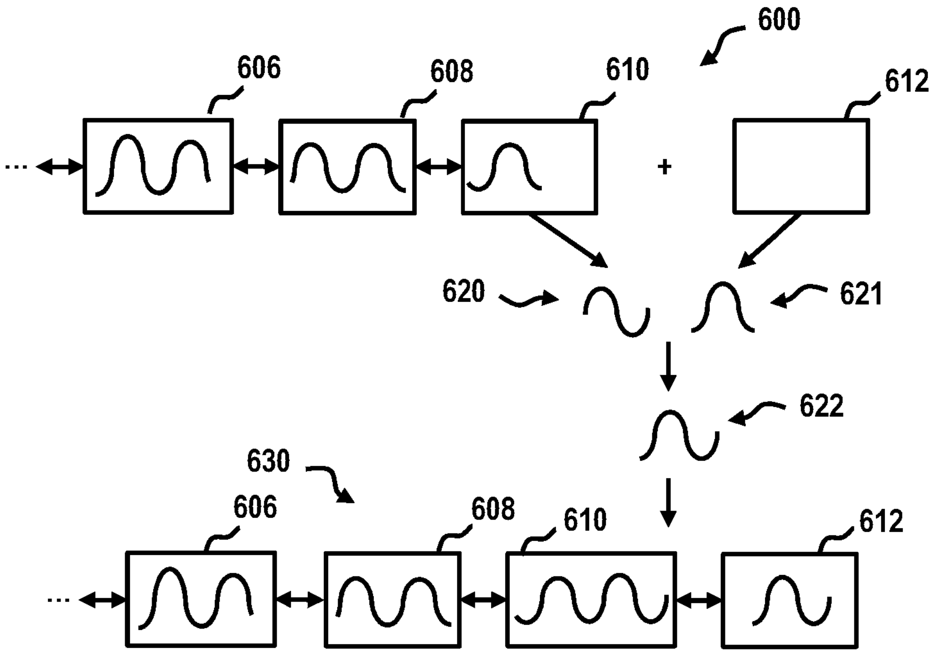


Fig. 12

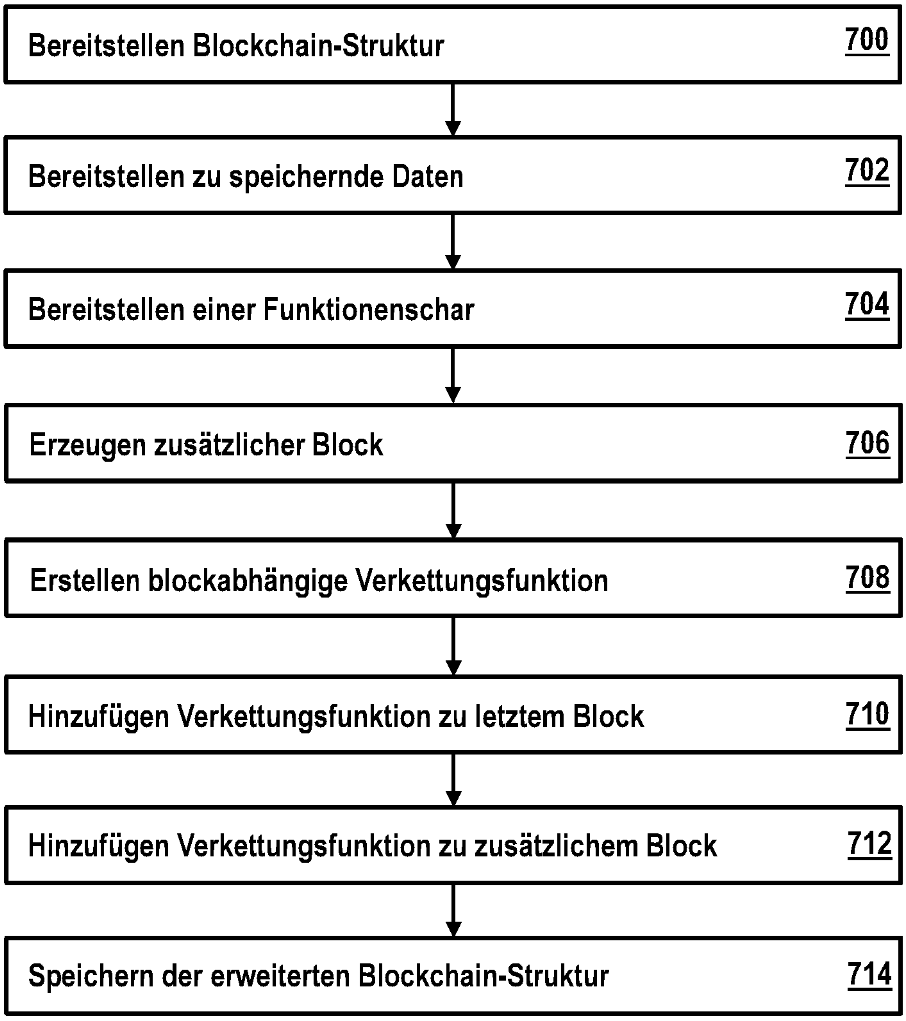
Bereitstellen Blockchain-Struktur 700
Bereitstellen zu speichernde Daten 702
Bereitstellen einer Funktionenschar 704
Erzeugen zusätzlicher Block 706
Erstellen blockabhängige Verkettungsfunktion 708
Hinzufügen Verkettungsfunktion zu letztem Block 710
Hinzufügen Verkettungsfunktion zu zusätzlichem Block 712
Speichern der erweiterten Blockchain-Struktur 714

Fig. 13

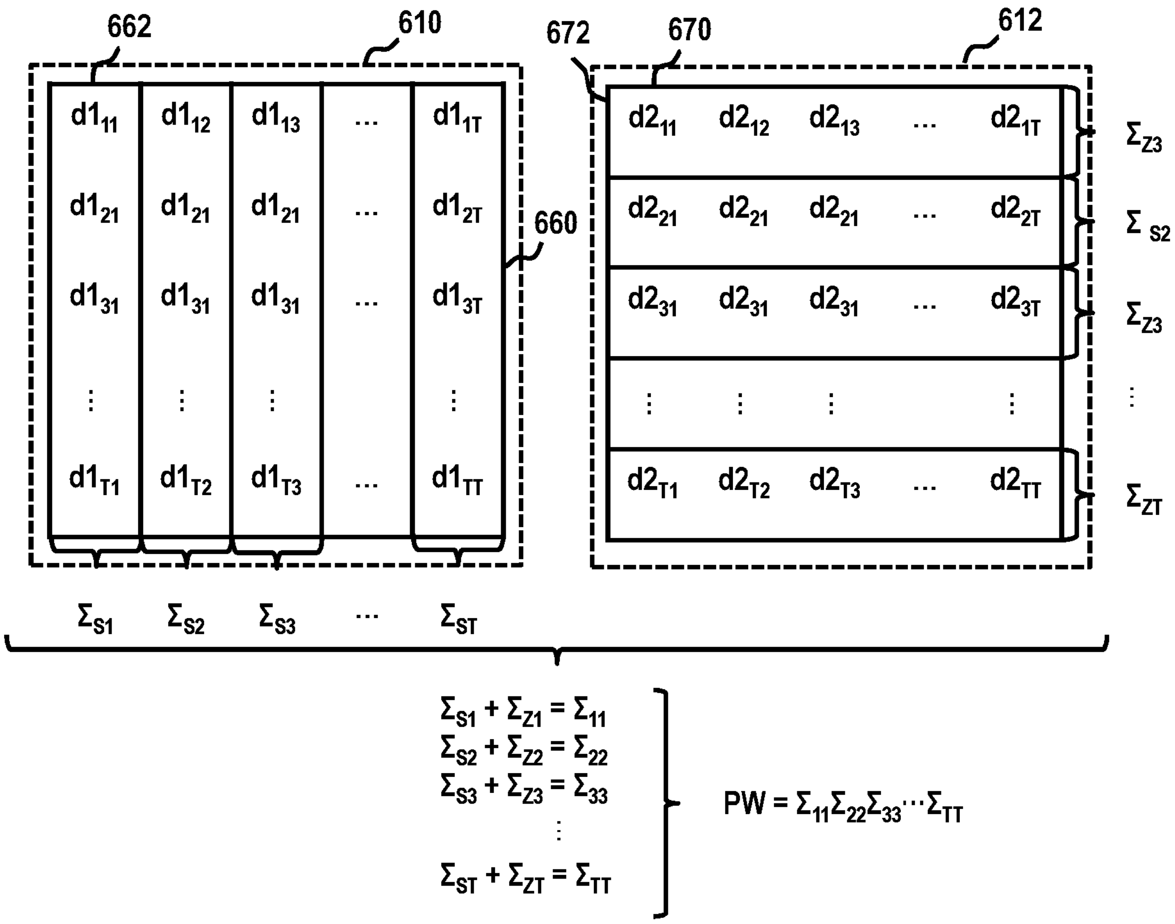
662
610
672
670
612
660
$d1_{11}$ $d1_{12}$ $d1_{13}$ ... $d1_{1T}$
$d1_{21}$ $d1_{21}$ $d1_{21}$ ... $d1_{2T}$
$d1_{31}$ $d1_{31}$ $d1_{31}$ ... $d1_{3T}$
$d1_{T1}$ $d1_{T2}$ $d1_{T3}$ ... $d1_{TT}$
$d2_{11}$ $d2_{12}$ $d2_{13}$ ... $d2_{1T}$
$d2_{21}$ $d2_{21}$ $d2_{21}$ ... $d2_{2T}$
$d2_{31}$ $d2_{31}$ $d2_{31}$ ... $d2_{3T}$
$d2_{T1}$ $d2_{T2}$ $d2_{T3}$ ... $d2_{TT}$
$\Sigma_{Z3}$
$\Sigma_{S2}$
$\Sigma_{Z3}$
$\Sigma_{ZT}$
$\Sigma_{S1}$ $\Sigma_{S2}$ $\Sigma_{S3}$ ... $\Sigma_{ST}$
$\Sigma_{S1} + \Sigma_{Z1} = \Sigma_{11}$
$\Sigma_{S2} + \Sigma_{Z2} = \Sigma_{22}$
$\Sigma_{S3} + \Sigma_{Z3} = \Sigma_{33}$
$\Sigma_{ST} + \Sigma_{ZT} = \Sigma_{TT}$
$PW = \Sigma_{11}\Sigma_{22}\Sigma_{33}\cdots\Sigma_{TT}$

Fig. 14

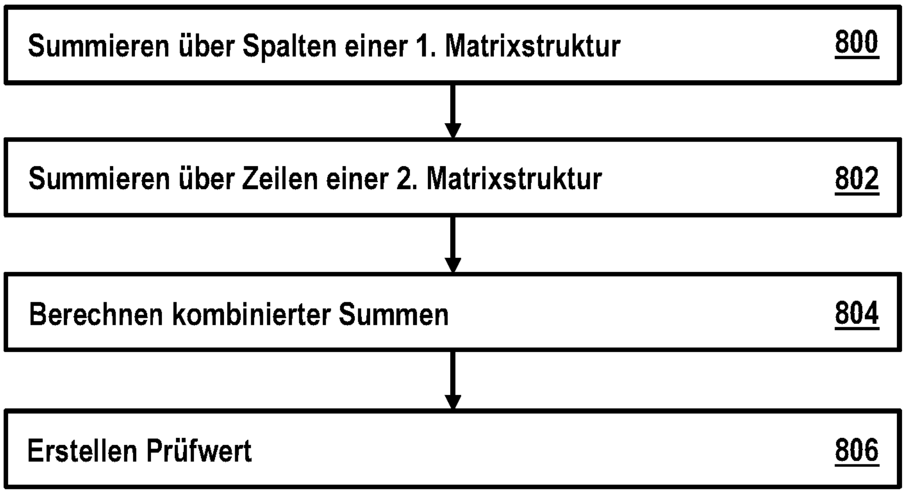
Summieren über Spalten einer 1. Matrixstruktur
800
Summieren über Zeilen einer 2. Matrixstruktur
802
Berechnen kombinierter Summen
804
Erstellen Prüfwert
806

Fig. 15

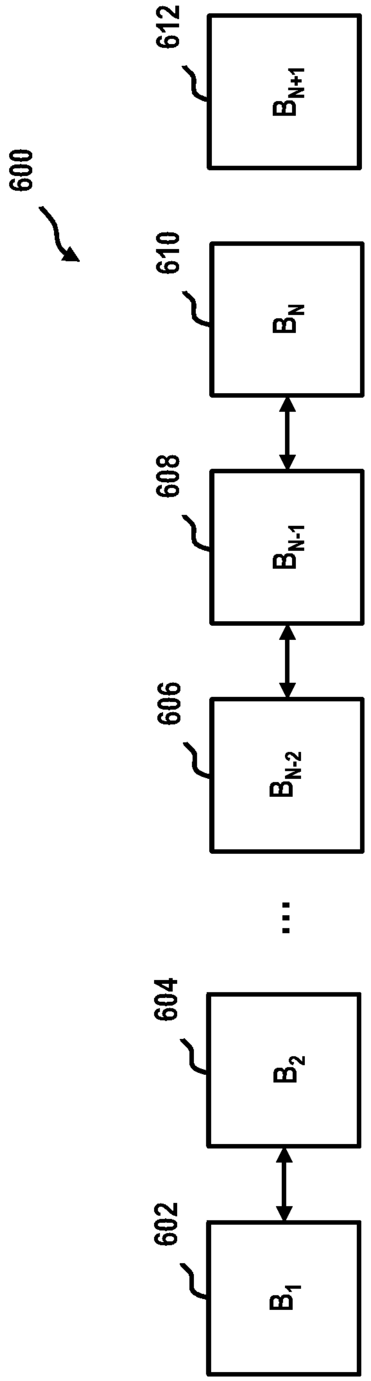


Fig. 16

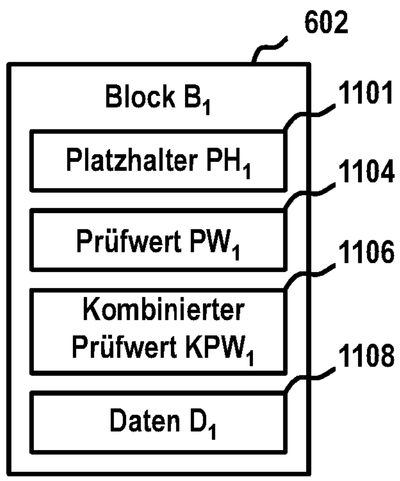


Fig. 17A

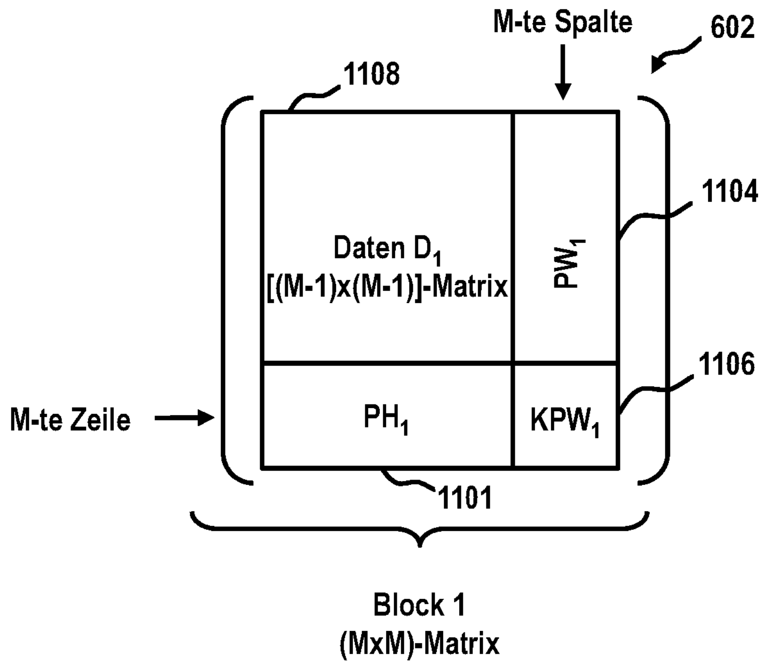


Fig. 17B

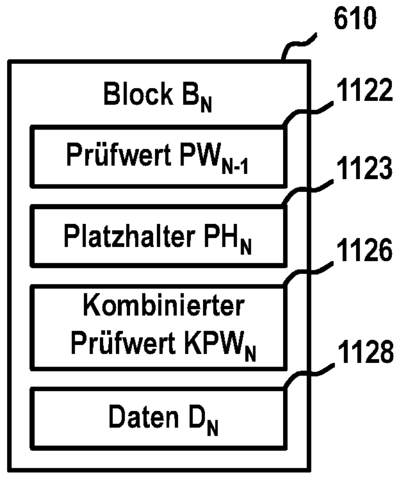


Fig. 18A

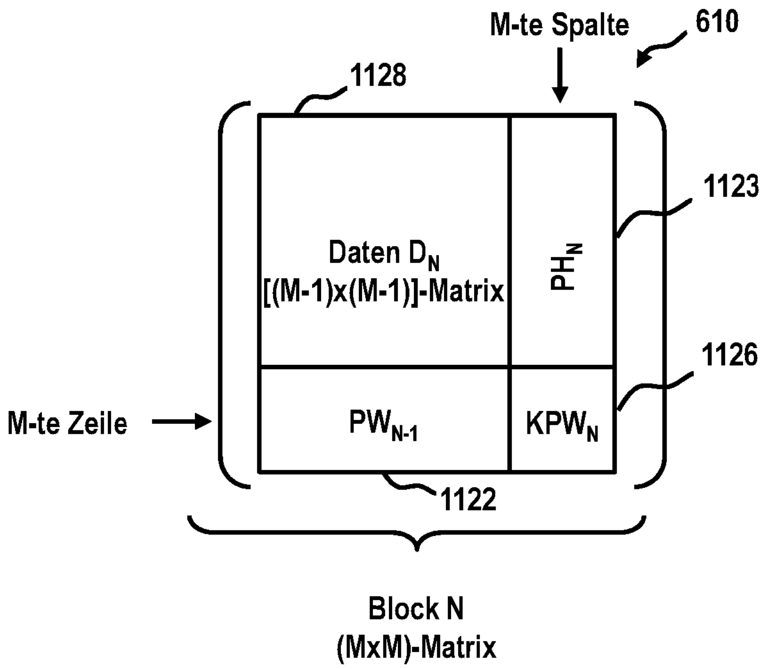


Fig. 18B

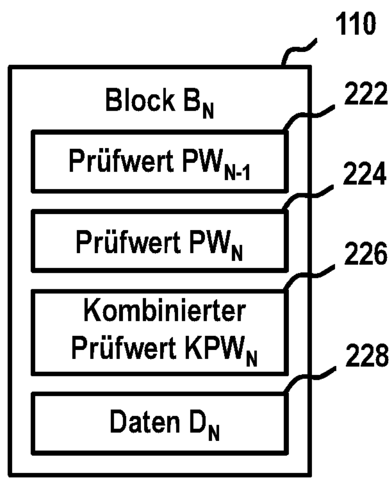


Fig. 19A

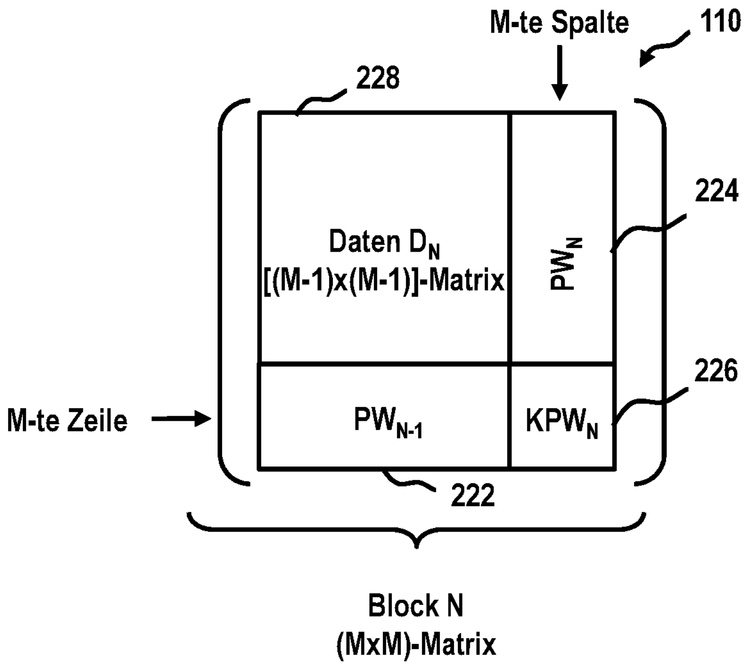


Fig. 19B

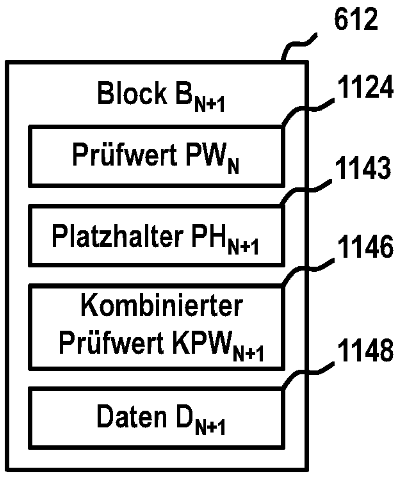


Fig. 20A

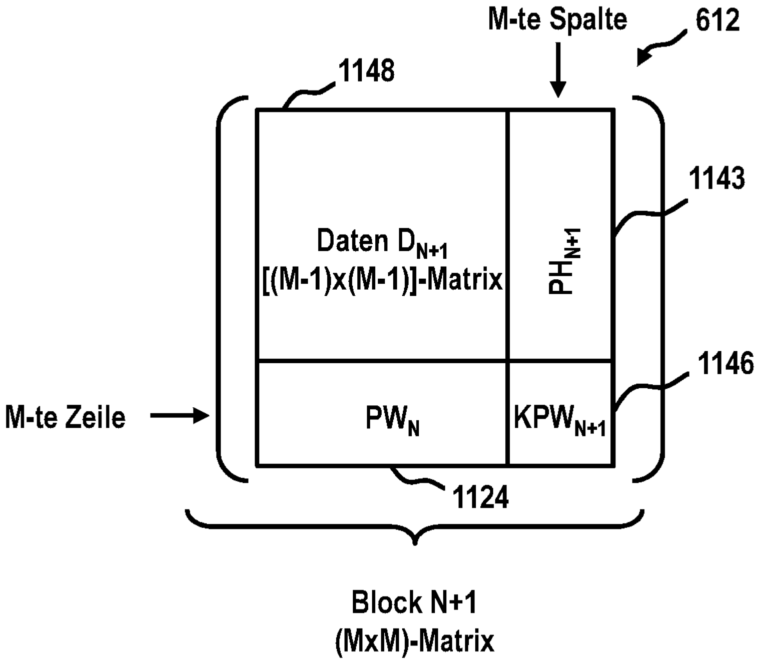


Fig. 20B

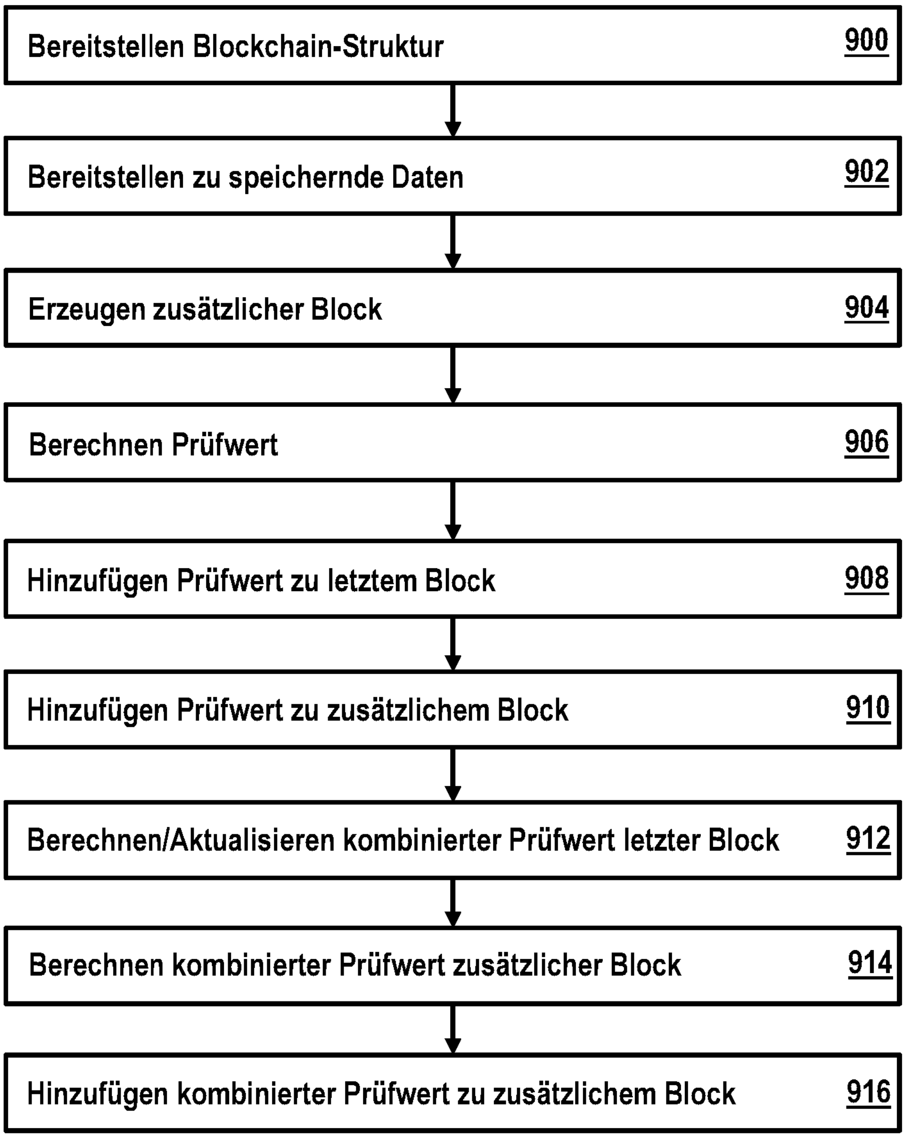
Bereitstellen Blockchain-Struktur
900
Bereitstellen zu speichernde Daten
902
Erzeugen zusätzlicher Block
904
Berechnen Prüfwert
906
Hinzufügen Prüfwert zu letztem Block
908
Hinzufügen Prüfwert zu zusätzlichem Block
910
Berechnen/Aktualisieren kombinierter Prüfwert letzter Block
912
Berechnen kombinierter Prüfwert zusätzlicher Block
914
Hinzufügen kombinierter Prüfwert zu zusätzlichem Block
916

Fig. 21

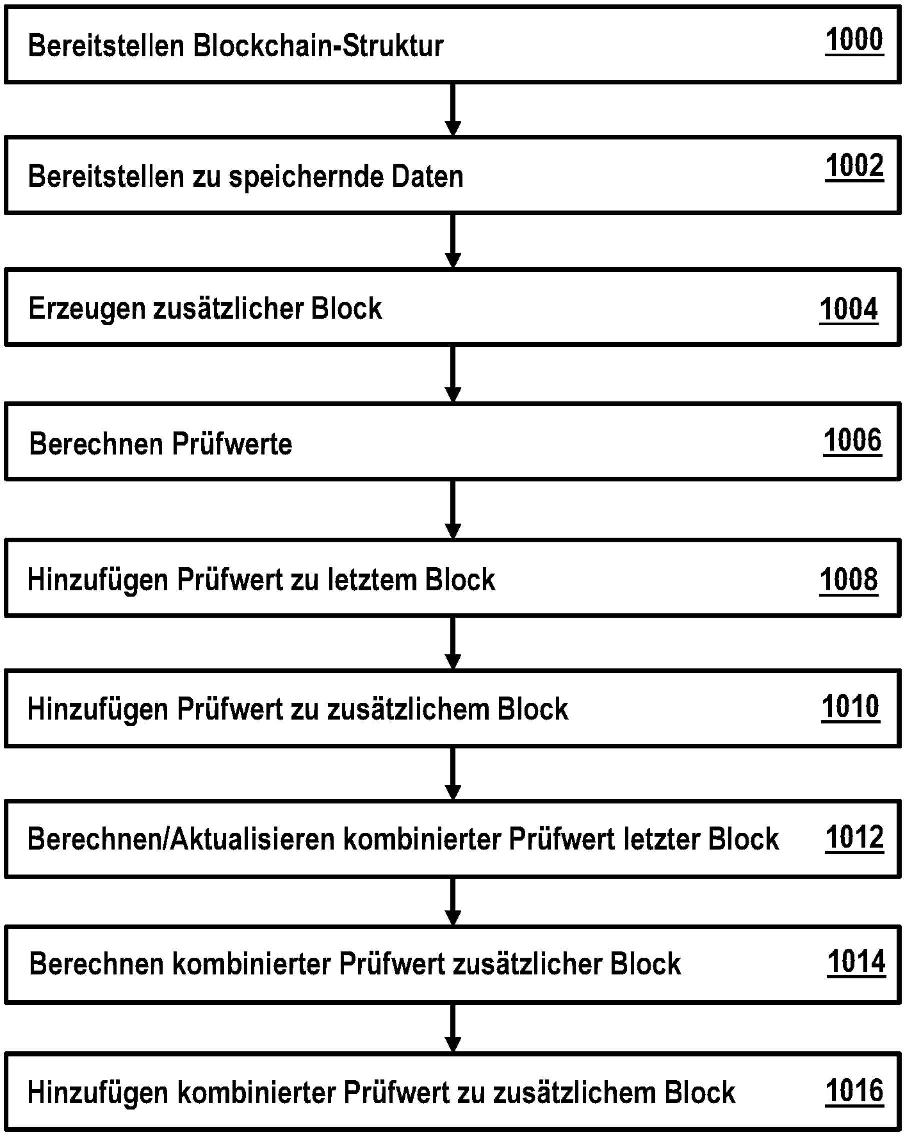
Bereitstellen Blockchain-Struktur 1000
Bereitstellen zu speichernde Daten 1002
Erzeugen zusätzlicher Block 1004
Berechnen Prüfwerte 1006
Hinzufügen Prüfwert zu letztem Block 1008
Hinzufügen Prüfwert zu zusätzlichem Block 1010
Berechnen/Aktualisieren kombinierter Prüfwert letzter Block 1012
Berechnen kombinierter Prüfwert zusätzlicher Block 1014
Hinzufügen kombinierter Prüfwert zu zusätzlichem Block 1016

Fig. 22

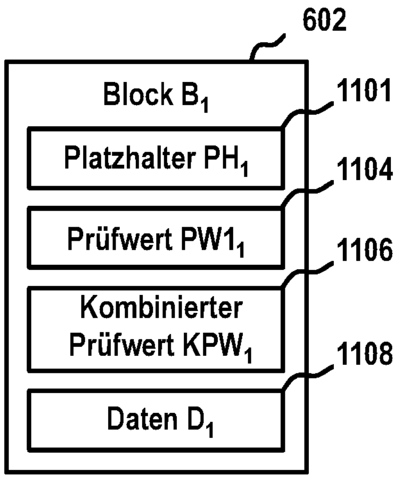


Fig. 23A

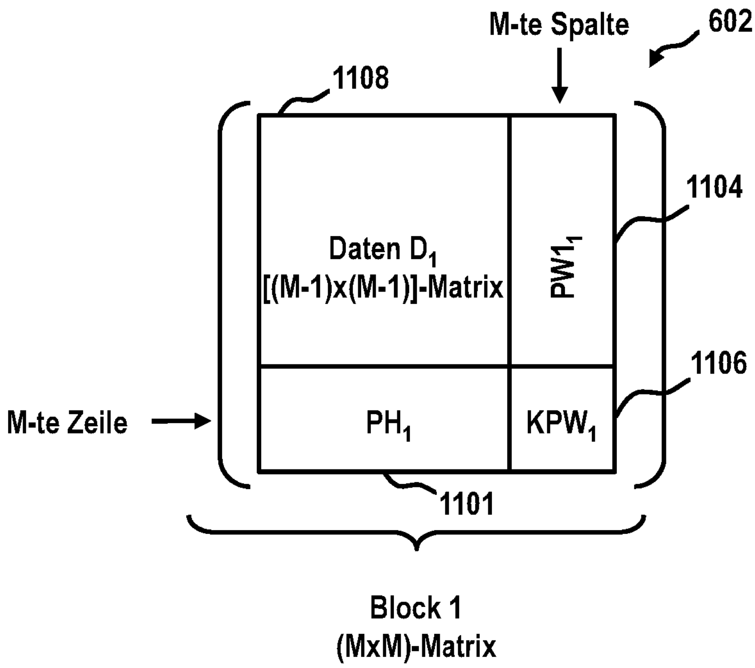


Fig. 23B

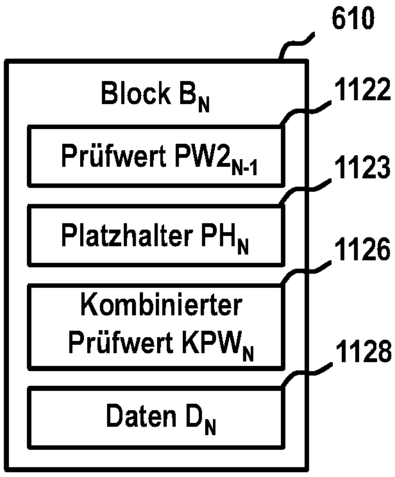


Fig. 24A

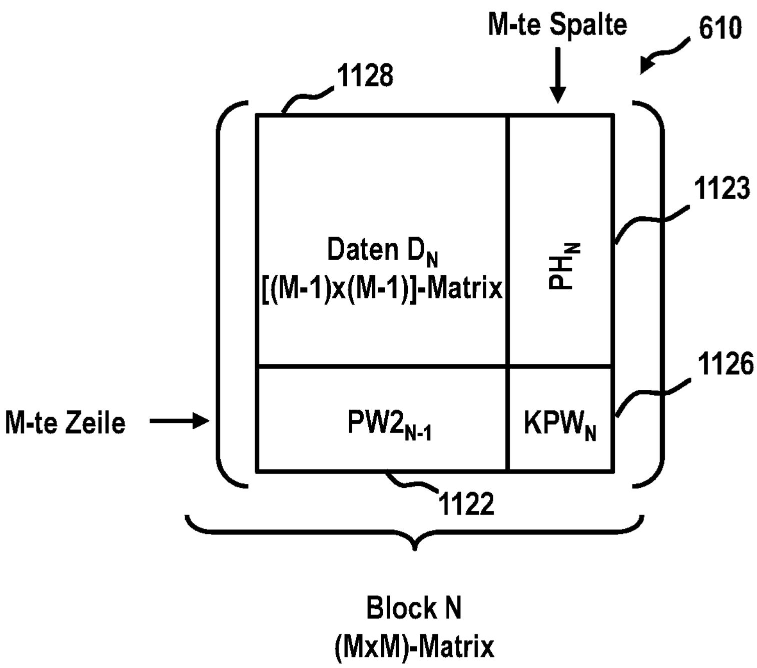


Fig. 24B

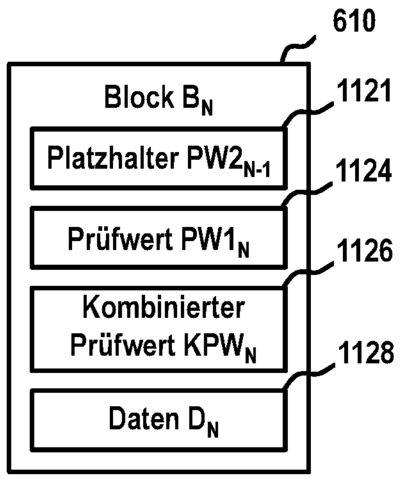


Fig. 25A

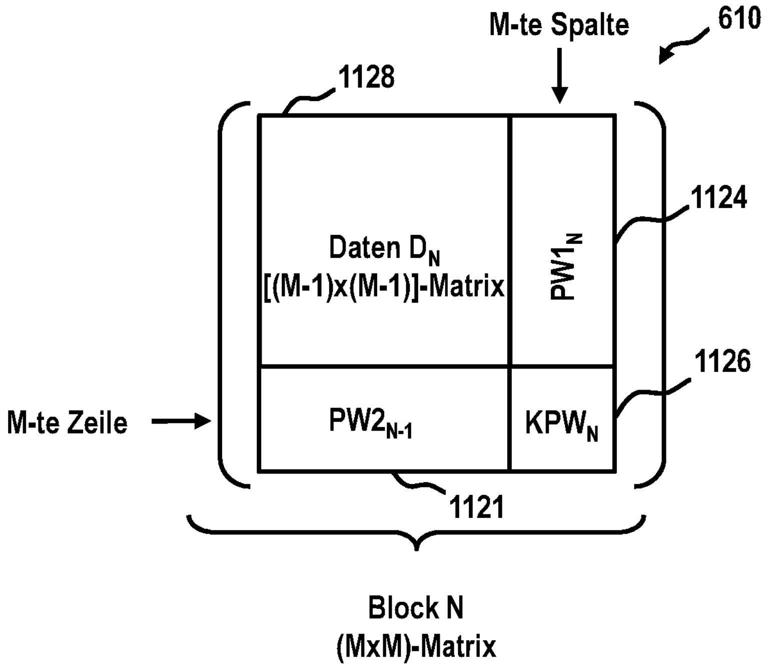


Fig. 25B

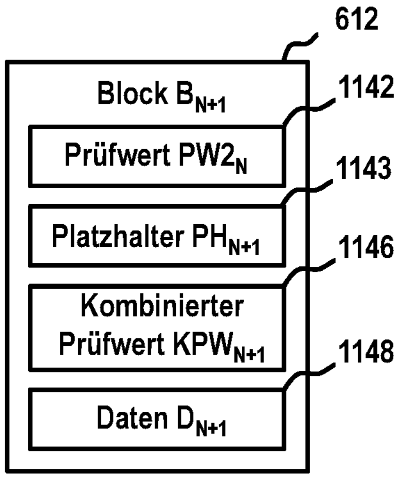


Fig. 26A

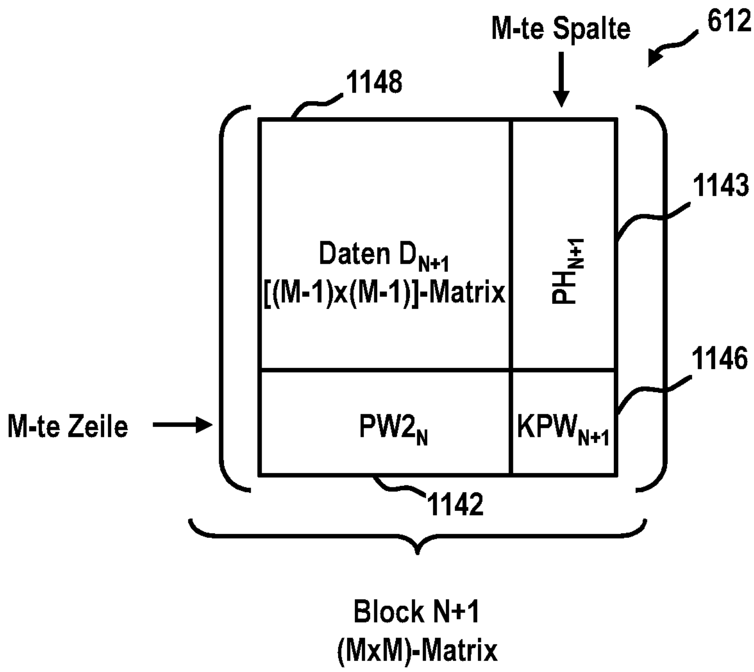


Fig. 26B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2017149537 A1
- DE 102008040416 A1
- CN 107231351 A